# EUROPEAN PATENT APPLICATION

(11) **EP 4 765 914 A1**
(43) Date of publication of application: **24.06.2026**
(21) Application number: 25829390.1
(22) Date of filing: 03.04.2025
(51) Int. Cl.: H04W 12/06

(54) **ACCOUNT LOGIN METHOD AND RELATED DEVICE**

(30) Priority: 20.06.2024 CN 202410799669
(71) Applicant: HUAWEI TECHNOLOGIES CO., LTD., Shenzhen 518129 (CN)
(72) Inventor: WEI, Jingde, Shenzhen, Guangdong 518129 (CN); GUO, Jianqi, Shenzhen, Guangdong 518129 (CN); LI, Chao, Shenzhen, Guangdong 518129 (CN); HE, Mingtian, Shenzhen, Guangdong 518129 (CN); LI, Jianeng, Shenzhen, Guangdong 518129 (CN)
(74) Representative: Pfenning, Meinig & Partner mbB
(86) International application number: PCT/CN2025/087098
(87) International publication number: WO 2025/260905

(57) **Abstract**

An account login method and a related device are provided, to implement password-free login of an account, simplify user operation steps needed in a password-free login process, and improve convenience. For example, a first device displays a code scanning interface in response to approaching of a second device, where the second device does not log in to a first account; the first device scans, by using the code scanning interface, a first graphic displayed by the second device, to establish a near field communication connection to the second device; and the first device sends first data to the second device through the near field communication connection, so that the second device logs in to the first account based on the first data, where the first data includes a first login credential, the first login credential is an identity credential issued by a server corresponding to the first account to the first device, and the first login credential includes a token token.

## Description

### CROSS-REFERENCE TO RELATED APPLICATIONS

This application claims priority to Chinese Patent Application No. 202410799669.5, filed with the China National Intellectual Property Administration on June 20, 2024 and entitled "ACCOUNT LOGIN METHOD AND RELATED DEVICE", which is incorporated herein by reference in its entirety.

### TECHNICAL FIELD

This application relates to the field of terminal technologies, and in particular, to an account login method and a related device.

### BACKGROUND

To protect privacy, an account and a login password corresponding to the account may be set for each of an operating system, an application, a file, and the like of an electronic device. After logging in to the account by using the password, a user can view information related to the account. However, in this manner, the user needs to memorize the account and the password, and a requirement on the user is high. In addition, when there are a large quantity of accounts, memorization is difficult, affecting use experience on the electronic device.

### SUMMARY

Embodiments of this application provide an account login method and a related device, to implement password-free login, simplify user operation steps needed in a password-free login process, and improve convenience.

According to a first aspect, an account login method is provided. The method may be applied to a communication system. The communication system includes a first device and a second device, and an operating system of the first device currently logs in to a first account. For example, the second device displays a first interface, where the first interface is an interface for account login. The first device displays a code scanning interface in response to detecting that the second device approaches. The second device displays a first graphic in response to detecting that the first device approaches, where the first graphic is used to establish near field communication. The first device scans the first graphic by using the code scanning interface, to establish a near field communication connection to the second device. The first device sends first data to the second device through the near field communication connection, where the first data includes a first login credential of the first device. The second device logs in to the first account based on the first login credential.

In embodiments of this application, if the second device displays the first interface, when the second device approaches the first device, the two devices may automatically launch a corresponding interface. For example, the first device launches the code scanning interface, and the second device launches the first graphic. In this process, a user does not need to separately perform complex operations on the first device and the second device to open the code scanning interface and the first graphic, thereby simplifying user operation steps and improving convenience. In addition, when the second device displays the first interface, the corresponding interface may be automatically launched when the two devices approach each other. This can avoid false triggering to some extent. For example, when the second device displays an interface other than the first interface, no interface is launched when the two devices approach each other. In addition, after the first device establishes the near field communication connection to the second device, the first device may send the first login credential of the first device to the second device through the near field communication connection, so that the second device logs in to the first account by using the first login credential. In this process, the first device does not transfer account information and password information of the first account to the second device, and therefore password leakage is not caused. In addition, the first login credential has time validity. In this way, after the first login credential is stolen, the first login credential cannot be used as long as a validity period expires, thereby avoiding continuity of data leakage to some extent.

In a possible design, the first interface includes any one of the following: the first interface is an interface for account login in a setting application of the second device; the first interface is an interface of the second device in an OOBE process; or the first interface is an interface used to migrate data from another device.

In embodiments of this application, when the second device displays the first interface, a corresponding interface may be automatically launched when the two devices approach each other. This can avoid false triggering to some extent. In addition, the first interface may be interfaces in a plurality of scenarios. For example, the first interface is an interface for account login in the setting application of the second device, an interface of the second device in the OOBE process, or an interface used to migrate data from another device. Therefore, in an account login scenario, an OOBE scenario, or a data migration scenario, a corresponding interface may be automatically launched when the two devices approach each other. In addition, after the two devices launch the interface, a near field communication connection is established by scanning a code, and then a requirement for account login, OOBE, or data migration is implemented based on the near field communication connection, thereby implementing convenient account login, OOBE, or data migration, and improving user experience.

In a possible design, the first device is currently in an offline state.

In embodiments of this application, when the first device is in the offline state, the first device can assist the second device in logging in to the first account. This breaks a limitation that a new device (that is, the second device) can be assisted in logging in to an account only when an old device (that is, the first device) connects to a network in the conventional technology.

In a possible design, before the first device displays the code scanning interface in response to detecting that the second device approaches, the method further includes: The first device displays a lock screen interface, a black screen, a home screen, a leftmost screen, or an application interface.

In embodiments of this application, when the second device displays the first interface, a corresponding interface may be automatically launched when the two devices approach each other. In this process, an interface of the first device is not limited, and a user does not need to open a specific interface on the first device, thereby reducing user operations.

In a possible design, detecting that the second device approaches includes: detecting that a distance between the first device and the second device is less than a first distance, and/or receiving a request signal that is broadcast by the second device, where the request signal is a short-range communication signal; and detecting that the first device approaches includes: detecting that the distance between the first device and the second device is less than a second distance, and/or receiving a consent signal returned by the first device.

In embodiments of this application, that an interface is launched when the two devices approach each other may be that an interface is launched when it is detected that the two devices are close to each other, or an interface is launched when a short-range communication signal from a peer device is received. In conclusion, in this manner, a user does not need to separately perform complex operations on the first device and the second device to open the code scanning interface and the first graphic, thereby simplifying user operation steps and improving convenience.

In a possible design, that the first device displays the code scanning interface in response to detecting that the second device approaches includes: The first device displays prompt information in response to detecting that the second device approaches, where the prompt information is used to prompt whether to allow the second device to log in to the first account; and the first device displays the code scanning interface when receiving a consent operation.

In embodiments of this application, when detecting that the second device approaches, the first device may first output the prompt information, and then launch the code scanning interface after obtaining consent of a user. This avoids interruption of an ongoing service of the user that is caused by directly launching the code scanning interface.

In a possible design, the method further includes: The first device sends a consent instruction to the second device, where the consent instruction indicates that the second device is allowed to log in to the first account. That the second device displays the first graphic in response to detecting that the first device approaches includes: The second device displays the first graphic when receiving the consent instruction.

In embodiments of this application, after a user of the first device gives consent, the first device sends the consent instruction to the second device, and the second device launches the first graphic. This avoids that the second device directly launches the first graphic before the user of the first device gives consent, thereby avoiding affecting user experience.

In a possible design, the first login credential is a token token.

In embodiments of this application, the first device may send the first login credential (token) of the first device to the second device through the near field communication connection, so that the second device logs in to the first account by using the first login credential. The token has time validity. In this way, even if the token is stolen, the token cannot be used as long as a validity period expires, thereby avoiding continuity of data leakage to some extent.

In a possible design, the first data does not include a login password of the first account, and/or the first data is encrypted by using a first key, where the first key is a key agreed on by the first device and a server corresponding to the first account.

In embodiments of this application, the first device may send the first login credential (token) of the first device to the second device through the near field communication connection, so that the second device logs in to the first account by using the first login credential. In this process, the first device does not transfer account information and password information of the first account to the second device, and therefore password leakage is not caused. In addition, the first data is encrypted. This further ensures security of the first login credential.

In a possible design, that the first device displays the code scanning interface in response to detecting that the second device approaches includes: The first device displays N accounts of the first device in response to detecting that the second device approaches, where N is a positive integer; and the first device displays the code scanning interface when receiving an operation used to select the first account.

In embodiments of this application, the first device may display a plurality of accounts, and the user of the first device may select one account, so that the second device logs in to the account, and user experience is relatively good.

In a possible design, that the second device logs in to the first account based on the first login credential includes: The second device sends a login request to a server corresponding to the first account, where the login request is used to request to log in to the first account, and the login request includes the first login credential; and the second device receives a second login credential sent by the server.

In embodiments of this application, the second device logs in to the first account by using the first login credential of the first device. For the server of the first account, the second device logs in to the first account as a proxy of the first device. In this process, the first device does not transfer account information and password information of the first account to the second device, thereby avoiding password leakage.

In a possible design, before the second device receives the second login credential sent by the server, the method further includes: The second device receives prompt information sent by the server, where the prompt information is used to prompt that the first device needs to connect to a network for authentication; the second device sends the prompt information to the first device through the near field communication connection; the first device outputs the prompt information; and the first device sends authentication information to the server after connecting to the network, where the authentication information indicates that the second device is allowed to log in to the first account.

In embodiments of this application, the second device logs in to the first account by using the first login credential of the first device. For the server of the first account, the first login credential originally issued to the first device is at the second device, and the server considers that the second device steals the first login credential of the first device. Therefore, the server may require the first device to connect to the network for authentication. Because the first device is in the offline state, the server may send the prompt information to the second device, to send the prompt information to the first device through the second device, so as to remind the first device to connect to the network for authentication, thereby ensuring account login security.

In a possible design, when the first interface is an interface used to migrate data from another device, the method further includes: The first device sends second data to the second device through the near field communication connection, where the second data includes user data stored in the first device; and the second device stores the second data.

In embodiments of this application, after the first device and the second device approach each other to launch an interface, the near field communication connection is established through scanning, and then data migration is performed through the near field communication connection, to improve data transmission efficiency.

According to a second aspect, an account login method is further provided, applied to a first device. An operating system of the first device currently logs in to a first account, and the method includes: The first device displays a code scanning interface in response to detecting that a second device approaches; the first device scans a first graphic on the second device by using the code scanning interface, to establish a near field communication connection to the second device; and the first device sends first data to the second device through the near field communication connection, where the first data includes a first login credential of the first device, and the first login credential is used by the second device to log in to the first account.

In a possible design, the first device is currently in an offline state.

In a possible design, before the first device displays the code scanning interface in response to detecting that the second device approaches, the method further includes: The first device displays a lock screen interface, a black screen, a home screen, a leftmost screen, or an application interface.

In a possible design, detecting that the second device approaches includes: detecting that a distance between the first device and the second device is less than a first distance, and/or receiving a request signal that is broadcast by the second device, where the request signal is a short-range communication signal.

In a possible design, that the first device displays the code scanning interface in response to detecting that the second device approaches includes: The first device displays prompt information in response to detecting that the second device approaches, where the prompt information is used to prompt whether to allow the second device to log in to the first account; and the first device displays the code scanning interface when receiving a consent operation.

In a possible design, the first login credential is a token token.

In a possible design, the first data does not include a login password of the first account, and/or the first data is encrypted by using a first key, where the first key is a key agreed on by the first device and a server corresponding to the first account.

In a possible design, that the first device displays the code scanning interface in response to detecting that the second device approaches includes: The first device displays N accounts of the first device in response to detecting that the second device approaches, where N is a positive integer; and the first device displays the code scanning interface when receiving an operation used to select the first account.

In a possible design, the method further includes: The first device receives, through the near field communication connection, prompt information sent by the second device, where the prompt information is used to prompt that the first device needs to connect to a network for authentication; the first device outputs the prompt information; and the first device sends authentication information to the server corresponding to the first account after connecting to the network, where the authentication information indicates that the second device is allowed to log in to the first account.

In a possible design, when the first interface is an interface used to migrate data from another device, the method further includes: The first device sends second data to the second device through the near field communication connection, where the second data includes user data stored in the first device.

According to a third aspect, an account login method is further provided, applied to a second device. The method includes: The second device displays a first interface, where the first interface is an interface for account login; the second device displays a first graphic in response to detecting that a first device approaches, where the first graphic is used to establish near field communication; the second device establishes a near field communication connection to the first device in response to scanning the first graphic by the first device; the second device receives, through the near field communication connection, first data sent by the first device, where the first data includes a first login credential of the first device; and the second device logs in to a first account based on the first login credential.

In a possible design, the first interface includes any one of the following: the first interface is an interface for account login in a setting application of the second device; the first interface is an interface of the second device in an OOBE process; or the first interface is an interface used to migrate data from another device.

In a possible design, the first device is currently in an offline state.

In a possible design, before the first device displays the code scanning interface in response to detecting that the second device approaches, the method further includes: The first device displays a lock screen interface, a black screen, a home screen, a leftmost screen, or an application interface.

In a possible design, detecting that the first device approaches includes: detecting that a distance between the first device and the second device is less than a second distance, and/or receiving a consent signal returned by the first device.

In a possible design, before the second device displays the first graphic in response to detecting that the first device approaches, the method further includes: The second device displays the first graphic when receiving a consent instruction sent by the first device, where the consent instruction indicates that the second device is allowed to log in to the first account.

In a possible design, the first login credential is a token token.

In a possible design, the first data does not include a login password of the first account, and/or the first data is encrypted by using a first key, where the first key is a key agreed on by the first device and a server corresponding to the first account.

In a possible design, that the second device logs in to the first account based on the first login credential includes: The second device sends a login request to the server corresponding to the first account, where the login request is used to request to log in to the first account, and the login request includes the first login credential; and the second device receives a second login credential sent by the server.

In a possible design, before the second device receives the second login credential sent by the server, the method further includes: The second device receives prompt information sent by the server, where the prompt information is used to prompt that the first device needs to connect to a network for authentication; and the second device sends the prompt information to the first device through the near field communication connection.

In a possible design, when the first interface is an interface used to migrate data from another device, the method further includes: The second device receives, through the near field communication connection, second data sent by the first device, where the second data includes user data stored in the first device; and the second device stores the second data.

According to a fourth aspect, an account login method is further provided, applied to a server. The method includes: receiving a login request sent by a second device, where the login request is used to request to log in to a first account, and the login request includes a first login credential of a first device; and sending a second login credential to the second device.

In embodiments of this application, the server may implement proxy login of a same account on different devices. For example, the second device logs in to the first account by using the first login credential of the first device. For the server of the first account, the second device logs in to the first account as a proxy of the first device. It is not limited that the second device needs to obtain a password of the first account to log in to the first account, thereby implementing high efficiency and convenience of password-free login.

In a possible design, the login request includes a first code value, and before sending the second login credential to the second device, the method further includes: determining that the first code value is a code value that has been sent by the server to the second device, and the first code value is within a validity period.

In embodiments of this application, the server may verify the second device (for example, verify the first code value), and issue the second login credential to the second device only after the verification succeeds, to ensure account security.

In a possible design, before sending the second login credential to the second device, the method further includes: sending prompt information to the second device, where the prompt information is used to prompt that the first device needs to connect to a network for authentication; and receiving authentication information sent by the first device, where the authentication information indicates that the second device is authorized to log in to the first account.

In embodiments of this application, the second device logs in to the first account by using the first login credential of the first device. For the server of the first account, the first login credential originally issued to the first device is at the second device, and the server considers that the second device steals the first login credential of the first device. Therefore, the server may require the first device to connect to the network for authentication. For example, the server may send the prompt information to the second device, to remind that the first device needs to connect to the network for authentication, to ensure account security.

According to a fifth aspect, an electronic device is further provided, including a memory, a processor, and a computer program that is stored in the memory and that can be run on the processor. When executing the computer program, the processor implements the method according to the second aspect or the third aspect.

According to a sixth aspect, an electronic device is further provided, including modules/units configured to perform the method corresponding to any design of the second aspect or the third aspect. These modules/units may be implemented by hardware, or may be implemented by executing corresponding software by hardware.

According to a seventh aspect, a server is further provided, including a memory, a processor, and a computer program that is stored in the memory and that can be run on the processor. When executing the computer program, the processor implements the method according to the fourth aspect.

According to an eighth aspect, a server is further provided, including modules/units configured to perform the method corresponding to any design of the fourth aspect. These modules/units may be implemented by hardware, or may be implemented by executing corresponding software by hardware.

According to a ninth aspect, a chip is further provided, including a processor and an interface. The processor is configured to read instructions through the interface, to perform the method according to any one of the first aspect, the second aspect, the third aspect, or the fourth aspect.

According to a tenth aspect, a chip system is further provided. The chip system includes a processing circuit and a storage medium, the storage medium stores instructions, and when the instructions are executed by the processing circuit, the method according to any one of the first aspect, the second aspect, the third aspect, or the fourth aspect is implemented.

According to an eleventh aspect, a communication system is further provided, including: a first device, configured to perform the method according to the second aspect; and a second device, configured to perform the method according to the third aspect.

According to a twelfth aspect, a communication system is further provided, including: a first device, configured to perform the method according to the second aspect; a second device, configured to perform the method according to the third aspect; and a server, configured to perform the method according to the fourth aspect.

According to a thirteenth aspect, a computer-readable storage medium is further provided. The computer-readable storage medium stores a computer program, and when the computer program is executed by a processor, the method according to any one of the first aspect, the second aspect, the third aspect, or the fourth aspect is implemented.

According to a fourteenth aspect, a computer program product is further provided. The computer program product includes a computer program, and when the computer program is run on a computer, the computer is enabled to perform the method according to any one of the first aspect, the second aspect, the third aspect, or the fourth aspect.

For beneficial effects of the designs in any one of the second aspect to the fourteenth aspect, refer to the beneficial effects of the corresponding designs in the first aspect. Details are not described again in this application.

### BRIEF DESCRIPTION OF DRAWINGS

FIG. 1 is a diagram of a communication system according to an embodiment of this application;
FIG. 2 is a diagram of login through code scanning according to an embodiment of this application;
FIG. 3A and FIG. 3B are two example diagrams of login through code scanning according to an embodiment of this application;
FIG. 4(a) to FIG. 4(f) are another diagram of login through scanning according to an embodiment of this application;
FIG. 5A(a) to FIG. 5A(e) to FIG. 5F(a) to FIG. 5F(l) are a diagram of launching an interface when two devices approach each other according to an embodiment of this application;
FIG. 6A(a) to FIG. 6A(f) and FIG. 6B(a) to FIG. 6B(f) are another diagram of launching an interface when two devices approach each other according to an embodiment of this application;
FIG. 7A(a) to FIG. 7A(e) and FIG. 7B(a) to FIG. 7B(f) are another diagram of launching an interface when two devices approach each other according to an embodiment of this application;
FIG. 8A and FIG. 8B are a first schematic flowchart of an account login method according to an embodiment of this application;
FIG. 9 is a second schematic flowchart of an account login method according to an embodiment of this application;
FIG. 10A and FIG. 10B are a third schematic flowchart of an account login method according to an embodiment of this application;
FIG. 11A and FIG. 11B(a) to FIG. 11B(g) are a fourth schematic flowchart of an account login method according to an embodiment of this application;
FIG. 12A is a fifth schematic flowchart of an account login method according to an embodiment of this application;
FIG. 12B is a sixth schematic flowchart of an account login method according to an embodiment of this application;
FIG. 13 is a diagram of an electronic device according to an embodiment of this application;
FIG. 14 is another diagram of a communication system according to an embodiment of this application; and
FIG. 15 is another diagram of an electronic device according to an embodiment of this application.

### DESCRIPTION OF EMBODIMENTS

The following describes some terms in embodiments of this application, to facilitate understanding of a person skilled in the art.

In embodiments of this application, "at least one" includes one or more, and "a plurality of" means two or more. In addition, it should be understood that in descriptions of this specification, words such as "first" and "second" are merely intended for the purpose of differentiated description, and should not be understood as expressing or implying relative importance or a sequence. For example, a first device and a second device do not represent importance degrees of the first device and the second device or a sequence of the first device and the second device, and are merely used for differentiated description. The term "and/or" in embodiments of this application describes only an association relationship and represents that three relationships may exist. For example, A and/or B may represent the following three cases: Only A exists, both A and B exist, and only B exists. In addition, the character "/" in this specification usually indicates an "or" relationship between the associated objects.

The orientation terms mentioned in embodiments of this application, for example, "up", "down", "left", "right", "inside", and "outside", are merely directions based on the accompanying drawings. Therefore, the orientation terms are used to better and more clearly describe and understand embodiments of this application, instead of indicating or implying that a specified apparatus or element should have a specific orientation or be constructed and operated in a specific orientation. Therefore, this cannot be understood as a limitation on embodiments of this application.

Reference to "an embodiment", "in some examples", "some embodiments", or the like described in this specification means that specific features, structures, or characteristics described with reference to the embodiment are included in one or more embodiments of this specification. Therefore, statements such as "in some examples", "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and variations thereof all mean "including but not limited to", unless otherwise specifically emphasized in another manner.

As described above, in a manner in which a user enters a password to log in to an account, the user needs to memorize the account and the password, resulting in a high requirement on the user. To resolve this problem, in embodiments of this application, the account may be logged in to in a password-free login manner. In this way, the user does not need to memorize the password, thereby reducing memorization difficulty, and helping improve use experience for an electronic device. In embodiments of this application, password-free login may include: login through code scanning. Login through code scanning relates to two devices. One is a device that has logged in to an account, for example, a device A, and the other is a device that has not logged in to the account, for example, a device B. The device B may display a to-be-scanned graphic, for example, a two-dimensional code or a barcode. The device A may display a code scanning interface. The device A scans, by using the code scanning interface, the graphic displayed by the device B, so that the device B logs in to the account of the device A.

**With reference to the accompanying drawings, the following describes in detail a process of login through code scanning provided in embodiments of this application.**

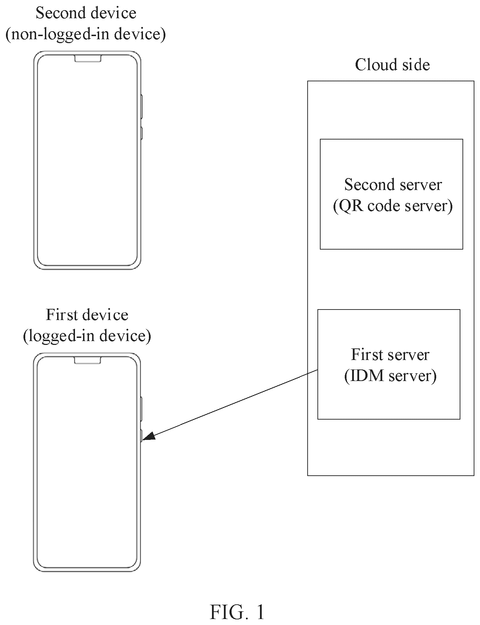

The technical solutions provided in embodiments of this application are applicable to a communication system. For example, FIG. 1 is a diagram of a communication system according to an embodiment of this application. As shown in FIG. 1, the communication system includes a first device, a second device, and a cloud side.

In FIG. 1, the first device logs in to a first account. Therefore, the first device may be referred to as a logged-in device. Optionally, that the first device logs in to the first account may include: A first operating system of the first device is logged in to by using the first account (that is, the first account is a system account), or a first application in the first device is logged in to by using the first account. The first operating system may be any operating system such as an Android (Android)^{®} system, a Harmony (Harmony)^{®} system, a Linux^{®} system, an iOS^{®} system, a Windows^{®} system, a MAC^{®} system, a Chrome^{®} system, or a Unix^{®} system. The first application may be any application in the first device, and may be a system application or a third-party application. Optionally, the first account may be an account in any form such as a mobile phone number, an email address, or a bank card number. This is not limited in embodiments of this application. In FIG. 1, an example in which the first device is a mobile phone is used. It should be understood that the first device may alternatively be another type of device. For example, the first device may be a portable device such as a mobile phone, a tablet computer, a notebook computer, a personal computer (personal computer, PC), an ultra-mobile personal computer (ultra-mobile personal computer, UMPC), a netbook, or a personal digital assistant (personal digital assistant, PDA); or may be a wearable device such as a watch or a band; or may be a virtual reality (Virtual Reality, VR) device, an augmented reality (Augmented Reality, AR) device, or a mixed reality (Mixed Reality, MR) device. In conclusion, a specific type of the first device is not limited in embodiments of this application.

In embodiments of this application, the first device may have a distance sensing capability, and can sense a distance between another device and the first device. For example, the first device includes a ranging unit. Optionally, the ranging unit may be a laser ranging unit, an acoustic wave ranging unit, an ultrasonic ranging unit, a radar, or the like. This is not limited in embodiments of this application. After the first device senses the distance between the another device and the first device, if the distance is less than a first distance, the first device determines that the another device approaches the first device, and may automatically launch a corresponding interface. This process is described below.

In FIG. 1, the second device does not log in to the first account. Therefore, the second device may be referred to as a non-logged-in device. Optionally, that the second device does not log in to the first account may include: A second operating system of the second device is not logged in to by using the first account, or a second application in the second device is not logged in to by using the first account. The second operating system may be any operating system such as an Android^{®} system, a Harmony^{®} system, a Linux^{®} system, an iOS^{®} system, a Windows^{®} system, a MAC^{®} system, a Chrome^{®} system, or a Unix^{®} system. Optionally, the second operating system and the first operating system may be a same operating system or different operating systems. For example, both the second operating system and the first operating system are the Harmony^{®} system. The second application may be any application in the second device, and may be a system application or a third-party application. Optionally, the second application and the foregoing first application may be a same application or different applications. In FIG. 1, an example in which the second device is a mobile phone is used. It should be understood that the second device may alternatively be another type of device. For example, the second device may be a portable device such as a mobile phone, a tablet computer, a notebook computer, a PC, a UMPC, a netbook, or a PDA; or may be an entertainment device such as a television set or a game console; or may be a wearable device such as a watch or a band; or may be an in-vehicle device, for example, an apparatus carried in a vehicle, such as a display apparatus, where certainly, the vehicle may be replaced with another carrier or transportation means such as a train, an aircraft, or a mobile platform; or may be a VR device, an AR device, or an MR device. In conclusion, a specific type of the second device is not limited in embodiments of this application. Optionally, the second device and the first device may be devices of a same type or different types. For example, the first device is a mobile phone, and the second device is a PC or a tablet computer. An example in which both the first device and the second device are mobile phones is used for description in this specification.

In embodiments of this application, the second device may have a distance sensing capability, and can sense a distance between another device and the second device. For example, the second device includes a ranging unit. For the ranging unit, refer to the foregoing description. After the second device senses the distance between the another device and the second device, if the distance is less than a first distance, the second device determines that the another device approaches the second device, and may automatically launch a corresponding interface. This process is described below.

In FIG. 1, the cloud side may include a server corresponding to the first account, that is, a login server of the first account, for example, a first server. That the first device logs in to the first account may be simply understood as that the first device can access a data resource in a first server. That the second device does not log in to the first account may be simply understood as that the second device cannot access the data resource in the first server. Optionally, the first server may be various types of servers, for example, an application server (Application Server), an account server (Account Server), and an identity management (Identity Management, IDM) server. In FIG. 1, the cloud side may further include another server, for example, a second server. The second server may be understood as a secondary server of the first server. For example, for a device (for example, the second device) that needs to perform login through code scanning, the second server may provide verification information for the device. The verification information may be a login code (code) value, which is referred to as a code value for short below. Optionally, the code value may be any one or combination of a plurality of forms such as a text, a number, a symbol, a letter, a pattern, a sound, and a video. The code value may be used to generate a to-be-scanned graphic, and the graphic is, for example, a two-dimensional code, a barcode, or a graphic in any other form. In other words, the second server may be configured to generate the code value, and provide the code value for the device (for example, the second device) that needs to perform login through code scanning, so that the device displays the to-be-scanned graphic. When the graphic is scanned by a device (for example, the first device) that has logged in to an account, password-free login can be implemented. For example, the second server may be a quick response code (Quick Response code, QR code) server, and the generated code value may be a QR code. The QR code is used to generate graphics in various forms such as a two-dimensional code and a barcode. It should be noted that, in FIG. 1, that the second server and the first server are two independent servers is used as an example. It may be understood that the second server and the first server may alternatively be one server. For example, the second server is integrated into the first server. In other words, the first server has a function of generating a code value.

**The following continues to use the communication system shown in** **FIG. 1** **as an example for description.**

In FIG. 1, the first device has logged in to the first account, and the second device has not logged in to the first account. For ease of understanding, for example, the first operating system of the first device has been logged in to by using the first account, and the second operating system of the second device has not been logged in to by using the first account. If both the first operating system and the second operating system are Huawei systems, the first account may be a Huawei account. In embodiments of this application, the second operating system of the second device may be logged in to by using the first account in a manner of login through code scanning.

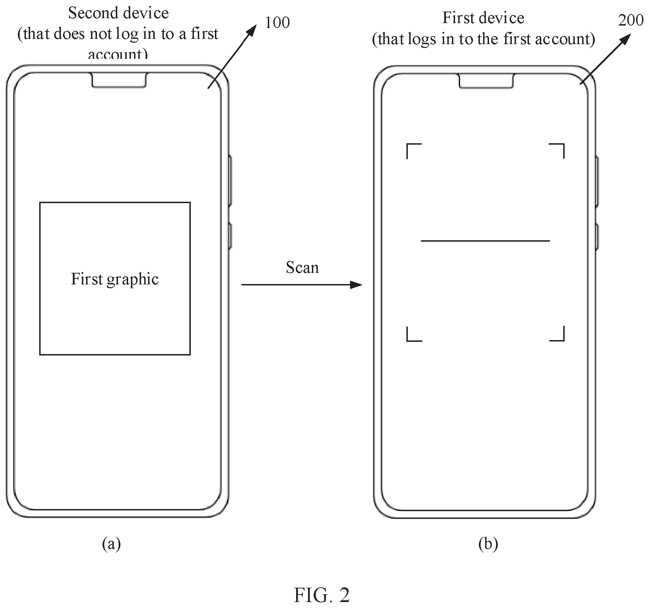

For example, FIG. 2 is a diagram of login through code scanning according to an embodiment of this application. In FIG. 2, the first operating system of the first device has been logged in to by using the first account. The second operating system of the second device has not been logged in to by using the first account. As shown in (a) in FIG. 2, the second device displays an interface 100, and the interface 100 includes a first graphic. As shown in (b) in FIG. 2, the first device displays an interface 200. The interface 200 may also be referred to as a code scanning interface. The interface 200 includes an image captured by a camera of the first device. A user may perform scanning by aligning the camera of the first device with the first graphic on the second device, so that the second operating system of the second device is logged in to by using the first account. A specific login process is described below. In FIG. 2, the first graphic may be graphics in various forms such as a two-dimensional code and a barcode. Optionally, a shape of the first graphic may be any shape such as a square, a rectangle, a circle, or a ring. This is not limited in embodiments of this application.

In embodiments of this application, the first graphic may be generated in the following two manners.

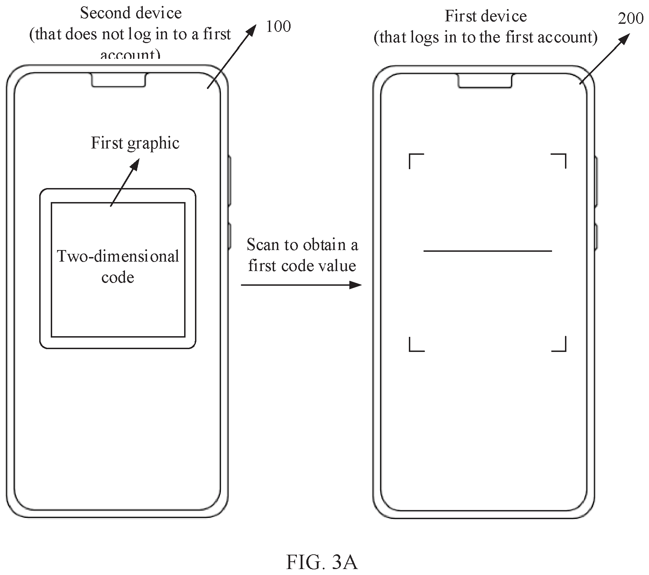

In a first manner, the first graphic is generated based on a first code value. The first code value is a code value that is obtained by the second device from the cloud side (for example, obtained from the second server in FIG. 1) and that is used to implement password-free login. For example, as shown in FIG. 3A, the second device displays the first graphic, and the first graphic is a two-dimensional code generated based on the first code value. The first device scans the two-dimensional code to obtain the first code value, and then requests, based on the first code value, the cloud side to authorize the second device to log in to the first account.

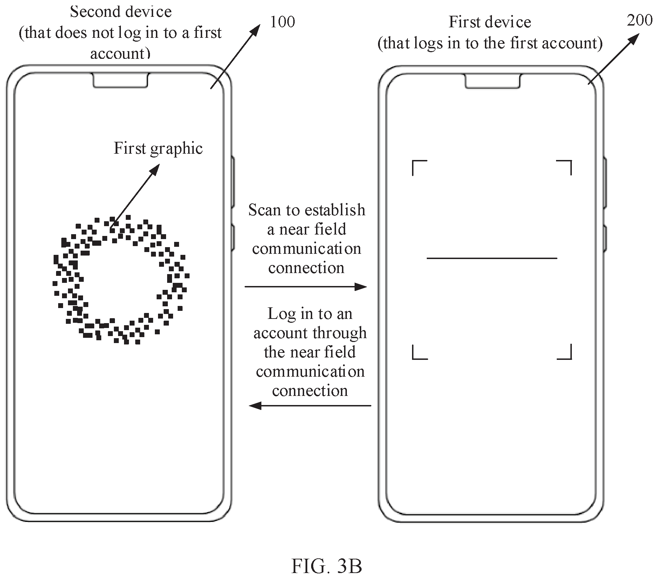

In a second manner, the first graphic is generated based on a second code value. The second code value is different from the foregoing first code value, and the difference may include a source difference and/or a function difference. For example, the source difference includes: The first code value is a code value that is obtained by the second device from the cloud side (for example, the second server in FIG. 1) and that is used to implement password-free login, while the second code value may be locally generated by the second device or obtained from a third server. The third server and the second server or the first server may be a same server or different servers. For example, the function difference includes: The first code value is used by the cloud side to perform identity authentication on the second device, to determine whether to authorize the second device to log in to the first account, while the second code value is used to establish a near field communication connection. For example, as shown in FIG. 3B, the second device displays the first graphic, and the first graphic is a ring code generated based on the second code value. If the operating system of the second device is a Harmony system, the ring code may be referred to as a Harmony ring. Certainly, this name is not limited in embodiments of this application. When scanning the ring code, the first device may establish a near field communication connection to the second device. The first device may assist, through the near field communication connection, the second device in logging in to the first account. A specific implementation process is described below.

In embodiments of this application, the second device may generate the first graphic based on either of the foregoing two manners. For example, if the second device includes program code of only the first manner, the first graphic is generated in the first manner. Alternatively, if the second device includes program code of only the second manner, the first graphic is generated in the second manner. Alternatively, the second device includes both program code of the first manner and program code of the second manner. In this case, the second device may randomly select a manner, or select a manner according to an actual situation. For example, if the second device determines that a near field communication function (for example, Bluetooth) is disabled, the first manner may be used; or if the second device determines that a near field communication function is enabled, the second manner may be used. Alternatively, the user may set a specific manner to be used by the second device.

It should be noted that, different manners (for example, the foregoing first or second manner) of generating the first graphic correspond to different login procedures, which are separately described below. For ease of understanding, the following mainly uses an example in which the first graphic is generated in the second manner (that is, FIG. 3B) for description, that is, the first graphic is used to establish a near field communication connection. As shown in FIG. 3B, to implement login through code scanning, the second device needs to open an interface 100, and the first device needs to open an interface 200. The following describes a process in which the second device opens the interface 100 and the first device opens the interface 200. It should be emphasized that the following principles of opening the interface 100 by the second device and opening the interface 200 by the first device are also applicable to FIG. 3A.

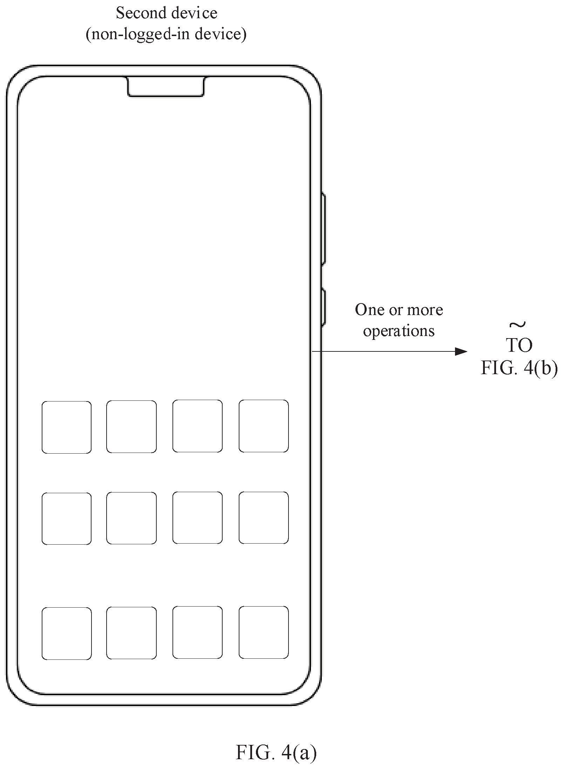

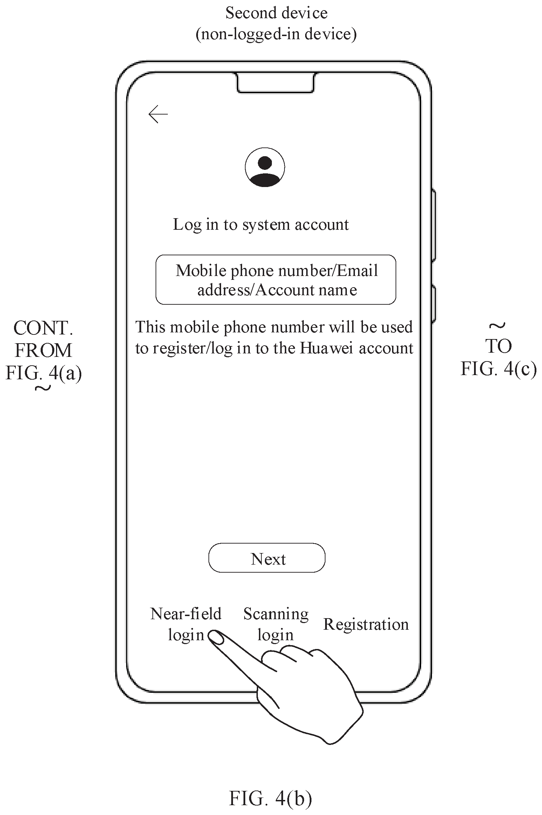

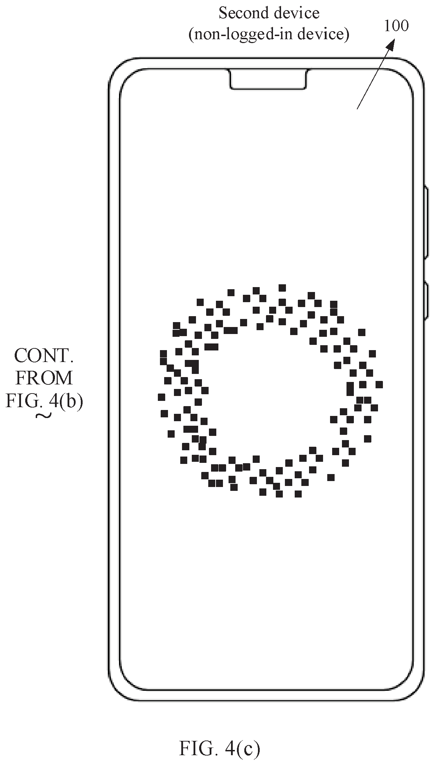

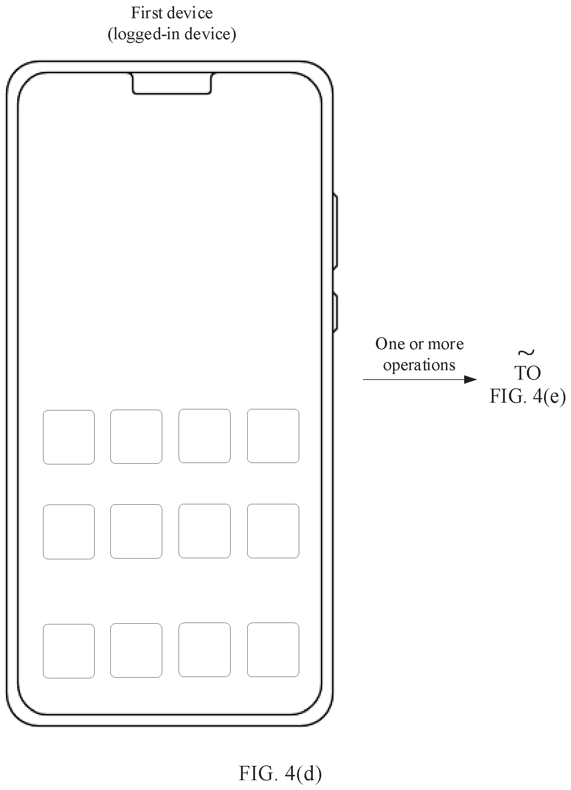

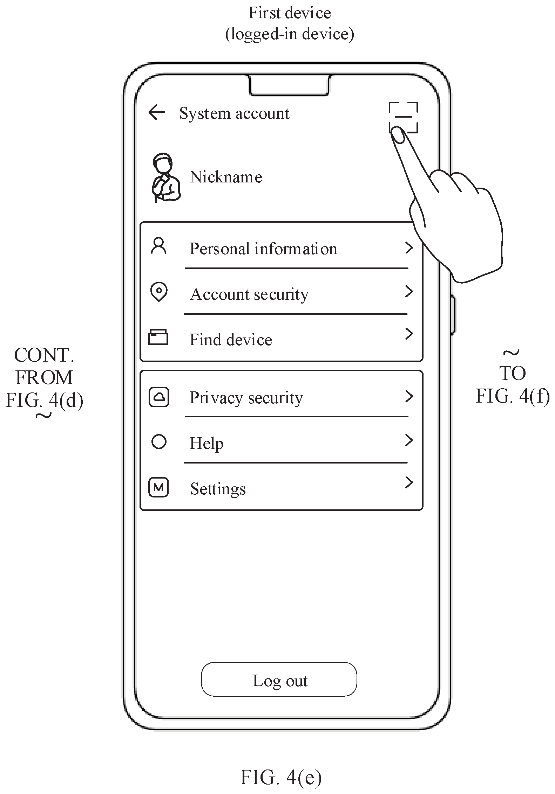

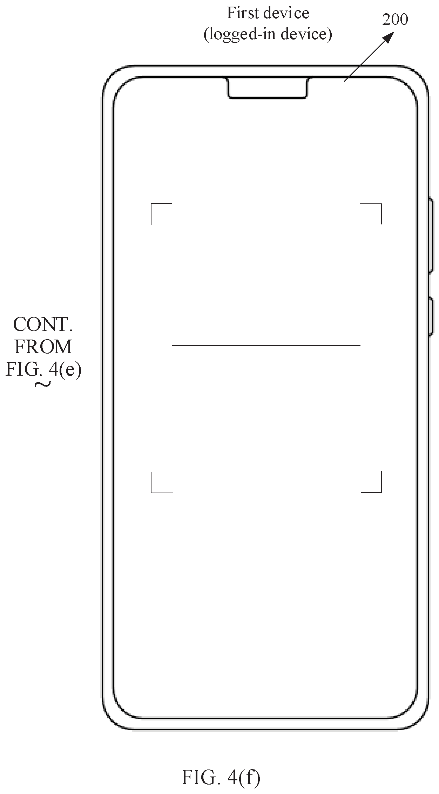

For example, as shown in FIG. 4(a), the second device displays a home screen. After receiving one or more user operations (for example, a tap operation), the second device displays an interface for account login, for example, an interface used to log in to a system account (for example, a Huawei account). The interface may be, for example, an interface shown in FIG. 4(b). The interface includes a "Near-field login" button. When receiving an operation on the "Near-field login" button, the second device displays an interface 100 shown in FIG. 4(c). The interface 100 includes a first graphic, and the first graphic is used to establish a near field communication connection. As shown in FIG. 4(d), the first device displays a home screen. After receiving one or more user operations (for example, a tap operation), the first device displays an interface shown in FIG. 4(e). The interface may be an interface of an account center of an account of the first device. The interface includes a scan button. When receiving an operation on the scan button, the first device starts a camera, and displays an interface 200 shown in FIG. 4(f). Therefore, through the process in FIG. 4(a) to FIG. 4(f), the second device opens the interface 100, and the first device opens the interface 200. However, in this process, the user needs to separately perform complex operations on the first device and the second device. This is inconvenient and has poor experience.

To simplify user operation steps, so that the second device quickly opens the interface 100, and/or the first device quickly opens the interface 200, a possible solution is that the two devices automatically launch corresponding interfaces when being triggered by a trigger condition. Optionally, the trigger condition may include: Two devices approach each other. That is, the corresponding interfaces are automatically launched when the two devices approach each other.

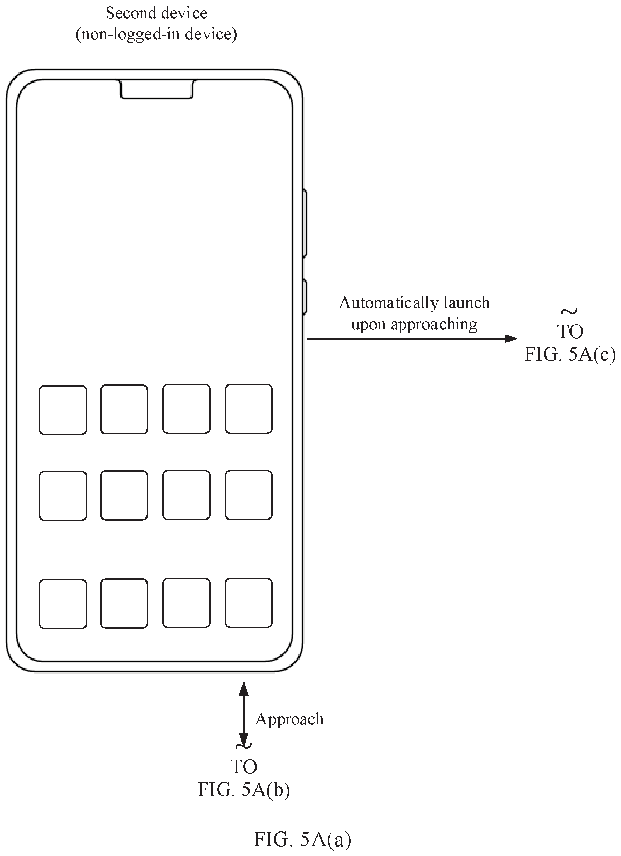

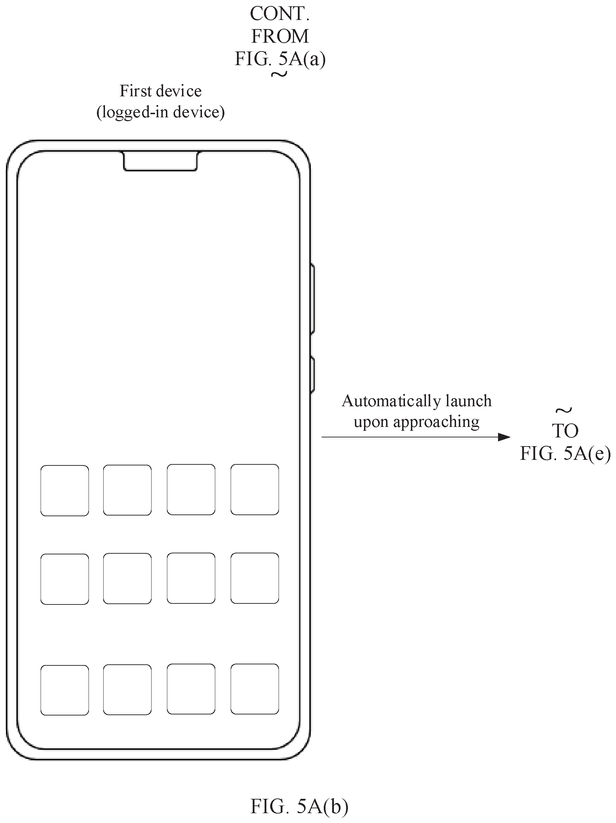

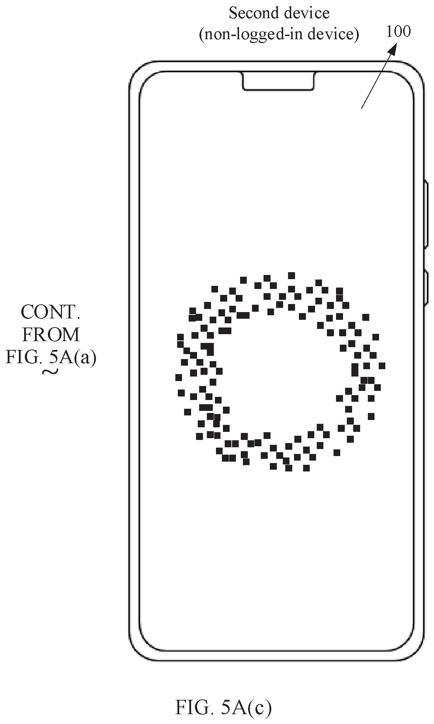

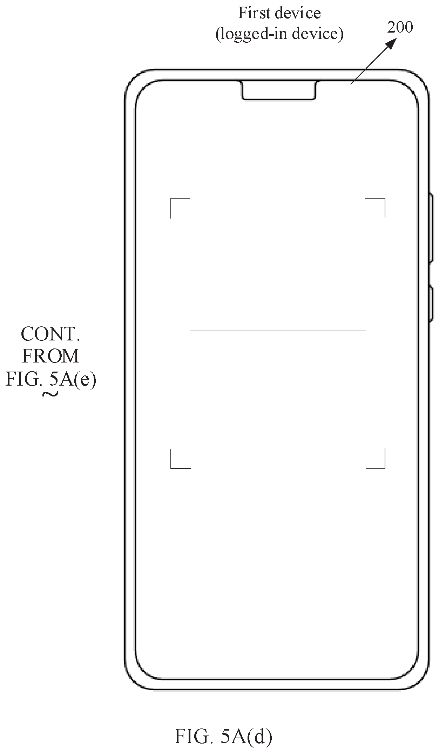

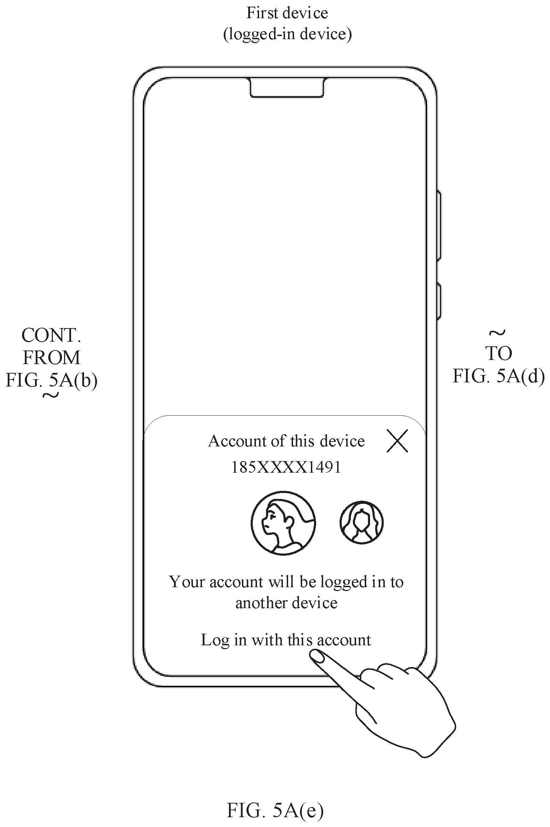

For example, as shown in FIG. 5A(b), when the first device detects that the second device approaches, there are two processing manners. Manner A: The first device pops up a prompt box shown in FIG. 5A(e). The prompt box includes account information (for example, a mobile phone number) of the first device, and further includes prompt information used to prompt that the account of the first device is to be logged in on the second device. The prompt box further includes a "Log in with this account" button. When receiving an operation on the "Log in with this account" button, the first device launches an interface 200 shown in FIG. 5A(d), that is, a code scanning interface. Manner B: The first device directly launches an interface 200 shown in FIG. 5A(d). As shown in FIG. 5A(a), when detecting that the first device approaches, the second device may directly launch an interface 100 shown in FIG. 5A(c), where the interface 100 includes a first graphic, and the first graphic is used to establish a near field communication connection; or when receiving a launch instruction sent by the first device, the second device launches an interface 100 shown in FIG. 5A(c). For example, in FIG. 5A(e), after receiving an operation on the "Log in with this account" button, the first device sends a launch instruction to the second device, and after receiving the launch instruction, the second device launches the interface 100 shown in FIG. 5A(c).

It should be noted that, in FIG. 5A(a) to FIG. 5A(e), an example in which the two devices approach each other to automatically launch corresponding interfaces when the first device displays the home screen and the second device displays the home screen is used. Optionally, before the second device launches the interface 100, an interface other than the home screen may be alternatively displayed, for example, a lock screen, a black screen, or a remaining interface. The remaining interface may be a leftmost screen or any interface entered by the user in an unlocking case. Optionally, before the first device launches the interface 200, an interface other than the home screen may be alternatively displayed, for example, a lock screen, a black screen, or a remaining interface. The remaining interface may be a leftmost screen or any interface entered by the user in an unlocking case.

FIG. 5A(a) to FIG. 5A(e) are compared with FIG. 4(a) to FIG. 4(f). In FIG. 4(a) to FIG. 4(f), the user needs to separately perform complex operations on the first device and the second device. However, in FIG. 5A(a) to FIG. 5A(e), the user only needs to make the two devices approach each other, and the two devices can automatically launch corresponding interfaces. This manner of automatically launching interfaces upon approaching greatly simplifies user operation steps, and improves convenience and user experience.

In FIG. 5A(a) to FIG. 5A(e), when the two devices approach each other, corresponding interfaces are automatically launched, which may specifically include a plurality of implementations.

Manner A: When detecting that the first device approaches, the second device automatically displays the interface 100, and triggers the first device to display the interface 200. For example, the second device sends an instruction for opening the interface 200 to the first device, so that the first device opens the interface 200 based on the instruction. In this manner, the second device performs distance detection. When determining, based on a distance, that the first device approaches (for example, the distance is less than a first distance), the second device displays the interface 100, and triggers the first device to display the interface 200. In this manner, workload of the first device is relatively small.

Manner B: When detecting that the second device approaches, the first device automatically displays the interface 200, and triggers the second device to display the interface 100. For example, the first device sends an instruction for opening the interface 100 to the second device, so that the second device opens the interface 100 based on the instruction. In this manner, the first device performs distance detection. When determining, based on a distance, that the second device approaches (for example, the distance is less than a second distance), the first device displays the interface 200, and triggers the second device to display the interface 100. In this manner, workload of the second device is relatively small.

Manner C: When detecting that the first device approaches, the second device automatically displays the interface 100; and when detecting that the second device approaches, the first device automatically displays the interface 200. In this manner, computational amounts of the first device and the second device are balanced.

Optionally, a system may use the foregoing manner A by default, that is, it is considered by default that a device (that is, the second device) that does not log in to an account performs distance detection and launches an interface. In a possible case, when the second operating system of the second device is not logged in to by using any account, a distance sensing unit (referring to the foregoing description) in the second device may be always in a started state, that is, always sense whether another device approaches, to make preparations for launching an interface upon approaching and completing login through code scanning as soon as possible. The first operating system of the first device has been logged in to by using the first account, a distance sensing unit in the first device does not need to be always started, and the first device only needs to launch the interface 200 after receiving an interface launch instruction of the second device. Certainly, the system may alternatively use the manner B or the manner C by default. This is not limited in embodiments of this application.

In FIG. 5A(a) to FIG. 5A(e), the corresponding interfaces are automatically launched when the two devices approach each other. In embodiments of this application, it is further considered that the user may not expect that the interfaces are automatically launched when the two devices approach each other. For example, the user does not intend to log in to the second operating system of the second device by using the first account, but simply places the second device and the first device at positions close to each other. If the two devices automatically launch interfaces, user experience may be affected.

**Therefore, to avoid false triggering, embodiments of this application provide the following solutions.**

**In a first solution,** when the second device displays a first interface (which may also be referred to as a first specific interface), a corresponding interface is automatically launched when the two devices approach each other. When the second device does not display a first interface, no interface is launched when the two devices approach each other, thereby avoiding false triggering.

In different scenarios, the second device may have different first interfaces. The following illustrates three scenarios.

**A first scenario is a scenario in which the second device logs in to an account.** Optionally, the scenario of logging in to an account may be a scenario of logging in to a system account (for example, a Huawei account).

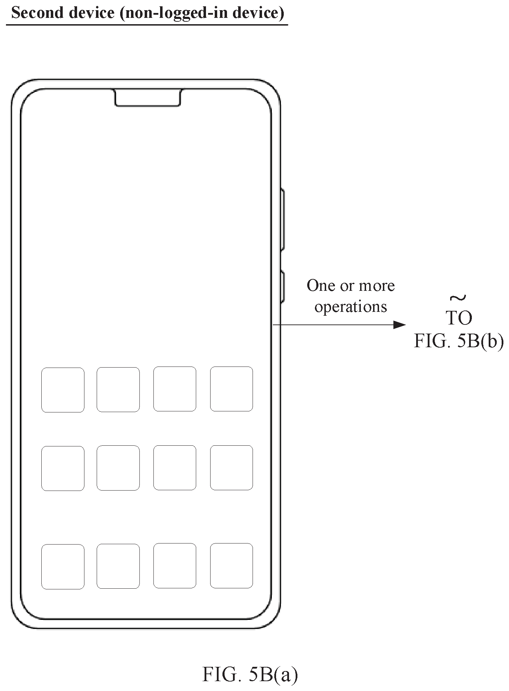

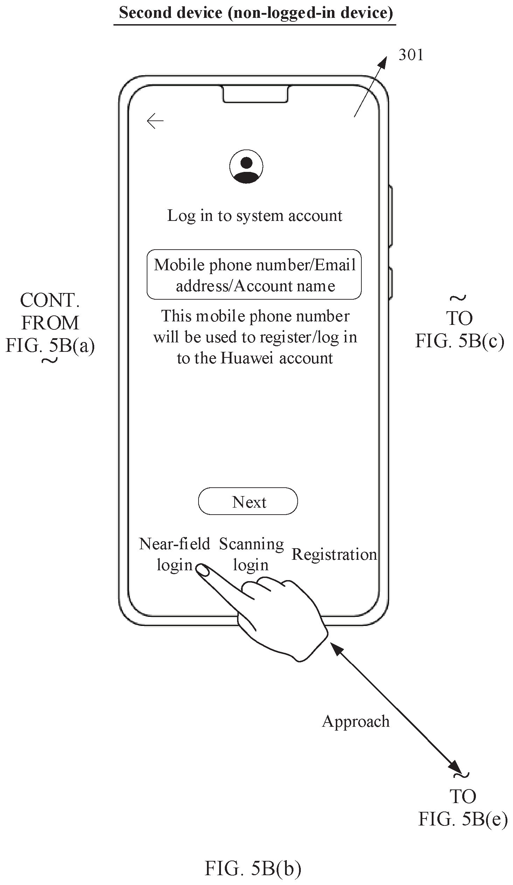

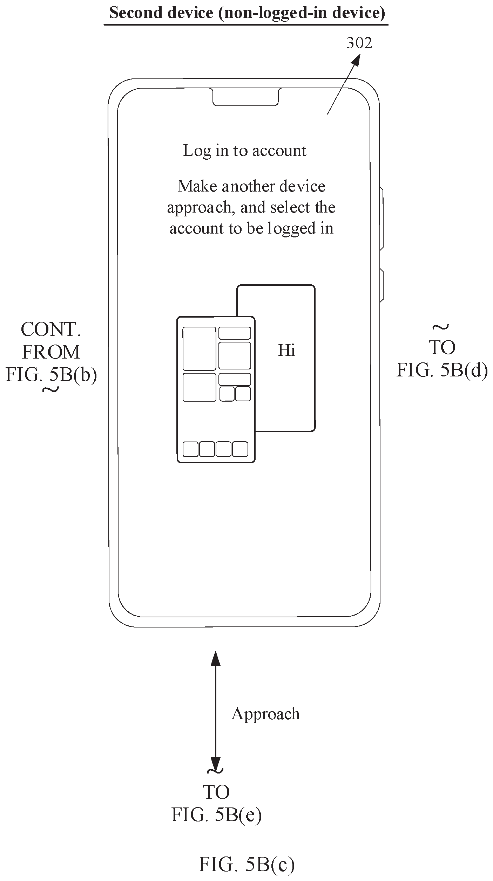

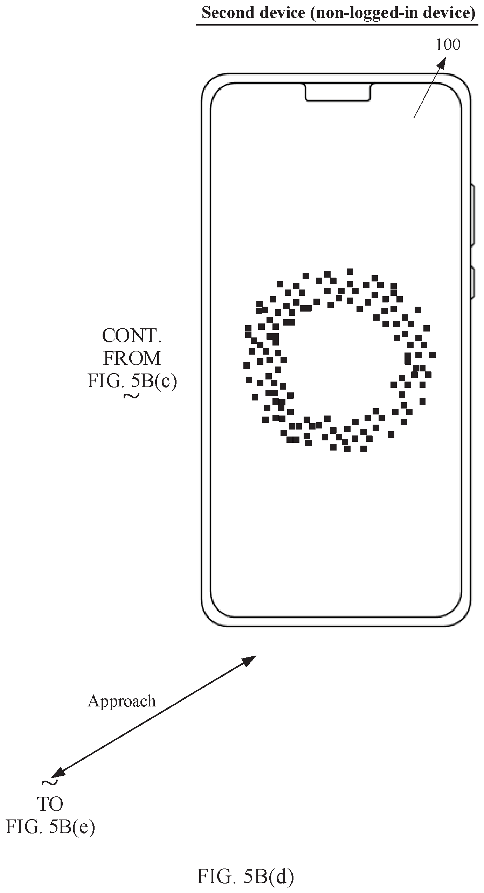

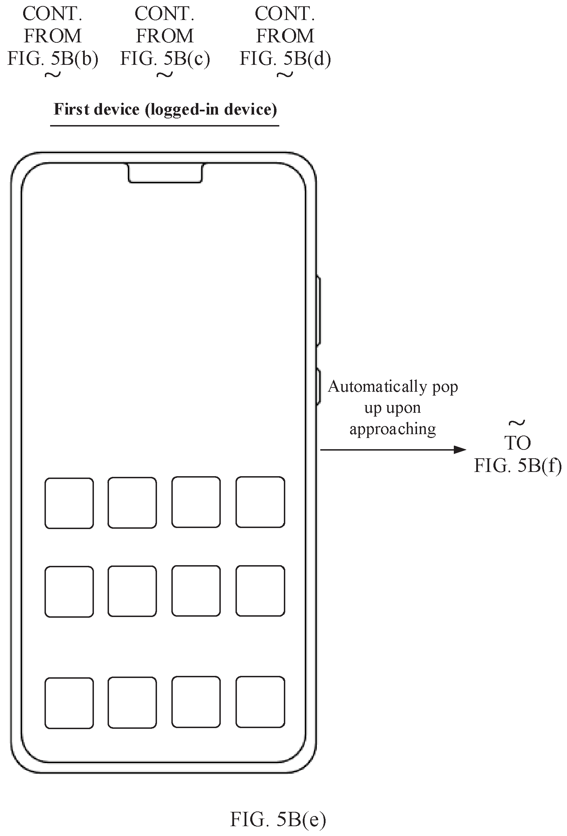

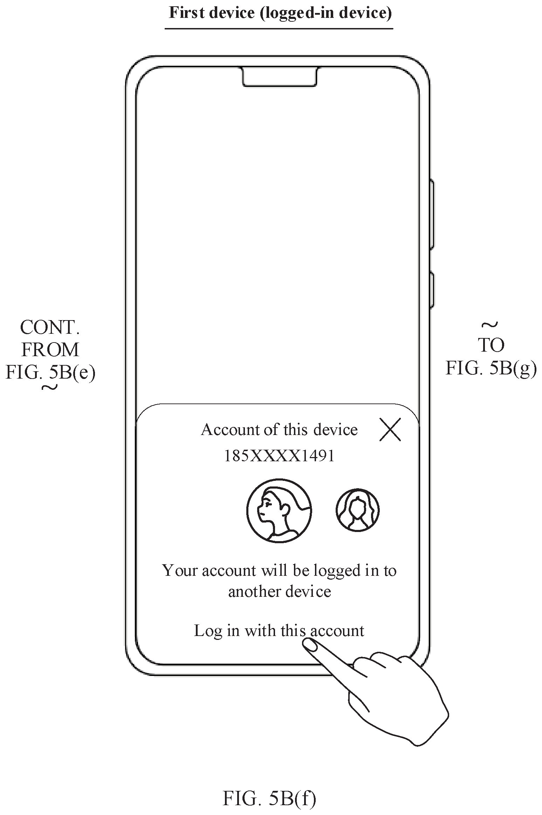

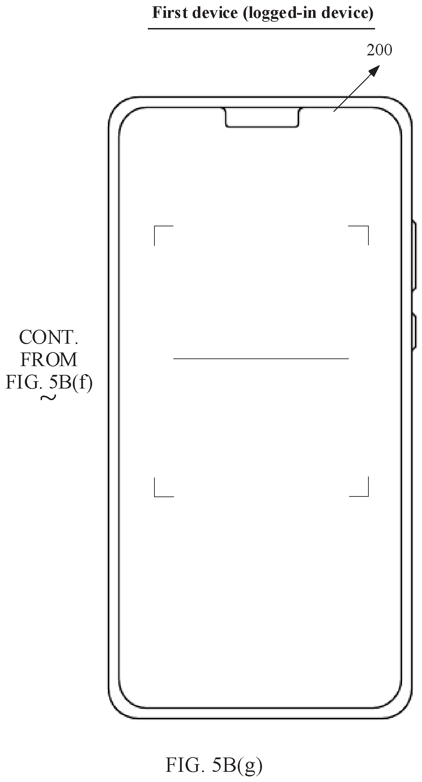

For example, as shown in FIG. 5B(a), the second device displays a home screen. After receiving one or more user operations, the second device displays an interface for account login. Logging in to a system account (for example, a Huawei account) is used as an example. An interface used to log in to the system account may be, for example, an interface 301 shown in FIG. 5B(b). In an example, a process in which the second device opens the interface 301 may include: home screen -> settings -> account. As shown in FIG. 5B(b), the interface 301 includes a "Near-field login" button. When receiving an operation on the "Near-field login" button, the second device may display an interface 302 in FIG. 5B(c), or directly display an interface 100 in FIG. 5B(d). It should be noted that, as shown in the interface 301 in FIG. 5B(b), the account may be a mobile phone number, an email address, or an account name, and is used to log in to the operating system of the second device.

Optionally, the first interface may be any one of the interface 301 in FIG. 5B(b), the interface 302 in FIG. 5B(c), and the interface 100 in FIG. 5B(d), or another interface. The another interface may be, for example, a home page of a setting application or any interface entered from the home page.

For example, the first interface is the interface 302 in FIG. 5B(c). When the second device displays the interface 302, if the two devices approach each other, a corresponding interface may be launched. For example, as shown in FIG. 5B(e), the first device displays the home screen, and when the first device detects that the second device approaches (the second device is displaying the interface 302), there are two processing manners. **Manner A:** The first device automatically pops up a prompt box shown in FIG. 5B(f). The prompt box includes prompt information used to prompt that the account of the first device is to be logged in on the second device. The prompt box further includes a "Log in with this account" button. When receiving an operation on the "Log in with this account" button, the first device launches an interface 200 shown in FIG. 5B(g). **Manner B:** The first device directly launches an interface 200 shown in FIG. 5B(g), and does not need to perform a process in FIG. 5B(f), thereby reducing operations and simplifying a procedure. When the second device displays the interface 302, if it is detected that the first device approaches, the interface 100 in FIG. 5B(d) may be automatically launched. Alternatively, when a launch instruction sent by the first device is received, the interface 100 in FIG. 5B(d) is launched. For example, inFIG. 5B(f), after receiving an operation on the "Log in with this account" button, the first device sends a launch instruction to the second device, and after receiving the launch instruction, the second device launches the interface 100 shown in FIG. 5B(d). It should be noted that, in this example, an example in which the two devices approach each other to automatically launch interfaces when the second device displays the interface 302 and the first device displays the home screen is used. Optionally, the first device may alternatively display an interface other than the home screen, for example, a lock screen, a black screen, or another interface. The another interface may be any interface entered by the user when the first device is unlocked, for example, a leftmost screen or an interface of an application.

For example, the first interface is the interface 100 in FIG. 5B(d). When the second device displays the interface 100, if the two devices approach each other, a corresponding interface may be launched. For example, as shown in FIG. 5B(e), the first device displays the home screen, and when the first device detects that the second device approaches (the second device is displaying the interface 100), there are two processing manners such as the foregoing manner A and manner B. It should be understood that, because the second device has displayed the interface 100, when the second device detects that the first device approaches, the second device continues to maintain the interface 100. It should be noted that, in this example, an example in which the two devices approach each other to automatically launch interfaces when the second device displays the interface 100 and the first device displays the home screen is used. Optionally, the first device may alternatively display an interface other than the home screen, for example, a lock screen, a black screen, or another interface. The another interface may be any interface entered by the user when the first device is unlocked, for example, a leftmost screen or an interface of an application.

For example, the first interface is the interface 301 in FIG. 5B(b). When the second device displays the interface 301, if the two devices approach each other, a corresponding interface may be launched. For example, as shown in FIG. 5B(d), the first device displays the home screen, and when the first device detects that the second device approaches (the second device is displaying the interface 301), there are two processing manners such as the foregoing manner A and manner B. When the second device displays the interface 301, if it is detected that the first device approaches, the interface 100 in FIG. 5B(d) may be directly launched. Alternatively, when a launch instruction sent by the first device is received, the interface 100 in FIG. 5B(d) is launched. For example, in FIG. 5B(f), after receiving an operation on the "Log in with this account" button, the first device sends a launch instruction to the second device, and after receiving the launch instruction, the second device launches the interface 100 shown in FIG. 5B(d). It should be noted that, in this example, an example in which the two devices approach each other to automatically launch interfaces when the second device displays the interface 301 and the first device displays the home screen is used. Optionally, the first device may alternatively display an interface other than the home screen, for example, a lock screen, a black screen, or another interface. The another interface may be any interface entered by the user when the first device is unlocked, for example, a leftmost screen or an interface of an application.

**A second scenario is an out-of-box experience (Out-of-box experience, OOBE) scenario of the second device.**

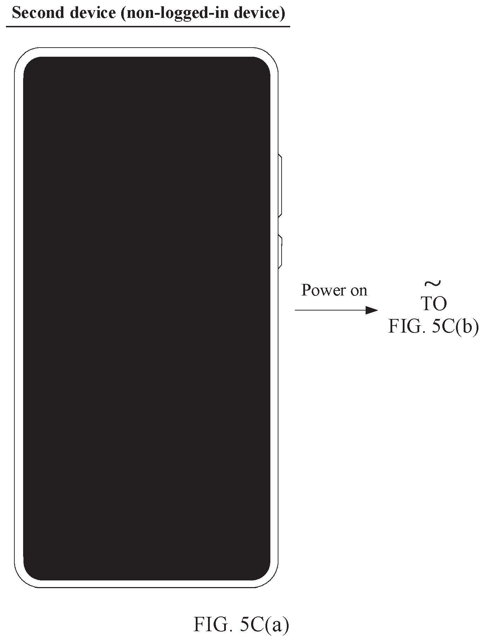

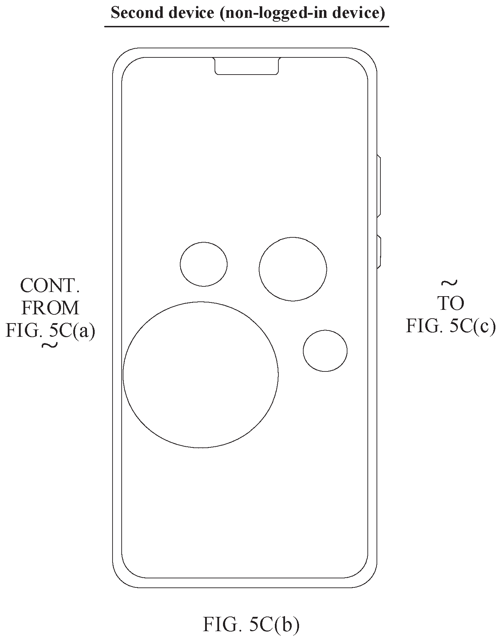

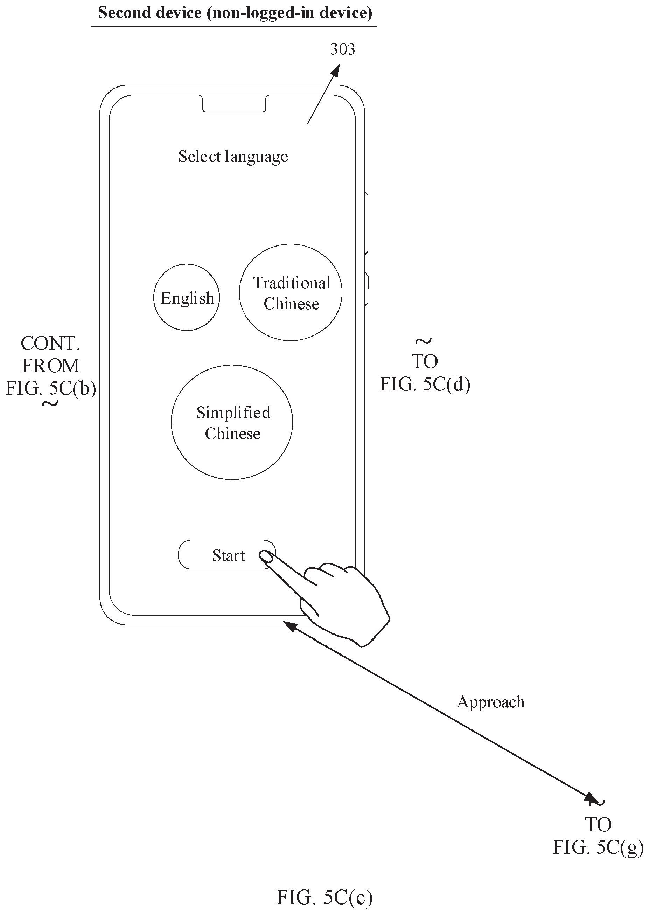

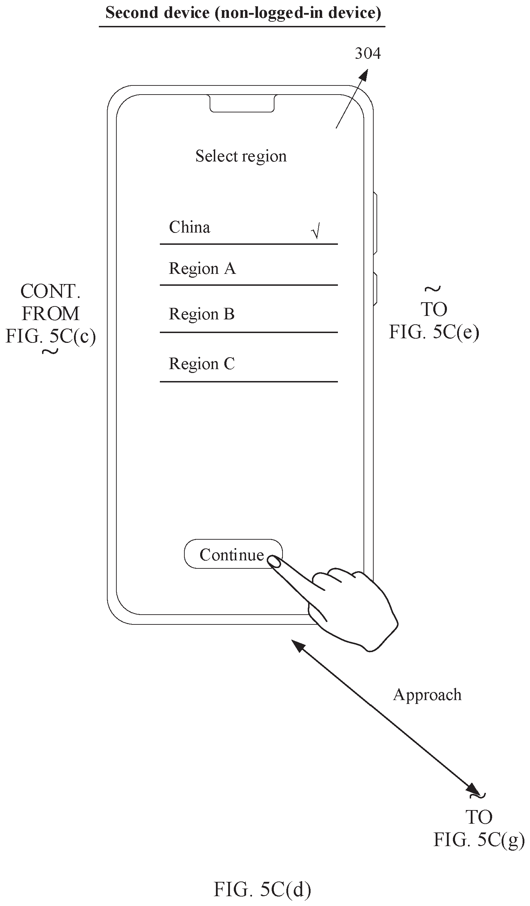

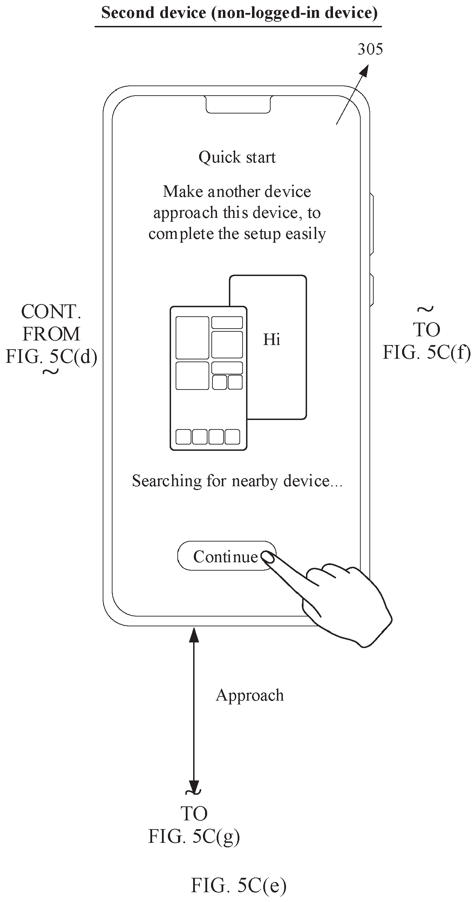

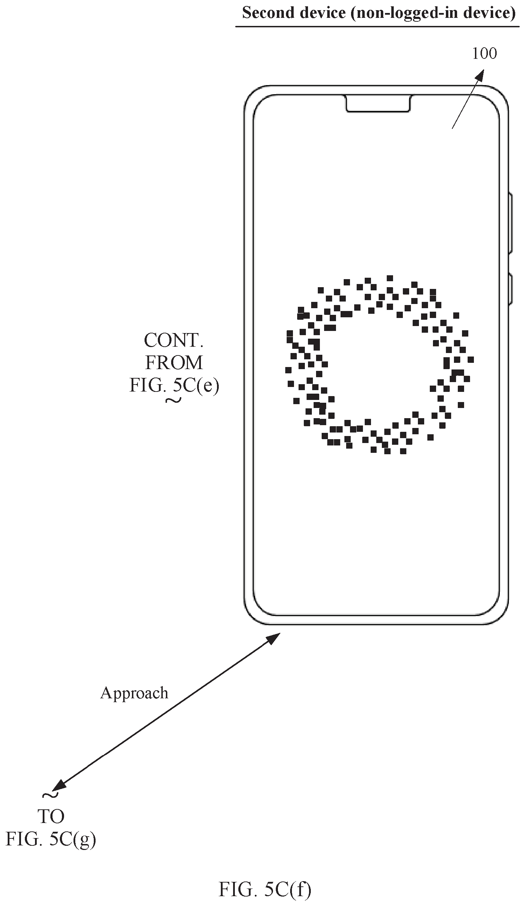

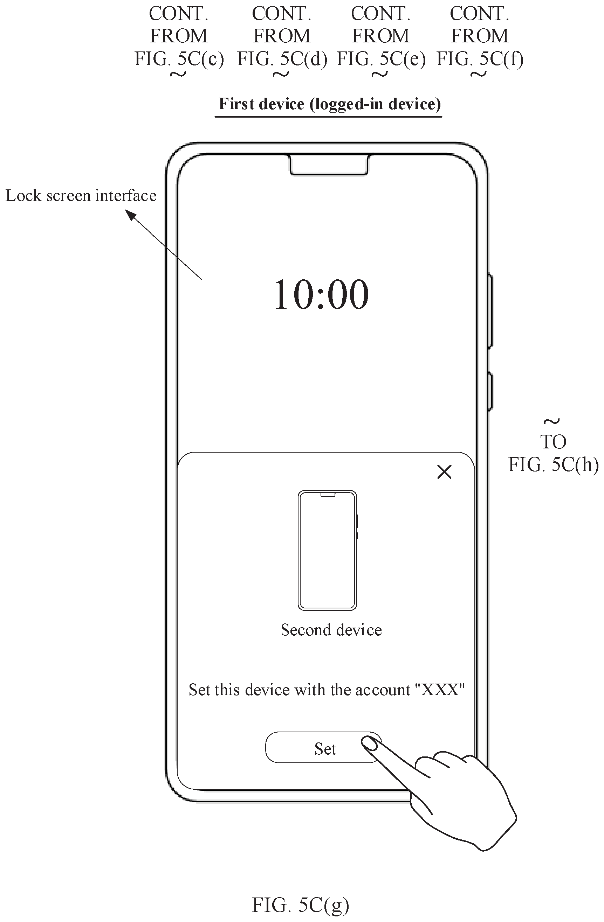

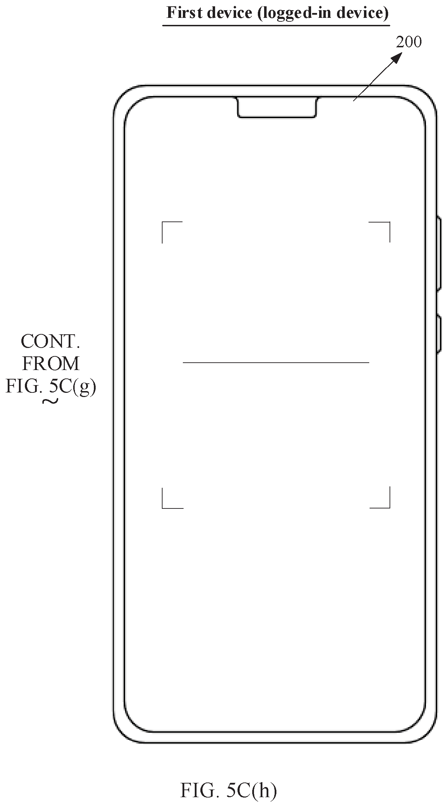

For example, as shown in FIG. 5C(a), the second device is in a power-off state. After receiving a power-on operation, the second device may display a power-on interface shown in FIG. 5C(b). Optionally, the second device may perform processes such as network search and registration for a SIM card, so that the SIM card can be used normally. Optionally, the second device may further perform a wireless connection process, for example, access a WLAN. These processes are not described in detail in embodiments of this application. After completing the processes, the second device may display an interface 303 shown in FIG. 5C(c). The user may select a language, for example, simplified Chinese, in the interface 303. When receiving an operation on a "Start" button, the second device displays an interface 304 shown in FIG. 5C(d). The user may select a region, for example, China, in the interface 304. When receiving an operation on a "Continue" button, the second device may display an interface for account login, for example, an interface used to log in to a system account (for example, a Huawei account). The interface may be, for example, an interface 305 shown in FIG. 5C(e), or an interface 100 shown in FIG. 5C(f). The interface 305 includes prompt information: Make another device approach this device, to complete the setup easily.

Optionally, the first interface may be any interface in an OOBE process, for example, the interface 303 in FIG. 5C(c), the interface 304 in FIG. 5C(d), the interface 305 in FIG. 5C(e), or the interface 100 in FIG. 5C(f).

For example, the first interface is the interface 305 shown in FIG. 5C(e). When the second device displays the interface 305, if the two devices approach each other, a corresponding interface may be launched. For example, as shown in FIG. 5C(g), the first device displays a lock screen interface, and when the first device detects that the second device approaches (the second device is displaying the interface 305), there are two processing manners. **Manner A:** The first device automatically pops up a prompt box shown in FIG. 5C(g), where the prompt box includes device information of the second device and prompt information, and the prompt information is used to prompt to use the account of the first device to set the second device. The prompt box further includes a "Set" button. When receiving an operation on the "Set" button, the first device may directly launch an interface 200 shown in FIG. 5C(h). Optionally, because the first device is in a lock screen state, when receiving the operation on the "Set" button, the first device may prompt the user to perform identity authentication (this process is not shown in FIG. 5C(a) to FIG. 5C(h)), to ensure that the operation is performed by an owner of the first device. For example, the first device may prompt the user to enter an unlocking fingerprint or an unlocking password. If verification succeeds, the interface 200 shown in FIG. 5C(h) is launched. **Manner B:** The first device directly launches an interface 200 shown in FIG. 5C(h), and does not need to pop up a prompt box in FIG. 5C(g), thereby reducing operations and simplifying a procedure. When the second device displays the interface 305, if it is detected that the first device approaches, the interface 100 in FIG. 5C(f) may be automatically launched. Alternatively, when a launch instruction sent by the first device is received, the interface 100 in FIG. 5C(f) is launched. For example, in FIG. 5C(g), after receiving an operation on the "Set" button, the first device sends a launch instruction to the second device, and after receiving the launch instruction, the second device launches the interface 100 shown in FIG. 5C(f). It should be noted that, in this example, an example in which the two devices approach each other to automatically launch interfaces when the second device displays the interface 305 and the first device displays the lock screen interface is used. Optionally, the first device may alternatively display an interface other than the lock screen interface. The interface is, for example, a black screen, or any interface entered by the user in an unlocking case, for example, a home screen, a leftmost screen, or an interface of an application.

For example, the first interface is the interface 100 shown in FIG. 5C(f). When the second device displays the interface 100, if the two devices approach each other, a corresponding interface may be launched. For example, as shown in FIG. 5C(g), the first device displays a lock screen interface, and when the first device detects that the second device approaches (the second device is displaying the interface 100), there are two processing manners such as the foregoing manner A and manner B. It should be understood that, because the second device has displayed the interface 100, when detecting that the first device approaches, the second device continues to maintain the interface 100. It should be noted that, in this example, an example in which the two devices approach each other to automatically launch interfaces when the second device displays the interface 100 and the first device displays the lock screen interface is used. Optionally, the first device may alternatively display an interface other than the lock screen interface. The interface is, for example, a black screen, or any interface entered by the user in an unlocking case, for example, a home screen, a leftmost screen, or an interface of an application.

For example, the first interface is the interface 304 shown in FIG. 5C(d). When the second device displays the interface 304, if the two devices approach each other, a corresponding interface may be launched. For example, as shown in FIG. 5C(g), the first device displays a lock screen interface, and when the first device detects that the second device approaches (the second device is displaying the interface 304), there are two processing manners such as the foregoing manner A and manner B. When the second device displays the interface 304, if it is detected that the first device approaches, the interface 100 in FIG. 5C(f) may be directly launched. Alternatively, when a launch instruction sent by the first device is received, the interface 100 in FIG. 5C(f) is launched. For example, in FIG. 5C(g), after receiving an operation on the "Set" button, the first device sends a launch instruction to the second device, and after receiving the launch instruction, the second device launches the interface 100 shown in FIG. 5C(f). It should be noted that, in this example, an example in which the two devices approach each other to automatically launch interfaces when the second device displays the interface 304 and the first device displays the lock screen interface is used. Optionally, the first device may alternatively display an interface other than the lock screen interface. The interface is, for example, a black screen, or any interface entered by the user in an unlocking case, for example, a home screen, a leftmost screen, or an interface of an application.

**A third scenario is a data cloning scenario.**

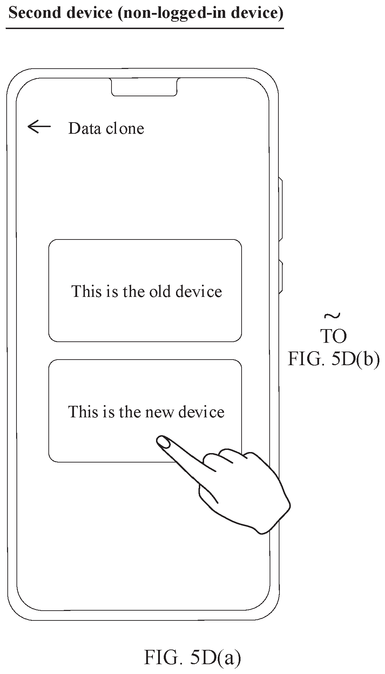

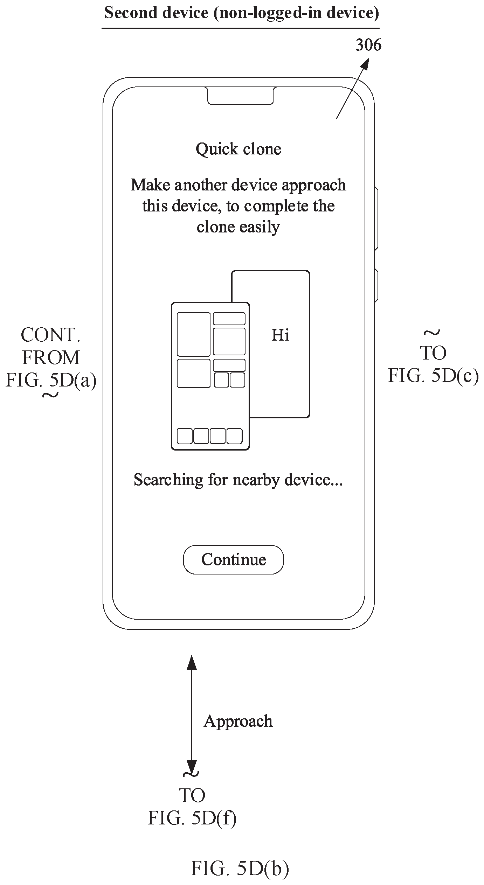

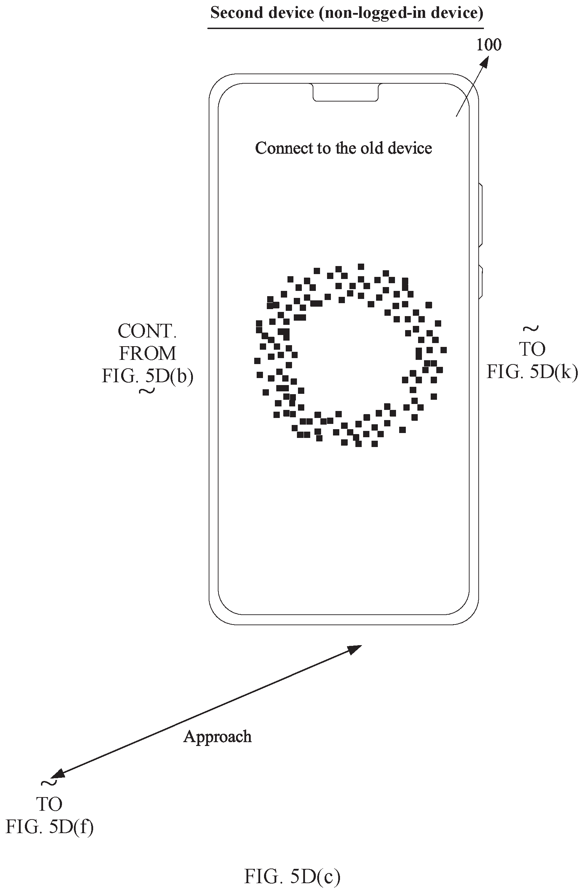

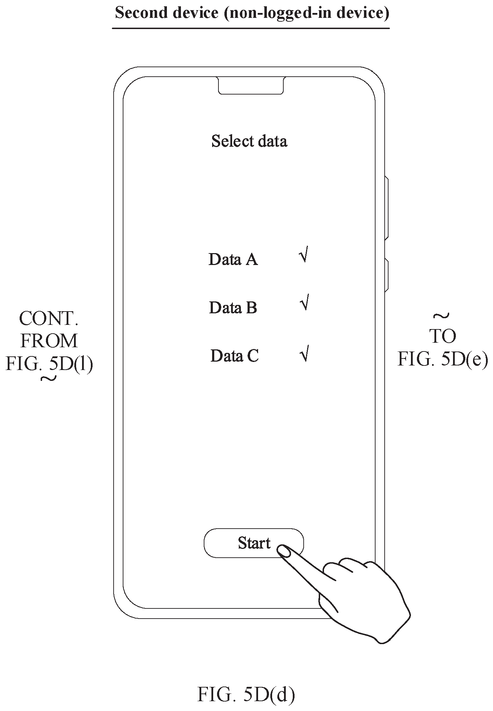

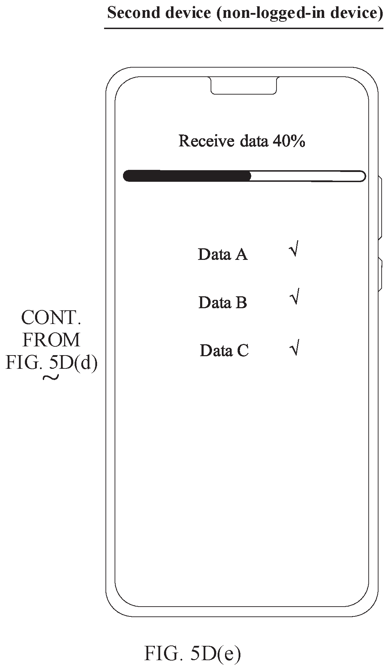

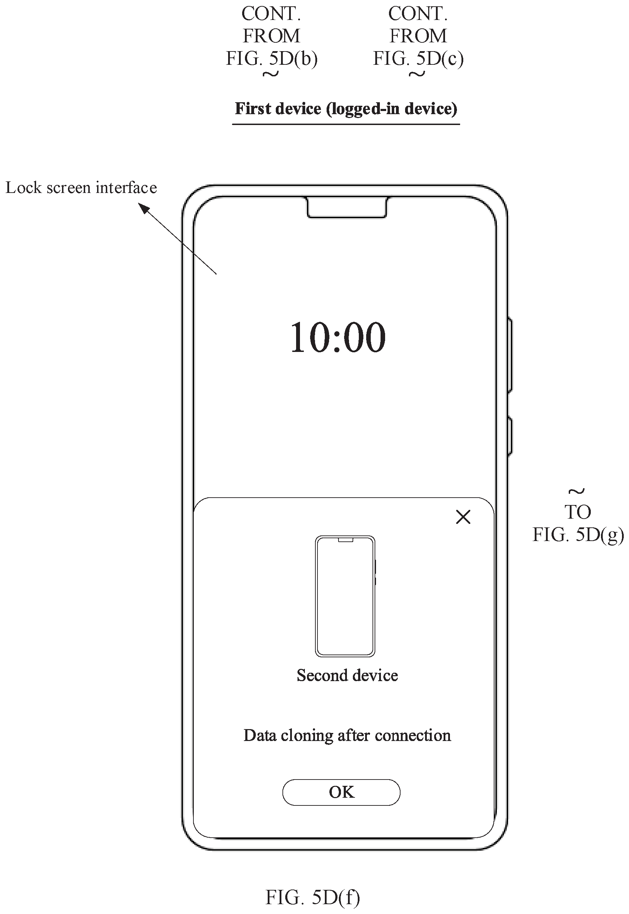

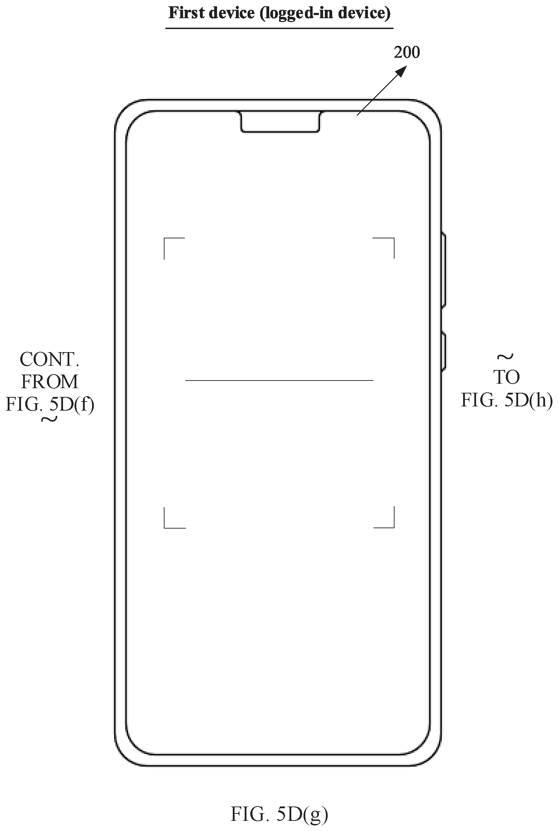

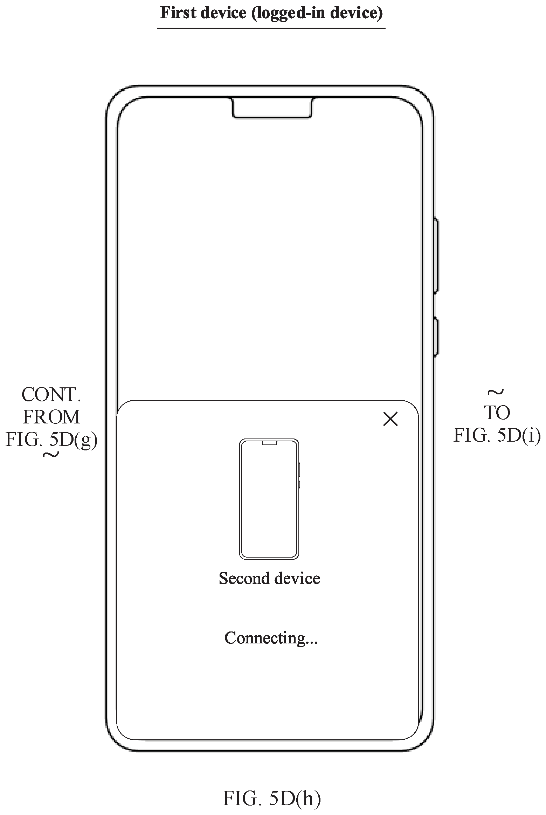

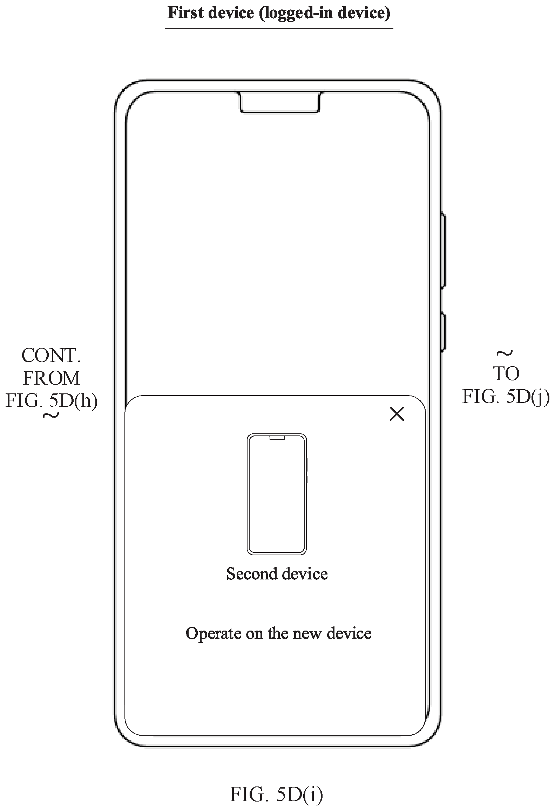

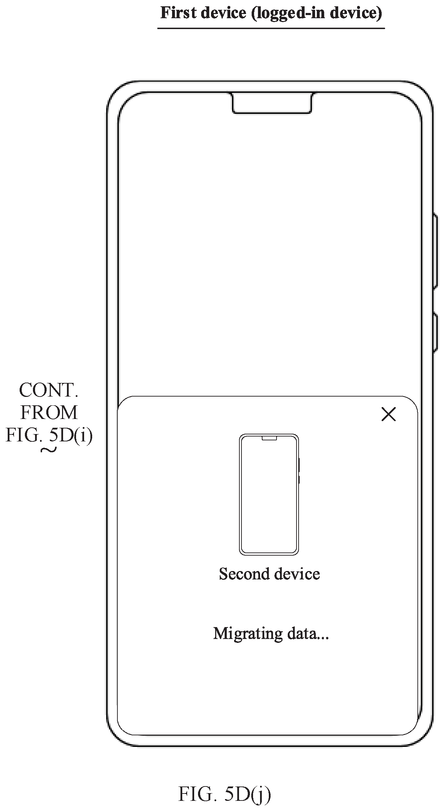

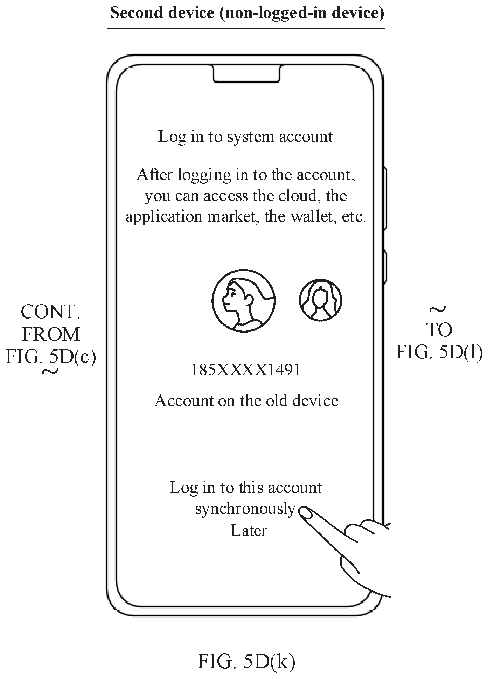

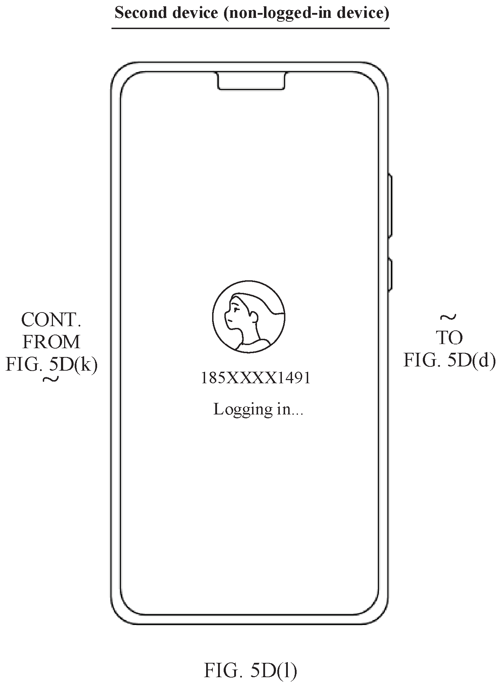

For example, as shown in FIG. 5D(a), the second device displays an interface, and the interface includes two options: "This is the old device" and "This is the new device". Optionally, a process in which the second device opens the interface shown in FIG. 5D(a) may include: home screen -> settings -> system and update -> data cloning. Alternatively, after installing, from an application market, an application used for data cloning (for example, "Huawei Phone Clone"), the second device opens the interface of the application shown in FIG. 5D(a). When receiving an operation on the "This is the new device" option, the second device may display an interface 306 shown in FIG. 5D(b), or directly display an interface 100 shown in FIG. 5D(c).

Optionally, the first interface may be the interface 306 in FIG. SD(b), the interface 100 in FIG. 5D(c), or another interface, and the another interface may be another interface that may be displayed after the second device receives the operation on the "This is the new device" option.

For example, the first interface is the interface 306 in FIG. 5D(b). When the second device displays the interface 306, if the two devices approach each other, a corresponding interface may be launched. For example, as shown in FIG. 5D(f), the first device displays a lock screen interface, and when the first device detects that the second device approaches (the second device is displaying the interface 306), there are two processing manners. **Manner A:** The first device automatically pops up a prompt box shown in FIG. 5D(f), where the prompt box includes device information of the second device and prompt information, and the prompt information is used to prompt to clone data to the second device. The prompt box further includes an "OK" button. When receiving an operation on the "OK" button, the first device may launch an interface 200 shown in FIG. 5D(g). Alternatively, when receiving an operation on the "OK" button, the first device may prompt the user to perform identity authentication (this process is not shown in FIG. 5D(a) to FIG. 5D(l)), to ensure that the operation is performed by an owner of the first device. For example, the first device may prompt the user to enter an unlocking fingerprint or an unlocking password. If verification succeeds, the interface 200 shown in FIG. 5D(g) is launched. **Manner B:** The first device directly launches an interface 200 in FIG. 5D(g), and does not need to pop up a prompt box in FIG. 5D(f), thereby reducing operations and simplifying a procedure. When the second device displays the interface 306, if it is detected that the first device approaches, the interface 100 in FIG. 5D(c) may be directly launched. Alternatively, when a launch instruction sent by the first device is received, the interface 100 in FIG. 5D(c) is launched. For example, in FIG. 5D(f), after receiving an operation on the "OK" button, the first device sends a launch instruction to the second device, and after receiving the launch instruction, the second device launches the interface 100 shown in FIG. 5D(c). It should be noted that, in this example, an example in which the two devices approach each other to automatically launch interfaces when the second device displays the interface 306 and the first device displays the lock screen interface is used. Optionally, the first device may alternatively display an interface other than the lock screen interface. The interface is, for example, a black screen, or any interface entered by the user in an unlocking case, for example, a home screen, a leftmost screen, or an interface of an application.

For example, the first interface is the interface 100 in FIG. 5D(c). When the second device displays the interface 100, if the two devices approach each other, a corresponding interface may be launched. For example, as shown in FIG. 5D(f), the first device displays a lock screen interface, and when the first device detects that the second device approaches (the second device is displaying the interface 100), there are two processing manners such as the foregoing manner A and manner B. It should be understood that, because the second device has displayed the interface 100, when detecting that the first device approaches, the second device continues to maintain the interface 100. It should be noted that, in this example, an example in which the two devices approach each other to automatically launch interfaces when the second device displays the interface 100 and the first device displays the lock screen interface is used. Optionally, the first device may alternatively display an interface other than the lock screen interface. The interface is, for example, a black screen, or any interface entered by the user in an unlocking case, for example, a home screen, a leftmost screen, or an interface of an application.

As shown in FIG. 5D(a) to FIG. 5D(l), after scanning a first graphic in the interface 100 of the second device by using a code scanning interface 200, the first device establishes a near field communication connection to the second device. For example, the first device may display an interface shown in FIG. 5D(h), and the interface displays prompt information: Connecting. After the connection succeeds, the first device displays an interface shown in FIG. 5D(i), and the interface includes prompt information: Operate on the new device (that is, the second device). The second device may display an interface for account login, for example, an interface used to log in to a system account (for example, a Huawei account). The interface may be an interface shown in FIG. 5D(k). The interface includes account information (for example, a mobile phone number) of the first device, further includes prompt information used to prompt that the second device logs in to the account of the first device, and further includes two buttons: "Log in to this account synchronously" and "Later".

In FIG. 5D(k), when receiving an operation on the "Log in to this account synchronously" button, the second device logs in to the account of the first device through the near field communication connection (an implementation principle is described below). For example, the second device may display an interface in FIG. 5D(l), and prompt information "Logging in" is displayed in the interface. After logging in to the account of the first device through the near field communication connection, the second device may obtain data of the account in a plurality of manners. Manner A: Because the second device has logged in to the account of the first device, the second device may obtain the data of the account from the cloud side. Manner B: The second device does not need to obtain the data from the cloud side, but receives the data of the account from the first device through the near field communication connection. Manner C: It is considered that the first device may upload some data to the cloud side, and the other data is not uploaded to the cloud side. Therefore, the second device may obtain the uploaded data from the cloud side, and may obtain, from the first device through the near field communication connection, the data that is not uploaded to the cloud side. The manner B is used as an example. The second device may obtain all or a part of the data of the account from the first device through the near field communication connection, where the part of the data may be data selected by the user. For example, in FIG. 5D(l), after successfully logging in to the account of the first device, the second device may display a data selection interface in FIG. 5D(d). The user may select data in the interface. When receiving an operation on a "Start" button, the second device sends a migration start instruction to the first device. After receiving the migration start instruction, the first device migrates data (the data selected by the user) to the second device through the near field communication connection. For example, the first device may display prompt information shown in FIG. 5D(j): Migrating data. The second device displays a migration progress shown in FIG. 5D(e).

In FIG. 5D(k), when the second device receives an operation on the "Later" button, because the second device does not need to log in to the account of the first device, the second device may directly display a data selection interface in FIG. 5D(d). The user may select data in the interface. When receiving an operation on a "Start" button, the second device sends a migration start instruction to the first device. After receiving the migration start instruction, the first device migrates data (the data selected by the user) to the second device through the near field communication connection. For example, the first device may display prompt information shown in FIG. 5D(j): Migrating data. The second device displays a migration progress shown in FIG. 5D(e).

The foregoing provides several examples of the first interface. It should be understood that the first interface may alternatively be another interface. Examples are not provided one by one in embodiments of this application. It should be noted that, in the first solution, when the second device displays the first interface, there may be no requirement on a display interface of the first device. Regardless of an interface (for example, a lock screen, a black screen, a home screen, a leftmost screen, or any other interface) displayed by the first device, an interface can be automatically launched upon approaching.

**In a second solution,** when the first device displays a second interface (which may also be referred to as a second specific interface), a corresponding interface is automatically launched when the two devices approach each other. When the first device does not display a second interface, no interface is launched when the two devices approach each other, thereby avoiding false triggering.

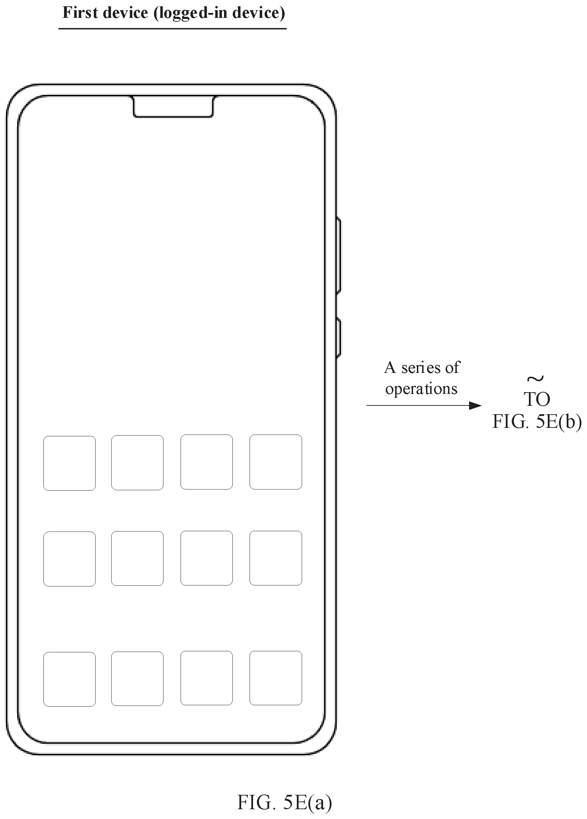

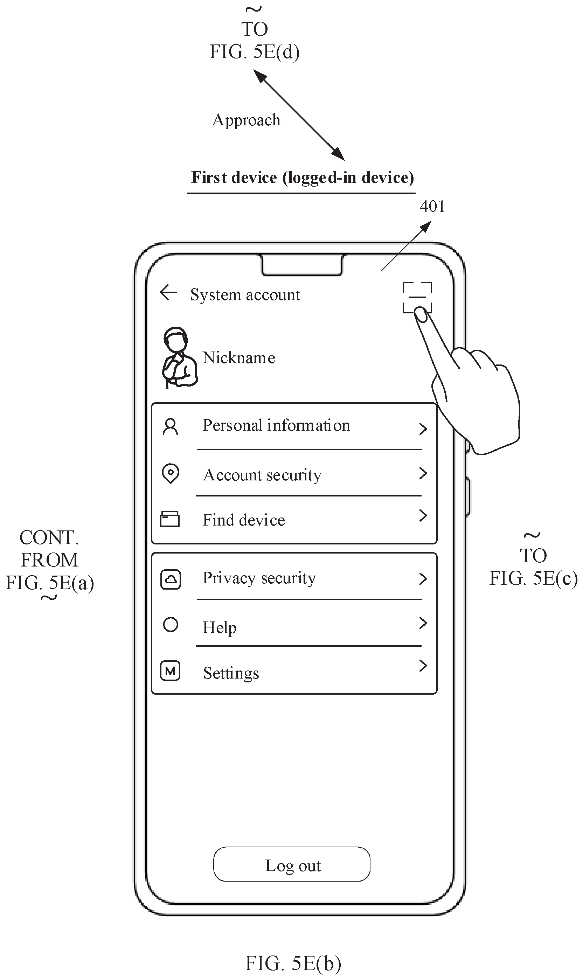

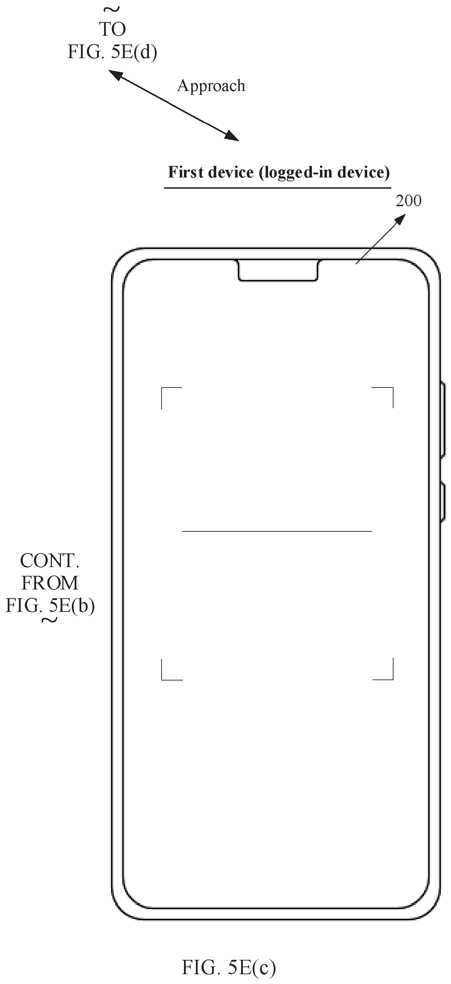

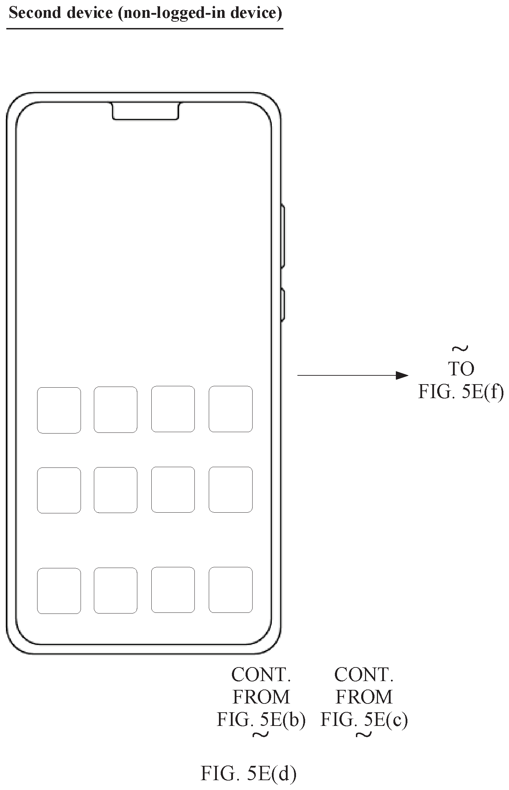

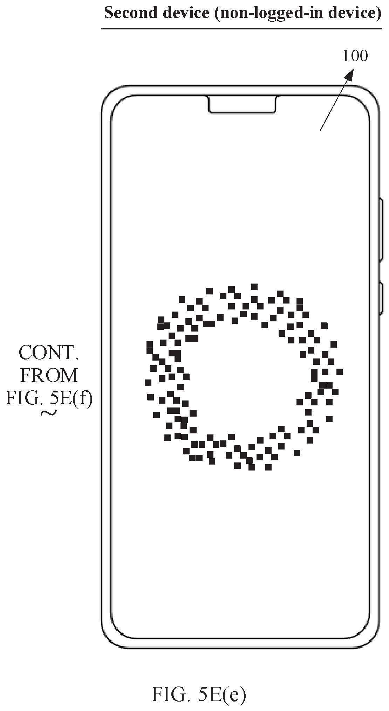

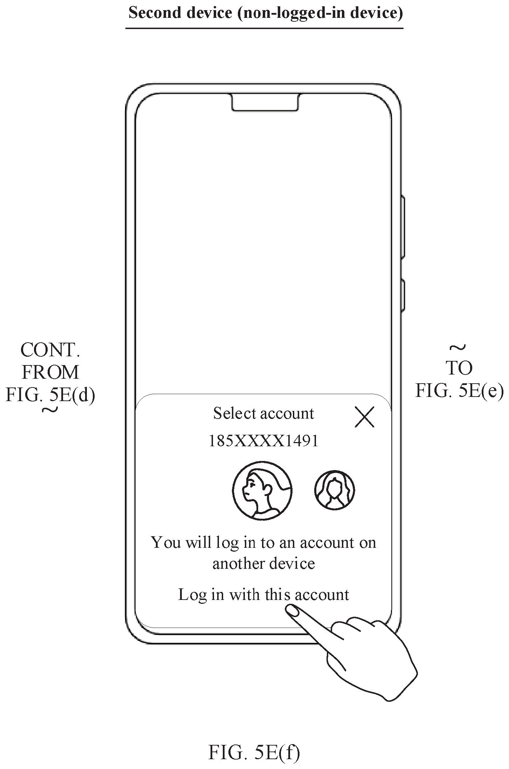

**The foregoing first scenario (scenario in which the second device logs in to an account) is used as an example.** The first device has logged in to the account, and the second interface may be any interface of an account center of the first device. For example, as shown in FIG. 5E(a), the first device displays a home screen. After receiving one or more user operations, the first device displays an interface 401 of the account center shown in FIG. 5E(b). A process in which the first device opens the interface 401 is not described in detail. The upper right corner of the interface 401 includes a scan button. When receiving an operation on the scan button, the first device displays an interface 200 shown in FIG. 5E(c).

Optionally, the second interface may be the interface 401 in FIG. 5E(b), the interface 200 in FIG. 5E(c), or another interface of the account center of the first device.

For example, the second interface is the interface 200 in FIG. 5E(c). When the first device displays the interface 200, if the two devices approach each other, a corresponding interface may be launched. For example, as shown in FIG. 5E(d), the second device displays the home screen, and when the second device detects that the first device approaches (the first device is displaying the interface 200), there may be two processing manners. Manner A: The second device pops up a prompt box shown in FIG. 5E(f), where the prompt box includes prompt information about whether to log in to the account of the first device, and further includes a "Log in with this account" button. When receiving a confirmation operation on the button, the second device launches an interface 100 shown in FIG. 5E(e). Manner B: The second device directly launches an interface 100 in FIG. 5E(e), and does not need to pop up a prompt box in FIG. 5E(f), thereby reducing operation procedures. It should be understood that, because the first device has displayed the interface 200, when the two devices approach each other, the first device continues to maintain the interface 200.

For example, the second interface is the interface 401 in FIG. 5E(b). When the first device displays the interface 401, if the two devices approach each other, a corresponding interface may be automatically launched. For example, the first device automatically launches the interface 200, as shown in FIG. 5E(c). As shown in FIG. 5E(d), the second device displays the home screen, and when detecting that the first device approaches (the first device is displaying the interface 401), the second device automatically launches the interface 100 in FIG. 5E(e).

It should be noted that, in the example in FIG. 5E(a) to FIG. 5E(f), the second device displays the home screen. Optionally, the second device may alternatively display a lock screen interface, a black screen, or another interface. The another interface may be any interface entered by the user after unlocking, for example, the home screen, a leftmost screen, or an application interface.

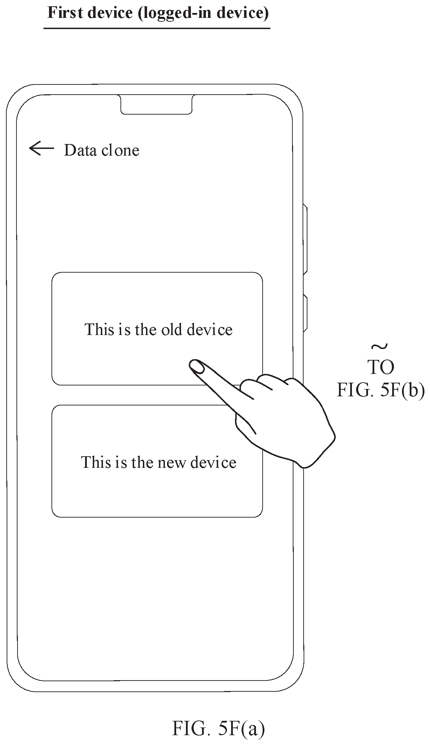

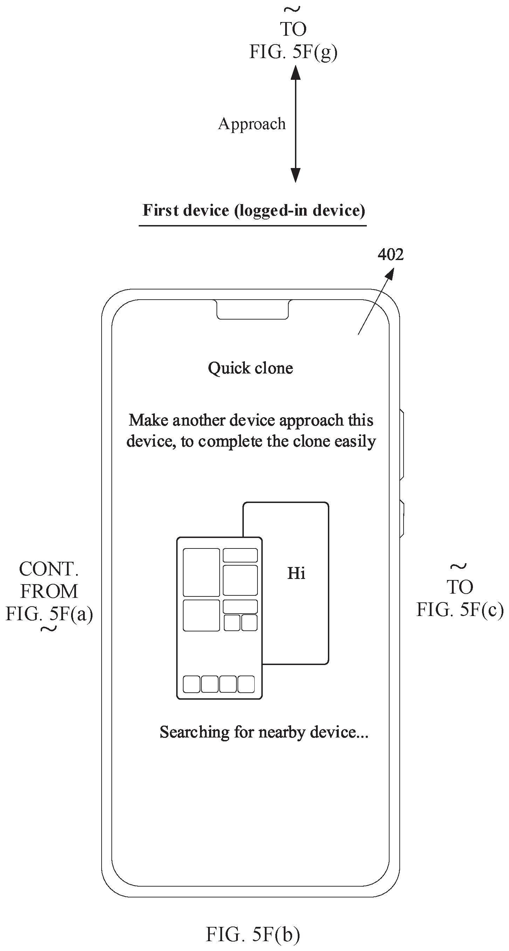

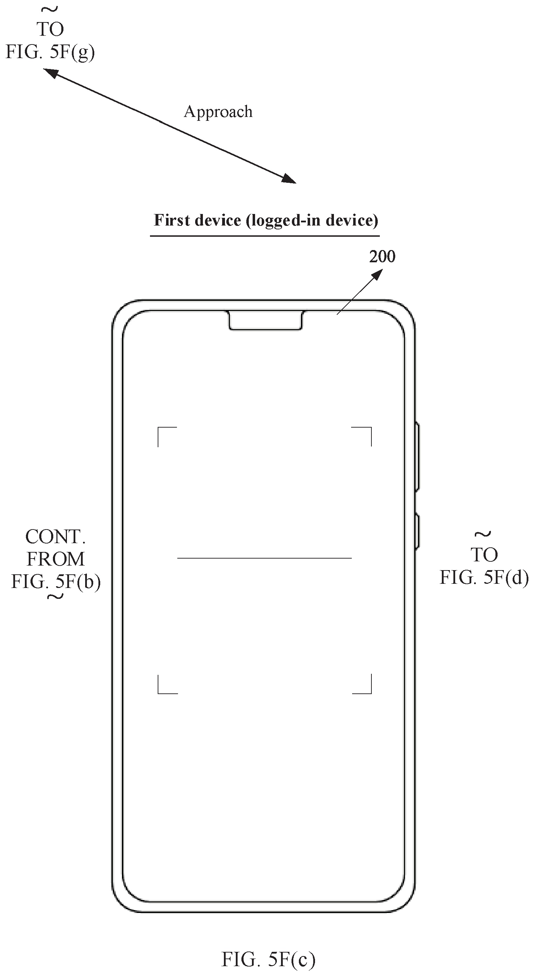

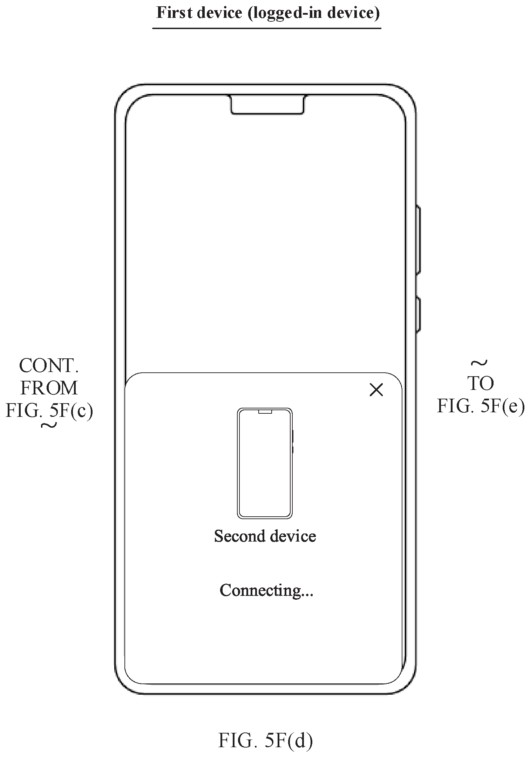

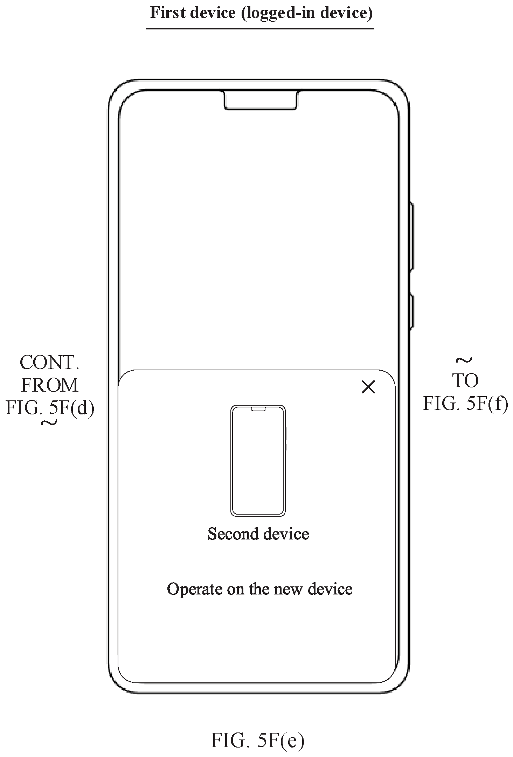

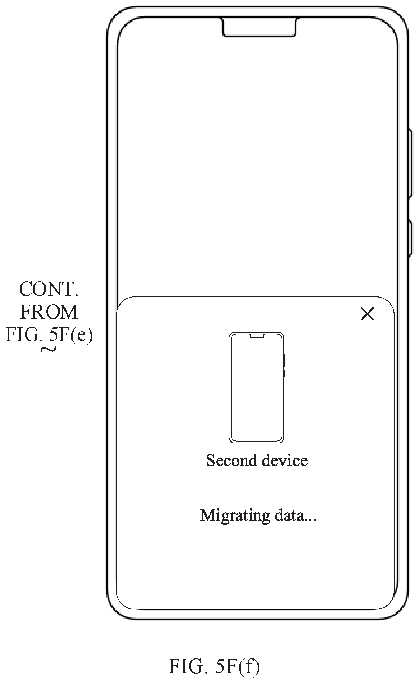

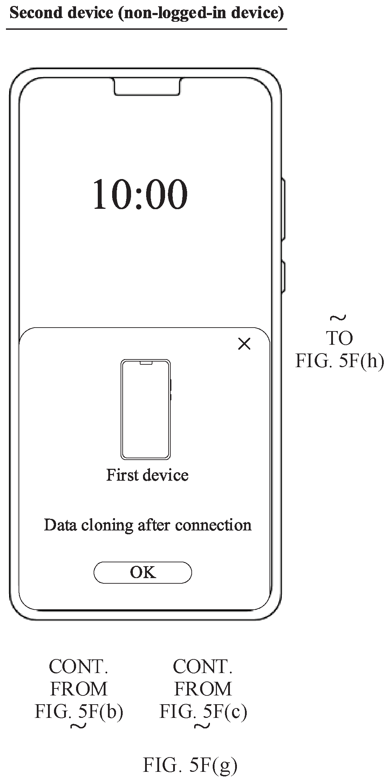

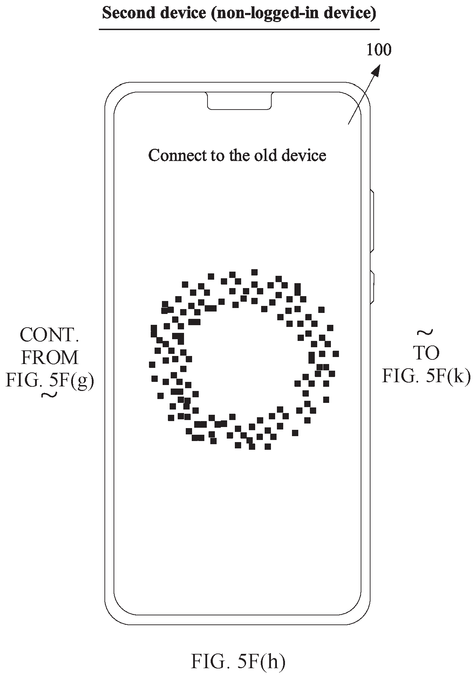

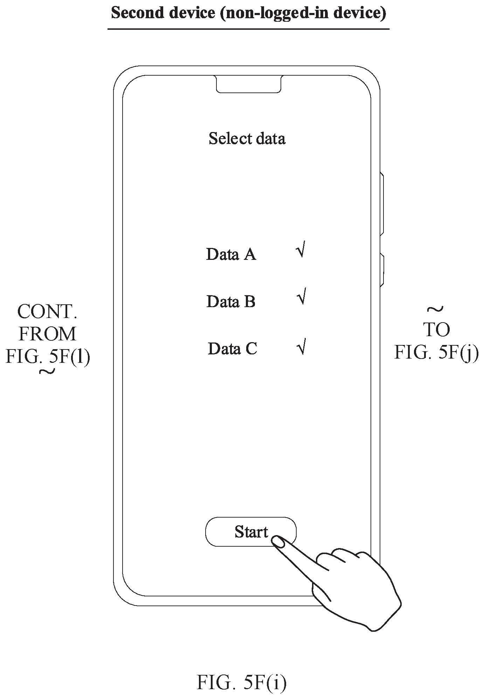

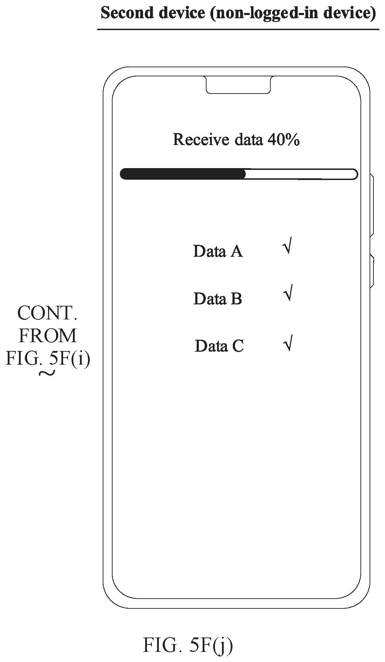

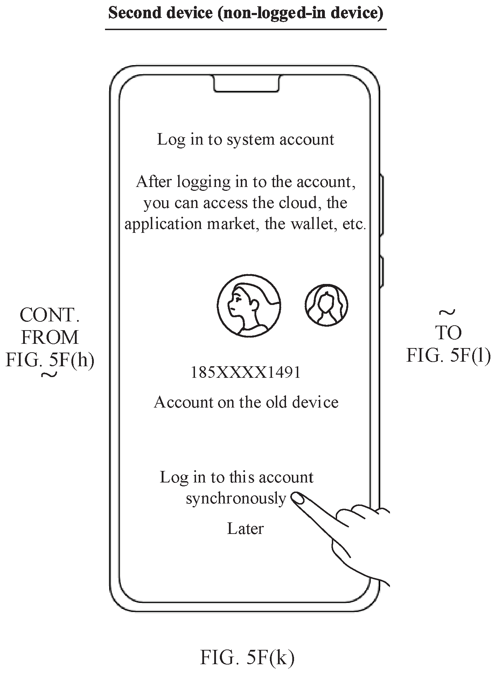

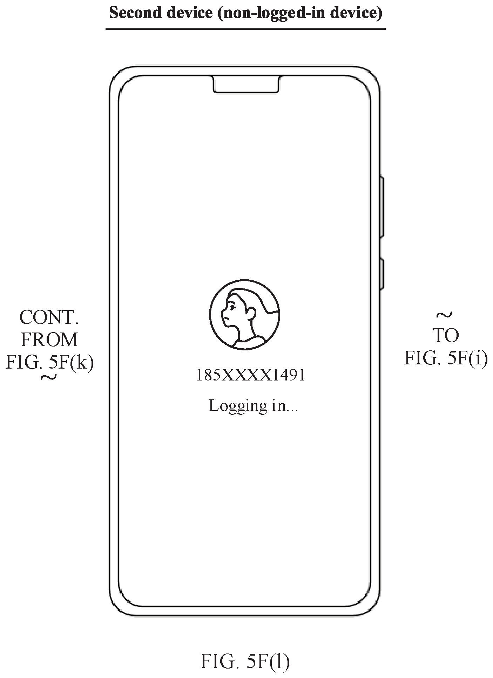

**The foregoing third scenario (data cloning scenario) is used as an example.** As shown in FIG. 5F(a), the first device displays an interface, and the interface includes two options: "This is the old device" and "This is the new device". Optionally, a process in which the first device opens the interface shown in FIG. 5F(a) may include: home screen -> settings -> system and update -> data cloning. Alternatively, after installing, from an application market, an application used for data cloning (for example, "Huawei Phone Clone"), the first device opens the interface of the application shown in FIG. 5F(a). When receiving an operation on the "This is the old device" option, the first device displays an interface 402 shown in FIG. 5F(b), or directly displays an interface 200 shown in FIG. 5F(c).

Optionally, the second interface may be the interface 402 in FIG. 5F(b), the interface 200 in FIG. 5F(c), or another interface, and the another interface may be another interface that may be displayed by the first device in response to the operation on "This is the old device".

For example, the second interface is the interface 402 in FIG. 5F(b). When the first device displays the interface 402, if the two devices approach each other, a corresponding interface may be automatically launched. For example, as shown in FIG. 5F(g), the second device displays a lock screen interface, and when the second device detects that the first device approaches (the first device is displaying the interface 402), there are two processing manners. **Manner A:** The second device automatically pops up a prompt box shown in FIG. 5F(g), where the prompt box includes device information of the first device and prompt information, and the prompt information is used to prompt to clone data of the first device to the second device. The prompt box further includes an "OK" button. When receiving an operation on the "OK" button, the second device may launch an interface 100 shown in FIG. 5F(h). Alternatively, when receiving an operation on the "OK" button, the second device may prompt the user to perform identity authentication (this process is not shown in FIG. 5F(a) to FIG. 5F(l)), to ensure that the operation is performed by an owner of the second device. For example, the second device may prompt the user to enter an unlocking fingerprint or an unlocking password. If verification succeeds, the interface 100 shown in FIG. 5F(h) is launched. **Manner B:** The second device directly launches an interface 100 in FIG. 5F(h), and does not need to pop up a prompt box in FIG. 5F(g), thereby reducing operations and simplifying a procedure. When the first device displays the interface 402, if it is detected that the second device approaches, the interface 200 in FIG. 5F(c) may be directly launched. Alternatively, when a launch instruction sent by the second device is received, the interface 200 in FIG. 5F(c) is launched. For example, in FIG. 5F(g), after receiving an operation on the "OK" button, the second device sends a launch instruction to the first device, and after receiving the launch instruction, the first device launches the interface 200 shown in FIG. 5F(c). It should be noted that, in this example, an example in which the two devices approach each other to automatically launch interfaces when the first device displays the interface 402 and the second device displays the lock screen interface is used. Optionally, the second device may alternatively display an interface other than the lock screen interface. The interface is, for example, a black screen, or any interface entered by the user in an unlocking case, for example, a home screen, a leftmost screen, or an interface of an application.

For example, the second interface is the interface 200 in FIG. 5F(c). When the first device displays the interface 200, if the two devices approach each other, a corresponding interface may be automatically launched. For example, as shown in FIG. 5F(g), the second device displays a lock screen interface, and when the second device detects that the first device approaches (the first device is displaying the interface 200), there are two processing manners such as the foregoing manner A and manner B. Because the first device has displayed the interface 200, when the two devices approach each other, the first device continues to maintain the interface 200. It should be noted that, in this example, an example in which the two devices approach each other to automatically launch interfaces when the first device displays the interface 200 and the second device displays the lock screen interface is used. Optionally, the second device may alternatively display an interface other than the lock screen interface. The interface is, for example, a black screen, or any interface entered by the user in an unlocking case, for example, a home screen, a leftmost screen, or an interface of an application.

As shown in FIG. 5F(a) to FIG. 5F(l), after scanning a first graphic in the interface 100 of the second device by using a code scanning interface 200, the first device may establish a near field communication connection. For example, the first device may display an interface shown in FIG. 5F(d), and the interface displays prompt information: Connecting. After the connection succeeds, the first device displays an interface shown in FIG. 5F(e), and the interface includes prompt information: Operate on the new device (that is, the second device). The second device may display an interface for account login, for example, an interface used to log in to a system account (for example, a Huawei account). The interface may be an interface shown in FIG. 5F(k). The interface includes account information (for example, a mobile phone number) of the first device, further includes prompt information used to prompt that the second device logs in to the account of the first device, and further includes two buttons: "Log in to this account synchronously" and "Later". When receiving an operation on the "Log in to this account synchronously" button, the second device logs in to the account of the first device through the near field communication connection (an implementation principle is described below). For example, the second device may display an interface in FIG. 5F(l), and prompt information "Logging in" is displayed in the interface. After logging in to the account of the first device through the near field communication connection, the second device may obtain data of the account, for example, may obtain the data in any one of the foregoing manner A to manner C. The manner B is used as an example. After successfully logging in to the account of the first device, the second device may display a data selection interface in FIG. 5F(i), and the user may select data in the interface. When receiving an operation on a "Start" button, the second device sends a migration start instruction to the first device. After receiving the migration start instruction, the first device migrates data (the data selected by the user) to the second device through the near field communication connection. For example, the first device may display prompt information shown in FIG. 5F(f): Migrating data. The second device displays a migration progress shown in FIG. 5F(j). In FIG. 5F(k), when the second device receives an operation on the "Later" button, because the second device does not need to log in to the account of the first device, the second device may directly display a data selection interface in FIG. 5F(i), and then perform data migration. A principle is the same as that described above, and details are not described again.

The foregoing provides several examples of the second interface. It should be understood that the second interface may alternatively be another interface. Examples are not provided one by one in embodiments of this application. It should be noted that, in the second solution, when the first device displays the second interface, there may be no requirement on a display interface of the second device. Regardless of an interface (for example, a lock screen interface, a black screen, a home screen, a leftmost screen, or any other interface) displayed by the second device, an interface can be automatically launched upon approaching.

**In a third solution,** when the two devices approach each other, whether a condition is met is determined. If the condition is met, a corresponding interface is launched. If the condition is not met, no interface is launched. In this solution, condition determining may be performed by either of the two devices; or the two devices may separately perform condition determining. As described above, that the two devices approach each other to automatically launch an interface may include three manners: a manner A to a manner C. If the manner A is used, the second device performs condition determining. If the manner B is used, the first device performs condition determining. If the manner C is used, the two devices separately perform condition determining. When the two devices separately perform condition determining, determining conditions corresponding to the devices may be the same or different. The following uses the manner A as an example for description. To be specific, when detecting that the first device approaches, the second device determines whether the condition is met, and if the condition is met, automatically displays an interface 100, and triggers the first device to display an interface 200. Optionally, the condition may include at least one of the following:
Condition a: The second operating system of the second device is the same as the first operating system of the first device, for example, both are Harmony systems.
Condition b: The second operating system of the second device is not logged in to by using any account.
Condition c: The first operating system of the first device is currently logged in to by using an account. In this manner, the second device needs to determine whether the first operating system of the first device is logged in to by using an account. In a possible manner, the second device sends a query request (for example, through Bluetooth) to the first device, to request to query whether the first operating system of the first device is logged in to by using an account. After receiving a query response returned by the first device, the second device determines, based on the query response, whether the first operating system of the first device is logged in to by using an account. Optionally, the query response may include account information of a current login account of the first operating system of the first device, for example, an account name or a profile picture. The account name may be a mobile phone number or an email address for registering the account, or certainly may be a nickname or the like set by the user.
Condition d: The second operating system of the second device is not logged in to by using a first account, where the first account is a current login account of the first operating system of the first device. In this manner, the second device needs to determine the current login account (that is, the first account) of the first operating system of the first device, and then determine whether the second operating system of the second device is logged in to by using the account. For a manner in which the second device determines the current login account of the first operating system of the first device, refer to related descriptions of the condition c. Details are not described herein again.
Condition e: The second device outputs prompt information used to prompt whether to log in to a first account of the first device, and the second device receives a confirmation instruction, where the confirmation instruction is used to confirm login of a device account of the first device. Optionally, the first device may also output prompt information in response to approaching of the second device, to prompt whether to authorize the second device to log in to the first account. If the first device receives a consent instruction, the first device launches a code scanning interface. In this manner, after the two devices approach each other, the interface is launched only when the user gives consent. This avoids that the interface is directly launched when the two devices approach each other, thereby avoiding affecting user experience.

The foregoing three solutions can be used independently or in combination. Using an example in which the first solution and the second solution are used in combination, if the second device displays the first interface, and the first device displays the second interface, a corresponding interface is automatically launched when the two devices approach each other. The foregoing lists three solutions, and all the solutions can avoid false triggering. It should be understood that there may further be another solution for preventing false triggering. Examples are not provided one by one in embodiments of this application.

In the foregoing description, an interface may be automatically launched when the two devices approach each other, thereby simplifying user operation steps. However, in actual use, the user may not know that the two devices have a function of automatically launching an interface upon approaching, and therefore the function is not well used. To provide guidance for the user, a possible solution is that the first device and/or the second device may output guidance information to guide the user to perform an operation, thereby improving user experience.

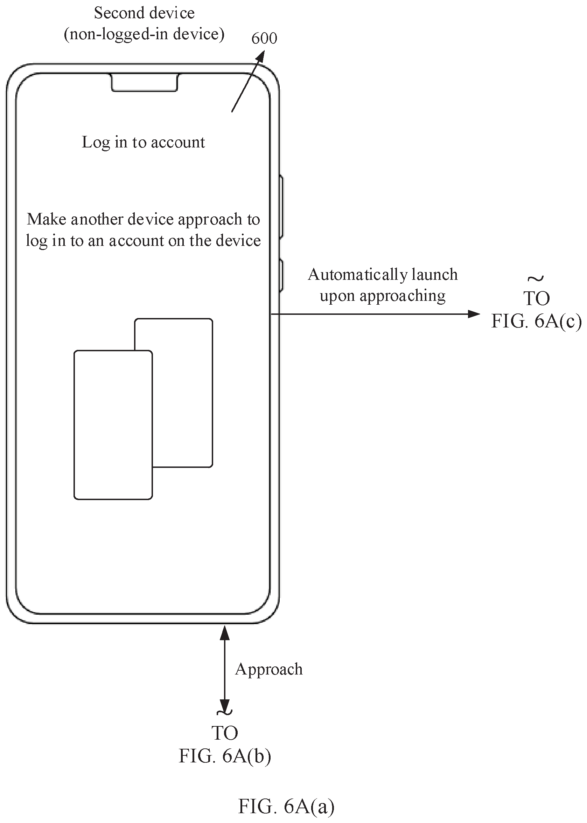

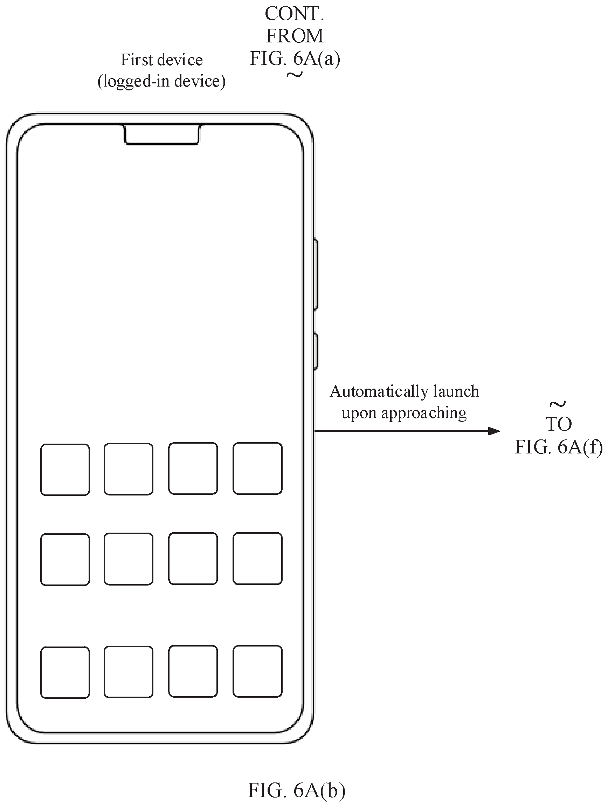

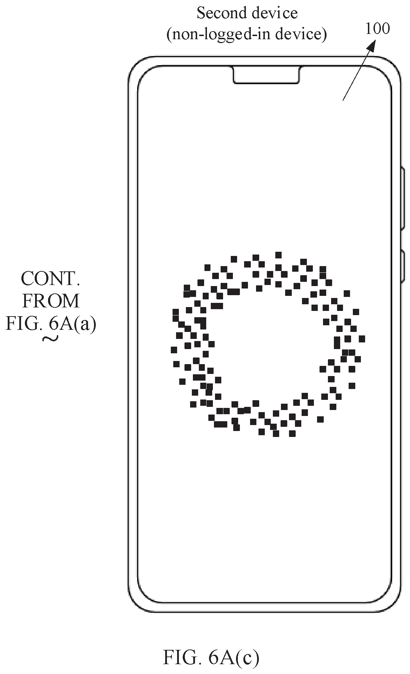

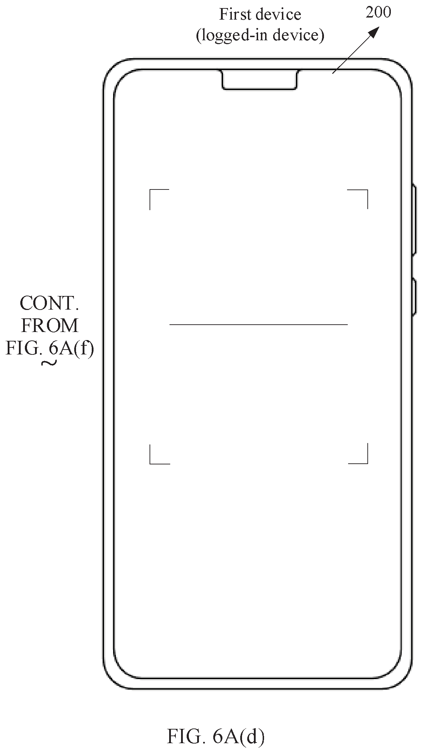

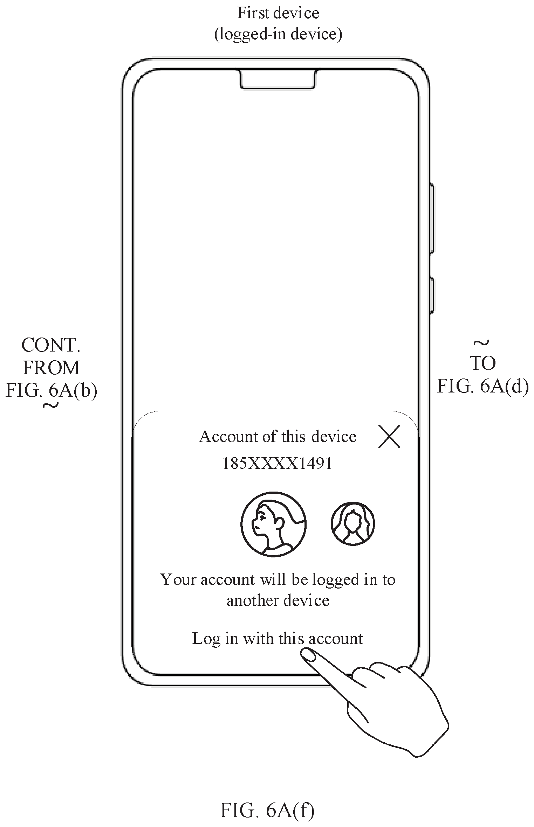

For example, the second device outputs guidance information (which may be referred to as first guidance information). As shown in FIG. 6A(a), the second device displays an interface 600, and the interface 600 includes guidance information: Make another device approach to log in to an account on the device. The user makes the first device approach the second device based on the guidance information. As shown in FIG. 6A(b), the first device approaches the second device when displaying a home screen or an interface other than the home screen (the interface may include, for example, a lock screen, a black screen, a leftmost screen, or any interface entered after unlocking). When the first device detects that the second device approaches, there are two processing manners. Manner A: The first device pops up a prompt box shown in FIG. 6A(f), where the prompt box includes account information (for example, a mobile phone number) of the first device, and further includes prompt information used to prompt that the account of the first device is to be logged in on the second device. The prompt box further includes a "Log in with this account" button. When receiving an operation on the "Log in with this account" button, the first device launches an interface 200 in FIG. 6A(d). Manner B: The first device directly launches an interface 200 shown in FIG. 6A(d). When the second device detects that the first device approaches, the interface 100 in FIG. 6A(c) may be directly launched. Alternatively, when a launch instruction sent by the first device is received, the interface 100 in FIG. 6A(c) is launched. For example, in FIG. 6A(f), after receiving an operation on the "Log in with this account" button, the first device sends a launch instruction to the second device, and after receiving the launch instruction, the second device launches the interface 100 shown in FIG. 6A(c). It should be noted that, in FIG. 6A(a), a manner in which the second device opens the interface 600 is not limited in embodiments of this application. For example, the interface 300 in FIG. 5B(b) includes a button (for example, a near-field login button), and the interface 600 is opened when the button is triggered.

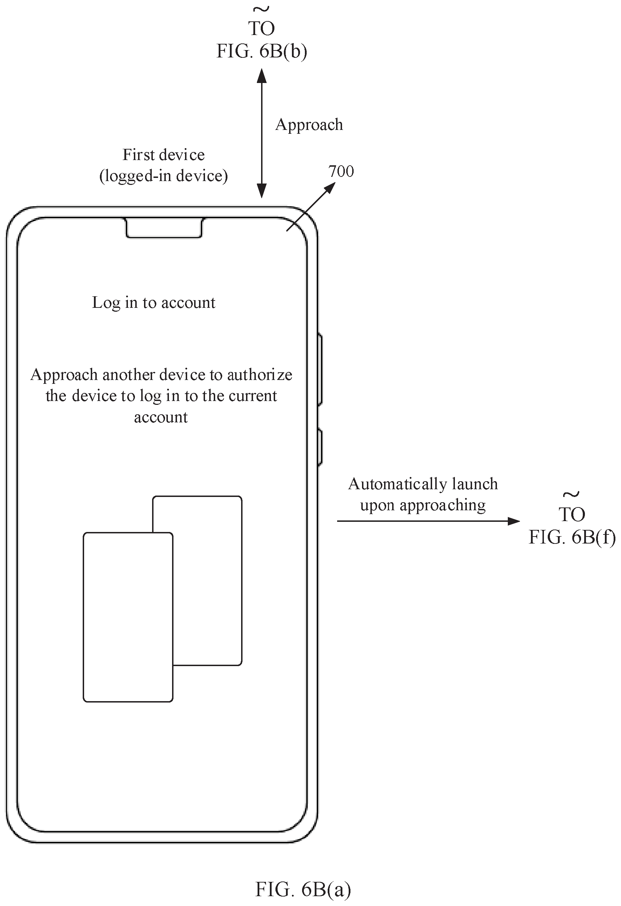

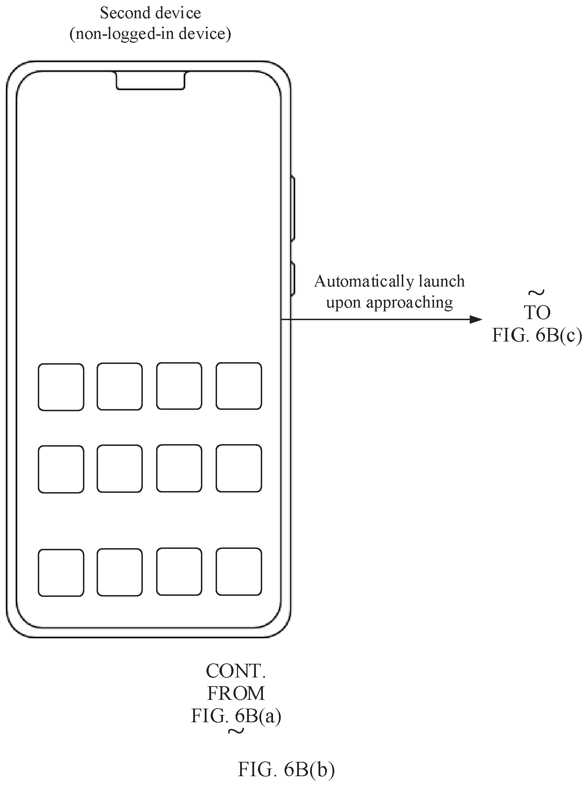

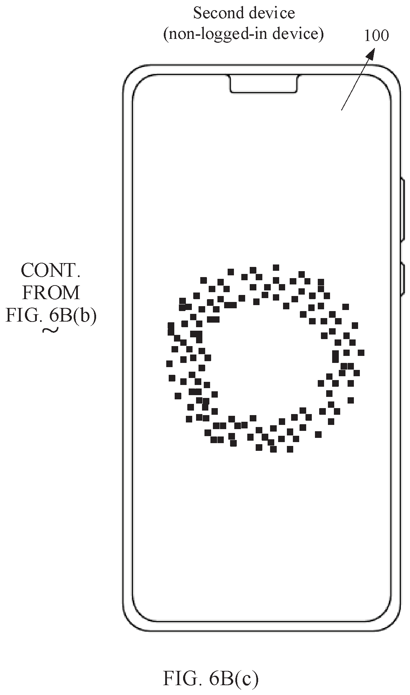

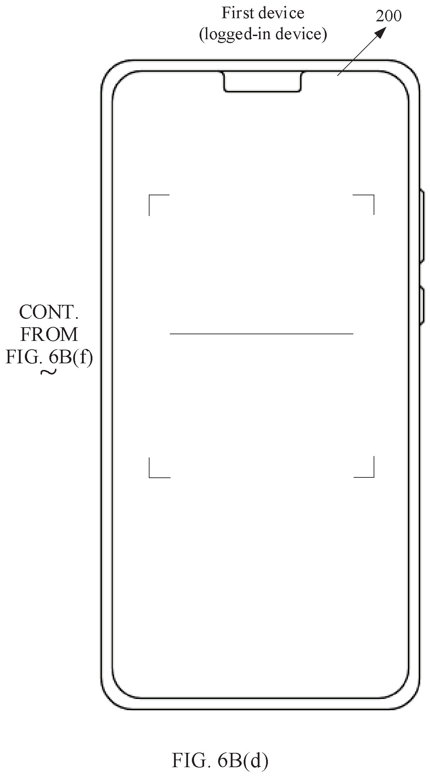

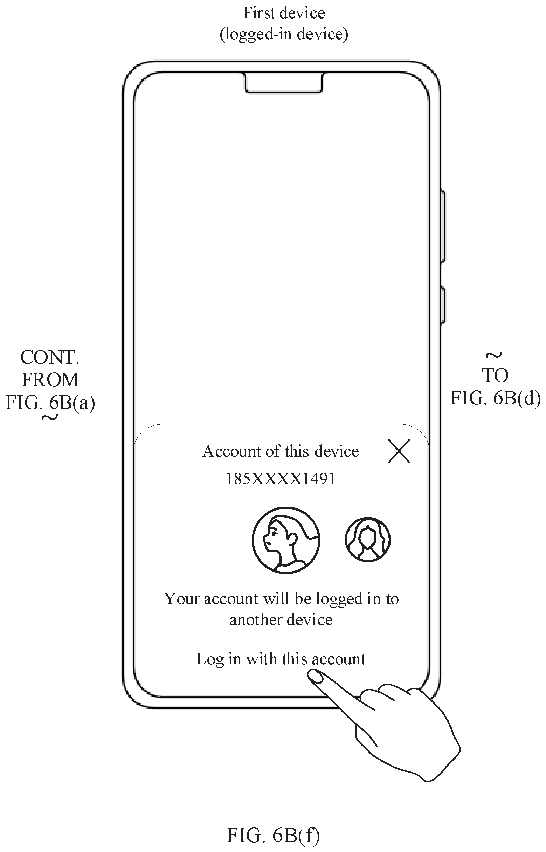

For example, the first device outputs guidance information (which may be referred to as second guidance information). As shown in FIG. 6B(a), the first device displays an interface 700, and the interface 700 includes guidance information: Approach another device to authorize the device to log in to the current account. The user makes the second device approach the first device based on the guidance information. As shown in FIG. 6B(b), the second device approaches the first device when displaying a home screen or an interface other than the home screen (the interface may include, for example, a lock screen, a black screen, a leftmost screen, or any interface entered after unlocking). When the first device detects that the second device approaches, there are two processing manners. Manner A: The first device pops up a prompt box shown in FIG. 6B(f), where the prompt box includes account information (for example, a mobile phone number) of the first device, and further includes prompt information used to prompt that the account of the first device is to be logged in on the second device. The prompt box further includes a "Log in with this account" button. When receiving an operation on the "Log in with this account" button, the first device launches an interface 200 in FIG. 6B(d). Manner B: The first device directly launches an interface 200 shown in FIG. 6B(d). When the second device detects that the first device approaches, the interface 100 in FIG. 6B(c) may be directly launched. Alternatively, when a launch instruction sent by the first device is received, the interface 100 in FIG. 6B(c) is launched. For example, in FIG. 6B(f), after receiving an operation on the "Log in with this account" button, the first device sends a launch instruction to the second device, and after receiving the launch instruction, the second device launches the interface 100 shown in FIG. 6B(c). It should be noted that, in FIG. 6(a)B, a manner in which the first device opens the interface 700 is not limited in embodiments of this application.

In the foregoing solution, if the first operating system of the first device has been logged in to by using the first account, a corresponding interface is automatically launched when the first device and the second device approach each other, and then the second operating system of the second device is logged in to by using the first account in a manner of login through code scanning. In a possible case, the first operating system of the first device corresponds to a plurality of accounts. For example, the plurality of accounts are accounts that have been used to log in to the first operating system, and the first account is a current login account in the plurality of accounts. Alternatively, the plurality of accounts have an association relationship. For example, the plurality of accounts are family association accounts. For example, the first account is an adult account, and another account is a child account corresponding to the adult account.

When the first operation of the first device has a plurality of accounts, the user may select one of the accounts, so that the second operating system of the second device is logged in to by using the account selected by the user. Optionally, when selecting an account, the user may select the account on the first device, or may select the account on the second device.

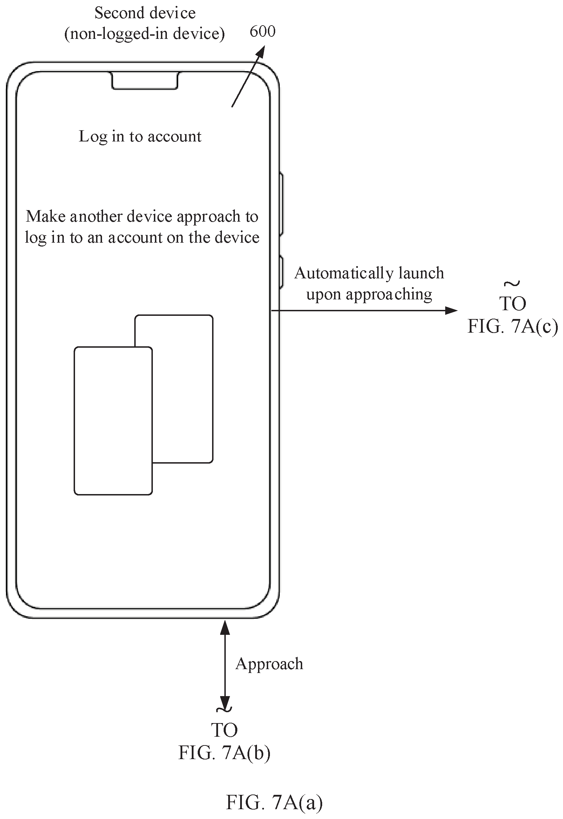

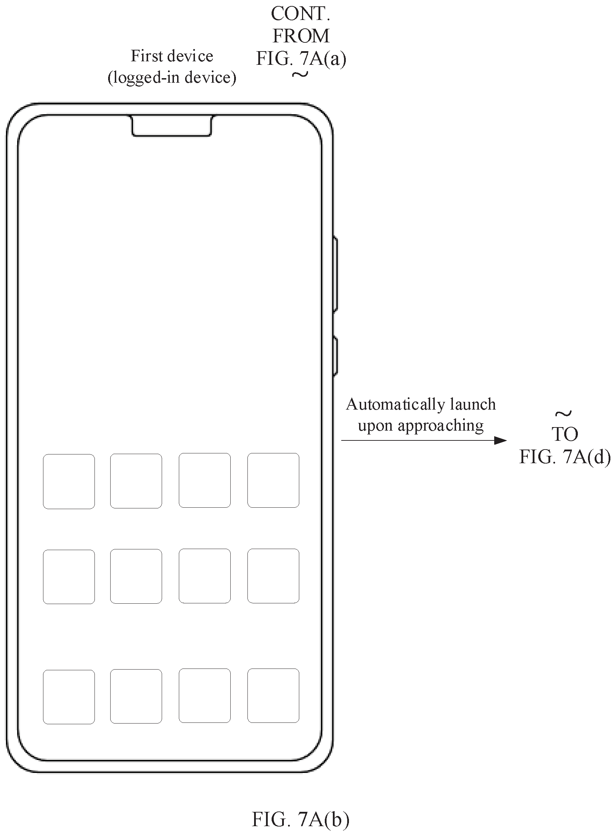

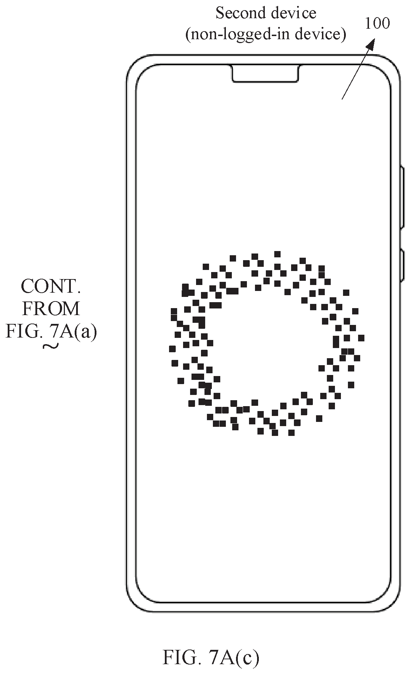

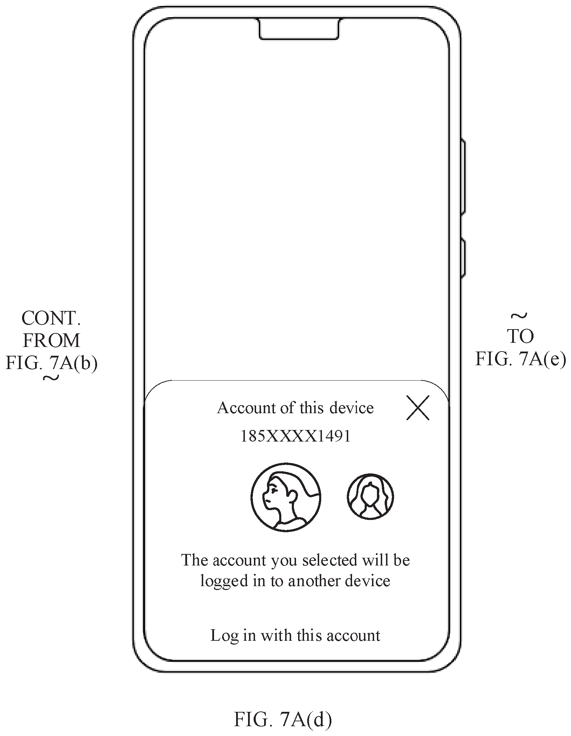

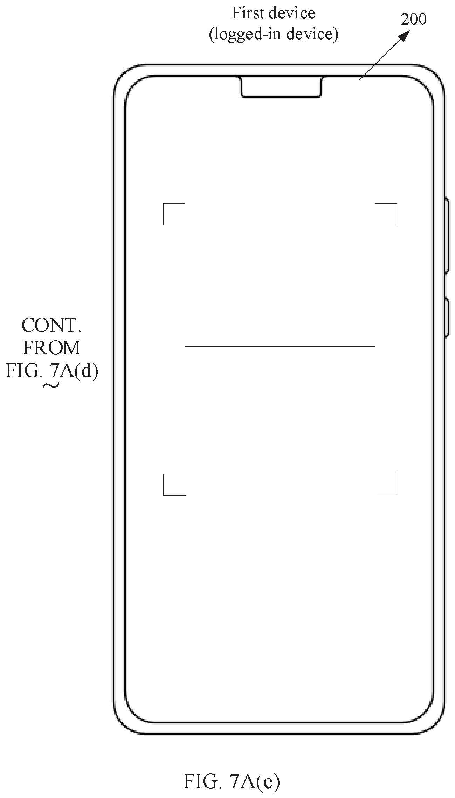

For example, selection is performed on the first device. For example, in FIG. 7A(a), the second device displays an interface 600, or may display another interface or a black screen. As shown in FIG. 7A(b), the first device displays a home screen, an interface other than the home screen, or a black screen. When the first device approaches the second device, the second device automatically launches an interface 100 in FIG. 7A(c). The first device automatically launches an interface in FIG. 7A(d), and the interface includes identifiers (for example, mobile phone numbers or profile pictures) of a plurality of accounts. The user may select an account, for example, select the account by sliding left or right. When receiving an operation on the "Log in with this account" button, the first device displays an interface 200 in FIG. 7A(e). In this case, when scanning a first graphic in the interface 100 of the second device by using the interface 200, the first device may authorize the second device to log in to the account selected by the user.

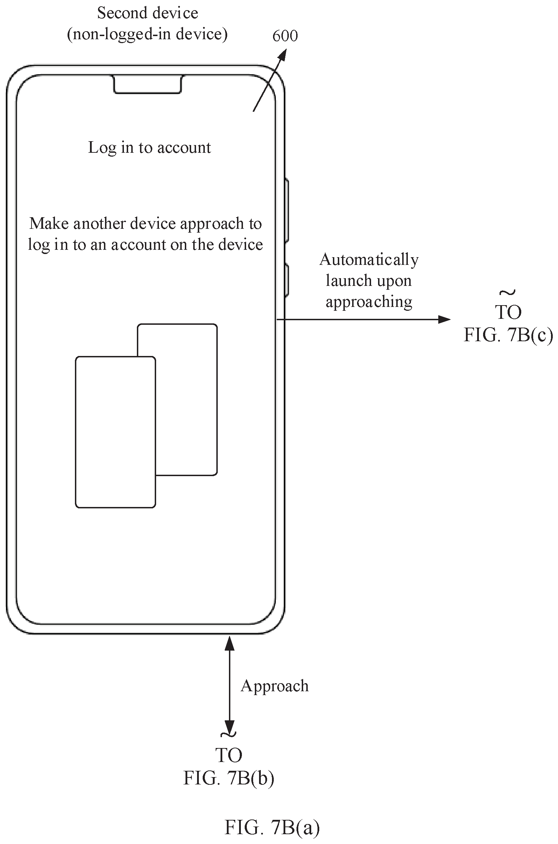

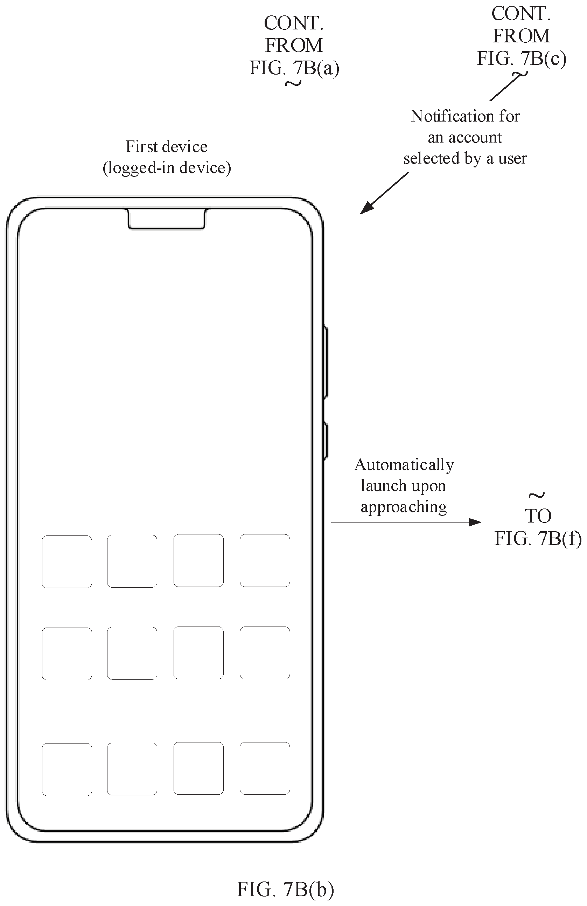

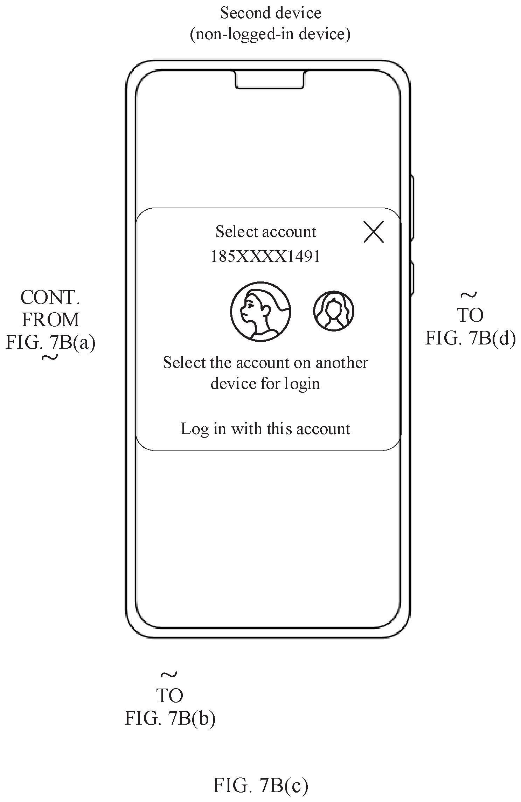

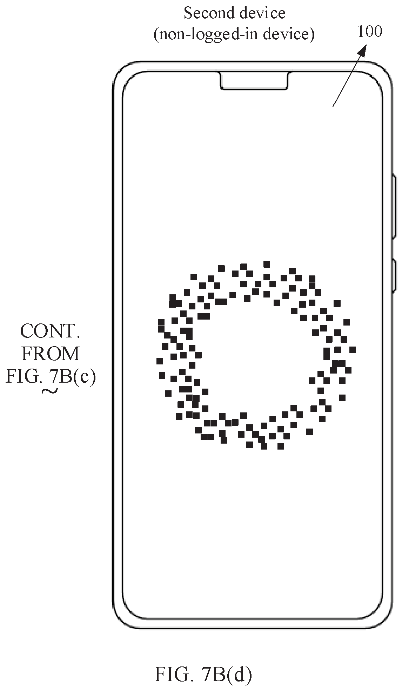

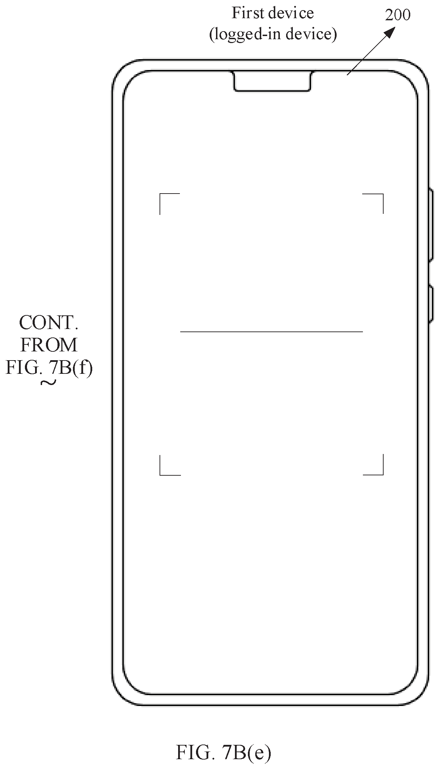

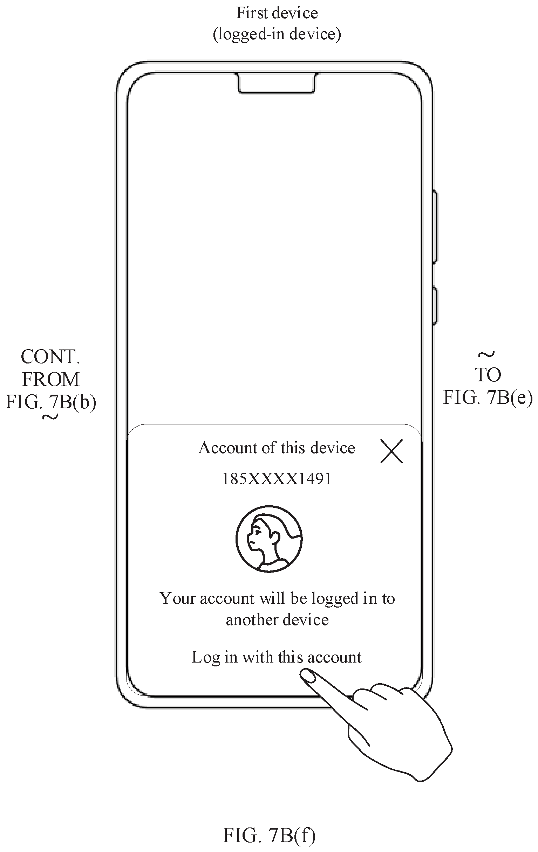

Selection on the second device is used as an example. For example, in FIG. 7B(a), the second device displays an interface 600, or may display another interface. The another interface may be a lock screen, a black screen, a home screen, a leftmost screen, or any interface entered after unlocking. As shown in FIG. 7B(b), the first device displays a home screen or an interface other than the home screen. The interface may be a lock screen, a black screen, a leftmost screen, or any interface entered after unlocking. When the first device approaches the second device, the second device automatically launches an interface shown in FIG. 7B(c). The interface includes identifiers of a plurality of accounts of the first device, and the user may select an account. In this manner, the second device needs to determine which accounts correspond to the first device. For example, the second device may query, by broadcasting query information through Bluetooth, which accounts correspond to the first device. When receiving an operation on the "Log in with this account" button, the second device displays an interface 100 in FIG. 7B(d). The second device may notify the first device of the account selected by the user. After the first device determines the account selected by the user, there may be two manners. Manner A: The first device pops up a prompt box in FIG. 7B(f), where the prompt box includes information (for example, a mobile phone number) about the account selected by the user, and further includes prompt information used to prompt that the account is to be logged in on the second device. The prompt box further includes a "Log in with this account" button. When receiving an operation on the "Log in with this account" button, the first device displays an interface 200 in FIG. 7B(e). Manner B: The first device directly displays an interface 200 in FIG. 7B(e). In this case, when scanning a first graphic in the interface 100 of the second device by using the interface 200, the first device may authorize the second device to log in to the account selected by the user.

The foregoing embodiments describe a process in which the second device opens the interface 100 and the first device opens the interface 200. It should be understood that after the second device opens the interface 100 and the first device opens the interface 200, login through code scanning may be performed.

**The following continues to describe an implementation principle of login through code scanning with reference to the accompanying drawings.**

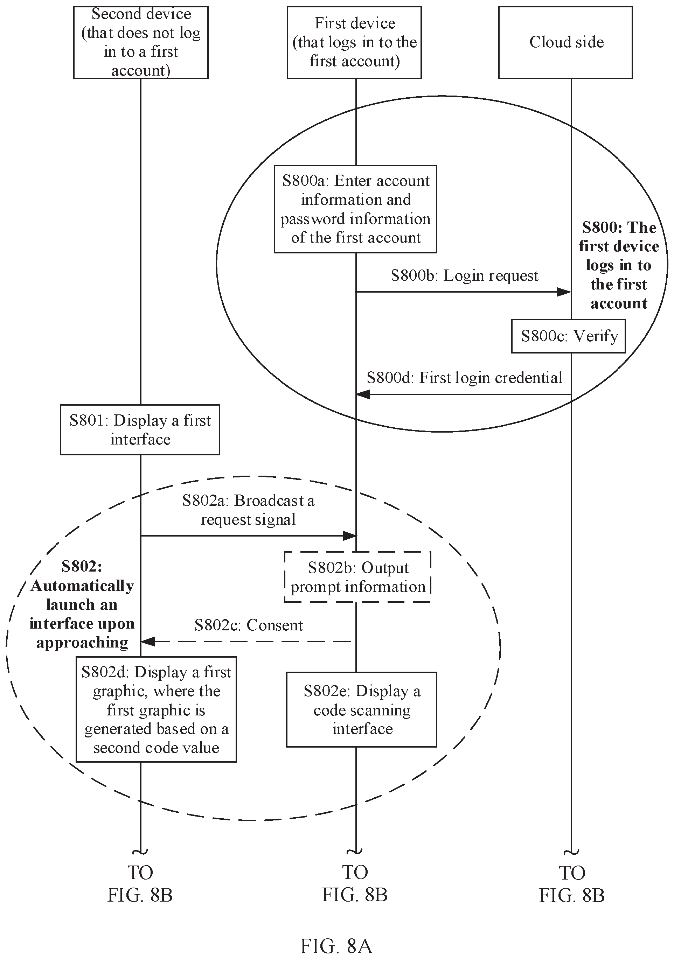

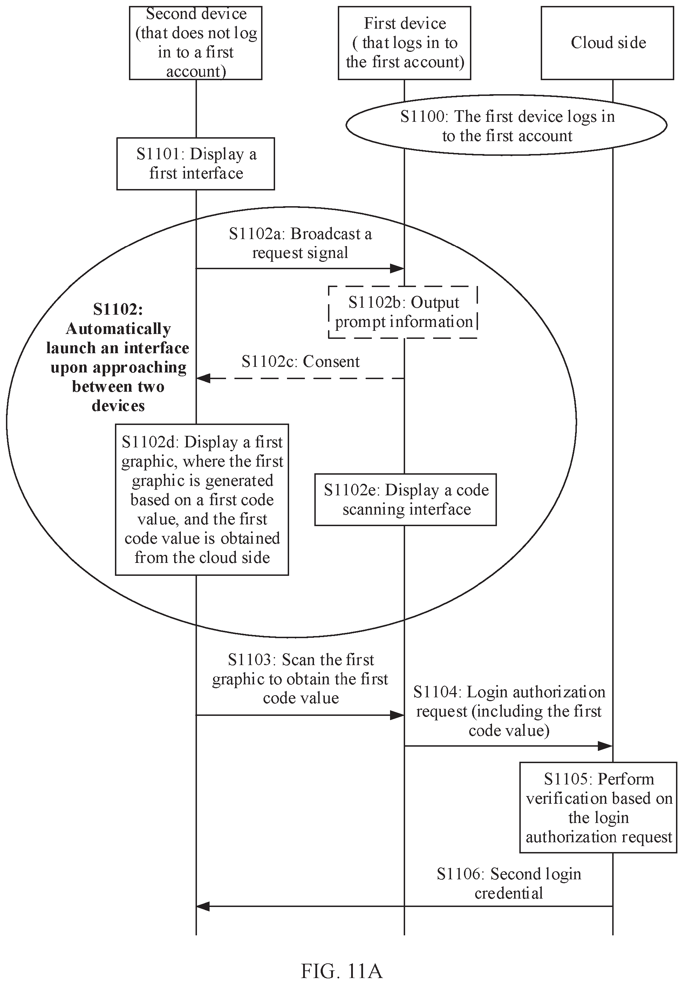

As described above, the first graphic has two generation manners, and when the first graphic is generated in different manners, corresponding login procedures are different. For example, if the first graphic is generated in the second manner (that is, the first graphic is used to establish a near field communication connection), the manner corresponds to a login procedure shown in FIG. 8A and FIG. 8B, FIG. 9, or FIG. 10A and FIG. 10B. If the first graphic is generated in the first manner, the manner may correspond to a login procedure shown in FIG. 11A. Descriptions are separately provided below.

For example, the second device generates the first graphic in the second manner, that is, the first graphic is used to establish a near field communication connection. In this case, the second device may implement password-free login of an account based on the near field communication connection. That the second device implements password-free login of the account based on the near field communication connection may include at least the following three solutions.

### First solution

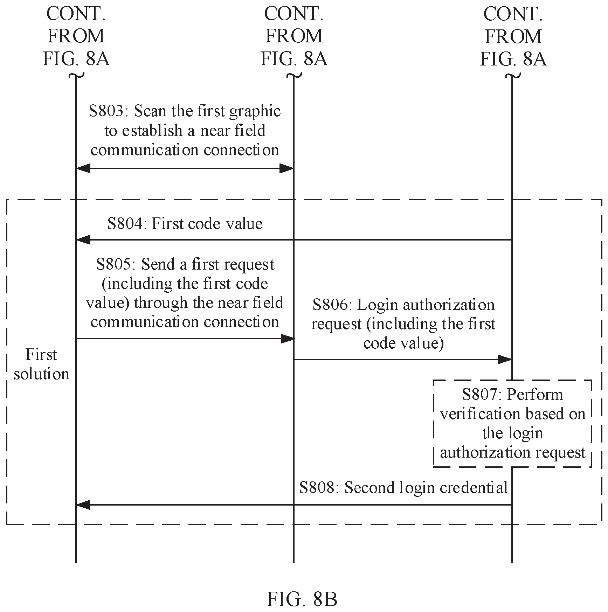

FIG. 8A and FIG. 8B are another schematic flowchart of an account login method according to an embodiment of this application. The procedure is applicable to the scenarios shown in FIG. 1, FIG. 2, FIG. 3B, and FIG. 5A(a) to FIG. 5A(e) to FIG. 5F(a) to FIG. 5F(l). As shown in FIG. 8A and FIG. 8B, the procedure may include the following steps.

S800: A first device logs in to a first account.

For example, the first device is the first device in the system shown in FIG. 1. The first device logs in to the first account, that is, the first device logs in to a cloud side by using the first account, for example, logs in to a first server on the cloud side. For example, a user enters account information and password information of the first account on the first device for login. S800 may include four sub-steps: S800a, S800b, S800c, and S800d. S800a: The first device receives an input operation, where the input operation is used to enter the account information and the password information of the first account. The account information is, for example, an account name. The account name may be a mobile phone number or an email address for registering the account, or certainly may be a nickname or the like set by the user. The password information may be a login password set by the user, for example, one or a combination of a digit, a letter, and a symbol. S800b: The first device sends a login request to the cloud side, to request to log in to the first account. The login request may include the account information and the password information of the first account. S800c: The cloud side verifies the first account based on the login request. Verifying the first account may include: verifying correctness of the account information and the password information of the first account. For example, the cloud side compares the account information and the password information carried in the login request with stored account information and password information. If the information is consistent, the verification succeeds; or if the information is inconsistent, the verification fails. After the verification succeeds, S800d is performed. The cloud side sends a first login credential to the first device. Correspondingly, the first device receives the first login credential sent by the cloud side. The first login credential may be understood as an identity credential issued by the cloud side to the first device, and represent that login of the first device succeeds. Then, the first device may access data on the cloud side by using the first login credential. For example, when the first device needs to access the data, the first device may send a data access request to the cloud side, where the data access request carries the first login credential. After receiving the data access request, the cloud side verifies an identity of the first device based on the first login credential carried in the data access request, and after the verification succeeds, returns the data to the first device. That the cloud side verifies the identity of the first device based on the first login credential carried in the data access request may include: comparing the first login credential carried in the data access request with a login credential locally stored on the cloud side, where the verification succeeds if the login credentials are consistent; or the verification fails if the login credentials are inconsistent.

For example, the first login credential may be a token (token).

Optionally, the first login credential may remain unchanged. Certainly, to ensure data security, the first login credential may alternatively change dynamically. For example, the server may update the first login credential in a specific period, and send an updated first login credential to the first device, so that the first device accesses the data by using the latest first login credential. The period may be one week, 15 days, or one month, or certainly may be one day, two days, or the like. This is not limited in embodiments of this application. In other words, the first login credential has time validity. The first login credential is valid within a specified time period, and is invalid beyond the specified time period. Therefore, after the first login credential is stolen, the first login credential cannot be used as long as a validity period expires, so that continuity of data leakage can be avoided to some extent.

It should be noted that, it can be learned from the four sub-steps of S800 that the first login credential is different from a password of the first account. The first login credential is an identity credential issued to the first device after verification performed by the cloud side on the account information and the password information of the first account succeeds. Then, the first device may perform data access based on the first login credential. During data access, the account information and the password information do not need to be carried, to avoid password leakage. In addition, generally, the password of the first account is unchanged unless the user changes the password. However, the first login credential may dynamically change and have time validity. For a principle, refer to the foregoing description.

S801: A second device displays a first interface. The first interface may be the first interface in the foregoing first scenario (that is, the account login scenario), that is, the interface 301 in FIG. 5B(b), the interface 302 in FIG. 5B(c), or the interface 100 in FIG. 5B(d); or may be the first interface in the foregoing second scenario (the OOBE scenario), for example, the interface 303 in FIG. 5C(c), the interface 304 in FIG. 5C(d), the interface 305 in FIG. 5C(e), or the interface 100 in FIG. 5C(f); or may be the first interface in the foregoing third scenario (the data cloning scenario), for example, the interface 306 in FIG. 5D(b) or the interface 100 in FIG. 5D(c). Optionally, S801a may be performed, or may not be performed, and therefore is represented by using a dashed line in the figure.

S802: Automatically launch an interface upon approaching between the second device and the first device, where the second device does not log in to the first account.

Optionally, S802 may include S802a to S801e.

S802a: The second device broadcasts a request signal, where the request signal is a short-range communication signal, for example, a Bluetooth signal; and when a distance between the first device and the second device is short (for example, within 30 cm), the first device receives the request signal. For the foregoing three different application scenarios, content requested by the request signal may be different. The first scenario (that is, the account login scenario) is used as an example. When displaying the first interface (the interface 301 in FIG. 5B(b), the interface 302 in FIG. 5B(c), or the interface 100 in FIG. 5B(b)), the second device broadcasts the request signal, where the request signal is used to request assistance in account login. The second scenario (the OOBE scenario) is used as an example. When displaying the first interface (the interface 303 in FIG. 5C(c), the interface 304 in FIG. 5C(d), the interface 305 in FIG. 5C(e), or the interface 100 in FIG. 5C(f)), the second device broadcasts the request signal, to request assistance in account login. The third scenario (the data cloning scenario) is used as an example. When displaying the first interface (the interface 306 in FIG. 5D(b) or the interface 100 in FIG. 5D(c)), the second device broadcasts the request signal, to request data migration.

S802b: The first device outputs prompt information, to prompt whether to allow content requested by the request signal. The first scenario is used as an example. After receiving the request signal, the first device displays the prompt box shown in FIG. 5B(f), where the prompt box includes a "Log in with this account" button. The second scenario is used as an example. After receiving the request signal, the first device displays the prompt box shown in FIG. 5C(g), where the prompt box includes a setting button. The third scenario is used as an example. After receiving the request signal, the first device displays the prompt box shown in FIG. 5D(f), where the prompt box includes a confirmation button.

S802c: The first device sends a consent signal to the second device when receiving a consent operation. The first scenario is used as an example. After displaying the prompt box shown in FIG. 5B(f), the first device sends the consent signal to the second device when receiving an operation on the "Log in with this account" button. The second scenario is used as an example. After displaying the prompt box shown in FIG. 5C(g), the first device sends the consent signal to the second device when receiving an operation on the setting button. The third scenario is used as an example. After displaying the prompt box shown in FIG. 5D(f), the first device sends the consent signal to the second device when receiving an operation on the confirmation button.

Optionally, S802b and S802c may be performed or may not be performed, and therefore are represented by using dashed lines in the figure. If S802b and S802c are not performed, S801d and S801e are directly performed after S801a.

S802d: The second device displays a first graphic. The first graphic is generated based on a second code value and is used to establish a near field communication connection. For the second code value, refer to the foregoing description. For example, the first graphic may be the Harmony ring in the interface 100 in FIG. 5B(d), the interface 100 in FIG. 5C(f), or the interface 100 in FIG. 5D(c).

S802e: The first device displays a code scanning interface. For example, the code scanning interface may be the interface 200 in FIG. 5B(g), the interface 200 in FIG. 5C(h), or the interface 200 in FIG. 5D(g).

S803: The first device scans the first graphic to establish a near field communication connection.

Because the first graphic is generated based on the second code value, the first device may obtain the second code value by scanning the first graphic, and may establish the near field communication connection based on the second code value. In a possible implementation, the first device sends a near field communication connection request to the second device, where the request includes the second code value. After receiving the request, the second device may verify the first device. After the verification succeeds, the second device sends a connection consent indication to the first device, to complete the near field communication connection. A manner in which the second device verifies the first device is as follows: The second device compares the second code value carried in the request with a locally stored second code value. If the second code values are consistent, the verification succeeds; or if the second code values are inconsistent, the verification fails. Optionally, the near field communication connection request may further include a service ID of the second device. The service ID may be created by the second device. For example, the second device broadcasts a signal, where the signal includes the service ID. After the signal is received by the first device, the first device obtains the service ID in the signal, and then includes the second code value and the service ID in the near field communication connection for sending to the second device. After receiving the near field communication connection request, the second device verifies the first device. For example, the second device compares the second code value carried in the near field communication connection request with a locally stored second code value, and compares the service ID carried in the near field communication connection request with a locally stored service ID. If both the second code values and the service IDs are consistent, the verification succeeds; or if the second code values or the service IDs are inconsistent, the verification fails.

Optionally, to ensure data security, data transmitted through the near field communication connection may be encrypted by using a session key. For example, the second device generates the session key, and synchronizes the session key to the first device. In this way, when the first device and the second device transmit data through the near field communication connection, the session key may be used for encryption, to prevent data leakage.

S804: The second device obtains a first code value from the cloud side.

It should be noted that an execution sequence between S804, and S802 and S803 is not limited.

S805: The second device sends a first request to the first device through the near field communication connection, where the first request is used to request to log in to an account of the first device. For example, the first request may include the first code value.

S806: The first device sends a login authorization request to the cloud side, to request to authorize the second device to request to log in to the first account.

Optionally, the login authorization request may include at least one of the following information:
(1) First login credential: For the first login credential, refer to the foregoing description.
(2) First code value: For the first code value, refer to the foregoing description.
(3) Related information about the first account: The related information about the first account may include account information of the first account, and optionally, may further include password information of the first account. For the account information and the password information of the first account, refer to the foregoing description.
(4) Device information of the first device: The device information of the first device may include a device type, a device model, and the like of the first device.
(5) Device information of the second device: The device information of the second device may include a device type, a device model, and the like of the second device.

S807: The cloud side performs verification based on the login authorization request.

Optionally, S807 may include: The cloud side verifies at least one of the first account, the first device, and the second device. That the cloud side verifies the first account may include: verifying correctness of the account information and the password information of the first account. This part has been described in S800 above, and details are not described again. That the cloud side verifies the first device may include: verifying the identity of the first device. For example, the login authorization request includes the first login credential. The cloud side compares the first login credential carried in the login authorization request with a stored login credential of the first device. If the login credentials are consistent, the verification succeeds; or if the login credentials are inconsistent, the verification fails. For another example, the login authorization request includes the device information of the first device. The cloud side matches the device information of the first device carried in the login authorization request with stored device information corresponding to the first account. If the device information is consistent, the verification succeeds; or if the device information is inconsistent, the verification fails. That the cloud side verifies the second device may include: verifying an identity of the second device. For example, the login authorization request includes the first code value. As described above, the first code value is verification information that is applied for by the second device from the cloud side and that is used for login through code scanning. The cloud side may determine whether the first code value carried in the login authorization request is a code value that has been sent by the cloud side to the second device, and/or whether the first code value carried in the login authorization request is within a validity period. If the first code value carried in the login authorization request is a code value that has been sent by the cloud side to the second device, and/or the first code value carried in the login authorization request is within the validity period, the verification succeeds; or if the first code value carried in the login authorization request is not a code value that has been sent by the cloud side to the second device, and/or the first code value carried in the login authorization request is not within the validity period, the verification fails. The validity period may be a validity period of a code value specified by the cloud side, for example, 30 seconds or 50 seconds. For another example, the login authorization request includes the device information of the second device. The cloud side matches the device information of the second device carried in the login authorization request with stored device information corresponding to the first account. If the device information is consistent, the verification succeeds; or if the device information is inconsistent, the verification fails.

S808: The cloud side sends a second login credential to the second device.

In the first solution (that is, the solution shown in FIG. 8A and FIG. 8B), the first device requests the cloud side to authorize the second device to log in to the first account. For the cloud side, because the login authorization request is sent by the first device, the cloud side considers that the first device has allowed the second device to be authorized to log in to the first account. Therefore, the cloud side does not need to perform secondary verification (which is described below), thereby reducing processing procedures.

### Second solution

In the first solution (that is, the solution shown in FIG. 8A and FIG. 8B), the first device sends the login authorization request to the cloud side. In this case, the first device needs to be in an online state. If the first device is offline, the first device cannot send the login authorization request to the cloud side, that is, cannot assist the second device in logging in to the first account. Different from the first solution, in the second solution, when the first device is in an offline state, the first device can still assist the second device in logging in to the first account.

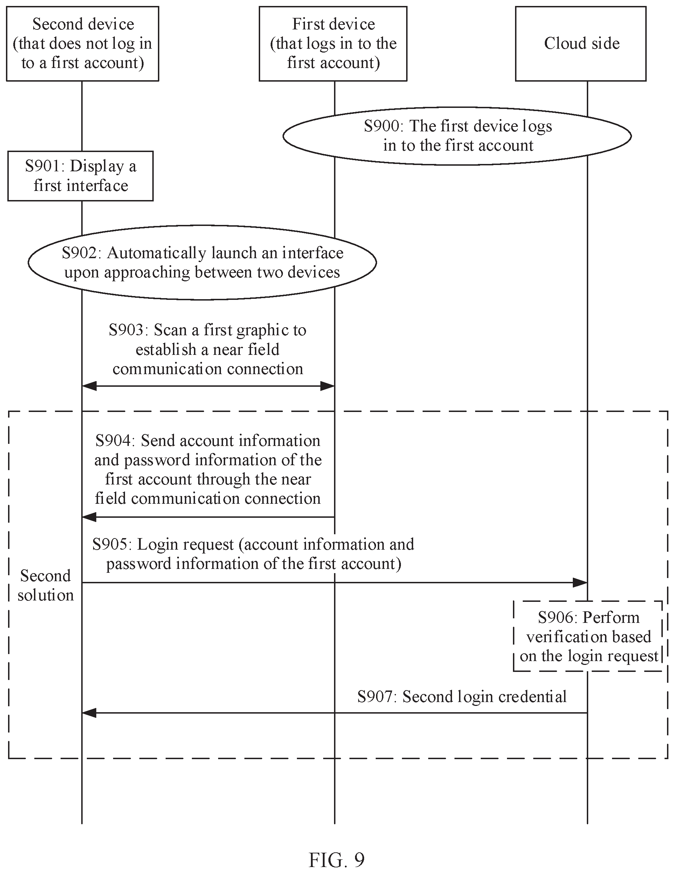

For example, FIG. 9 is another schematic flowchart of an account login method according to an embodiment of this application. The procedure is applicable to the scenarios shown in FIG. 1, FIG. 2, FIG. 3B, and FIG. 5A(a) to FIG. 5A(e) to FIG. 5F(a) to FIG. 5F(l). As shown in FIG. 9, the procedure may include the following steps.

S900: A first device logs in to a first account.

It should be noted that an implementation principle of S900 is the same as an implementation principle of S800 in FIG. 8A and FIG. 8B above. For example, S900 may also include four sub-steps (not shown in FIG. 9), which have been described in detail above. Details are not described herein again.

S901: A second device displays a first interface. For the first interface, refer to the foregoing description.

S902: Automatically launch an interface upon approaching between the second device and the first device. The second device does not log in to the first account.

As described above, when the two devices approach each other, the second device launches a first graphic, where the first graphic is generated based on a second code value and is used to establish a near field communication connection; and the second device launches a code scanning interface. It should be noted that an implementation principle of S902 is the same as an implementation principle of S802 in FIG. 8A and FIG. 8B above. For example, S902 may also include five sub-steps (not shown in FIG. 9). Because details have been described in FIG. 8A and FIG. 8B, details are not described herein again.

S903: The first device scans the first graphic to establish a near field communication connection.

It should be noted that for a process of establishing the near field communication connection between the first device and the second device, refer to S803 in FIG. 8A and FIG. 8B above. Details are not described herein again.

S904: The first device sends account information and password information of the first account to the second device through the near field communication connection.

S905: The second device sends a login request to a cloud side, where the login request includes the account information and the password information of the first account.

S906: The cloud side performs verification based on the login request.

Optionally, S906 may include: The cloud side verifies correctness of the account information and the password information of the first account. For example, the cloud side compares the account information and the password information carried in the login request with stored account information and password information. If the information is consistent, the verification succeeds; or if the information is inconsistent, the verification fails.

S907: The cloud side sends a second login credential to the second device.

In the second solution (that is, the solution shown in FIG. 9), the first device sends the account information and the password information of the first account to the second device through the near field communication connection, and after obtaining the account information and the password information, the second device logs in to the first account. In this solution, the first device does not need to send a login authorization request to the cloud side, and therefore the first device may be in an offline state. Therefore, this solution breaks a limitation that an old device (that is, the first device) needs to connect to a network to assist a new device (that is, the second device) in logging in to an account.

### Third solution

In the second solution (that is, the solution shown in FIG. 9), the first device needs to send the account information and the password information of the first account to the second device. This easily causes password leakage. Once the password is leaked, the first account is occupied by another person, and is difficult to retrieve. Different from the second solution, in the third solution, the first device does not need to send the password to the second device, and can still assist the second device in logging in to the first account, thereby reducing a possibility of password leakage. In addition, the third solution can also be used when the first device is in an offline state.

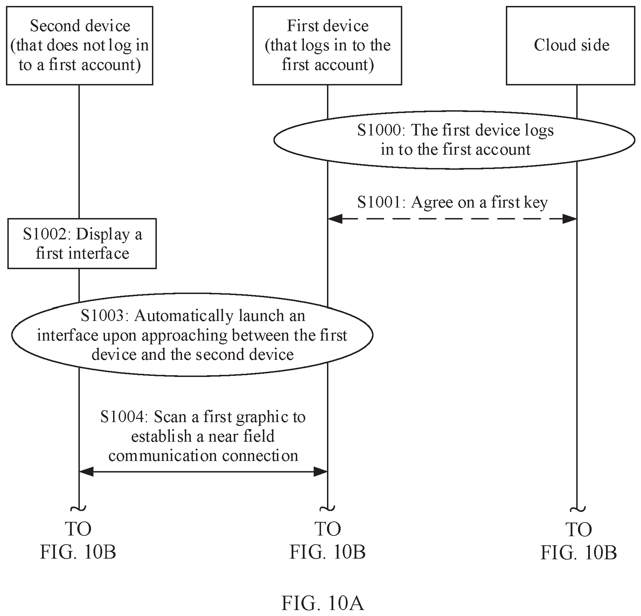

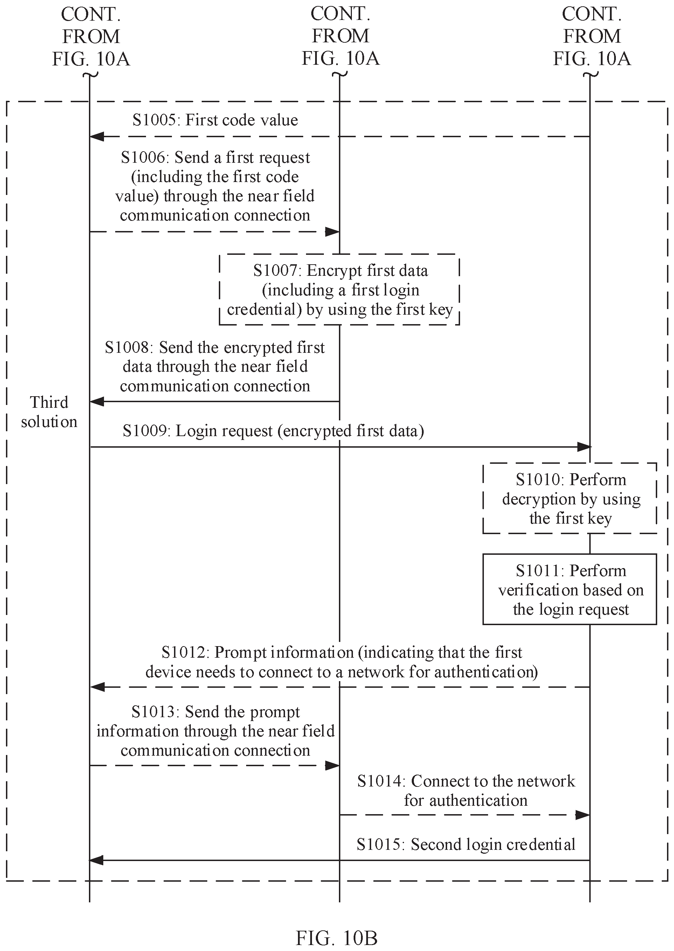

For example, FIG. 10A and FIG. 10B are another schematic flowchart of an account login method according to an embodiment of this application. The procedure is applicable to the scenarios shown in FIG. 1, FIG. 2, FIG. 3B, and FIG. 5A(a) to FIG. 5A(e) to FIG. 5F(a) to FIG. 5F(l). As shown in FIG. 10A and FIG. 10B, the procedure may include the following steps.

S1000: A first device logs in to a first account.

It should be noted that an implementation principle of S1000 is the same as an implementation principle of S800 in FIG. 8A and FIG. 8B above. For example, S1000 may also include four sub-steps (not shown in FIG. 10A and FIG. 10B), which have been described in detail above. Details are not described herein again.

S1001: The first device and a cloud side agree on a first key.

Optionally, the first device may agree on the first key with the cloud side when the first device is in an online state.

S1002: A second device displays a first interface. For the first interface, refer to the foregoing description.

S1003: Automatically launch an interface upon approaching between the second device and the first device. The second device does not log in to the first account.

As described above, when the two devices approach each other, the second device launches a first graphic, where the first graphic is generated based on a second code value and is used to establish a near field communication connection; and the second device launches a code scanning interface. It should be noted that an implementation principle of S1003 is the same as an implementation principle of S802 in FIG. 8A and FIG. 8B above. For example, S1003 may also include five sub-steps (not shown in FIG. 10A and FIG. 10B). Because details have been described in FIG. 8A and FIG. 8B, details are not described again.

S1004: The first device scans the first graphic to establish a near field communication connection.

It should be noted that for a process of establishing the near field communication connection between the first device and the second device, refer to S803 in FIG. 8A and FIG. 8B above. Details are not described herein again.

S1005: The second device obtains a first code value from the cloud side.

S1006: The second device sends a first request to the first device through the near field communication connection, where the first request is used to request to log in to an account of the first device. For example, the first request includes the first code value. For the first code value, refer to the foregoing description.

Optionally, S1005 and S1006 may be performed, or may not be performed, and therefore are represented by using dashed lines in FIG. 10A and FIG. 10B.

Optionally, an implementation principle of S1002 to S1006 is the same as an implementation principle of S801 to S805 in FIG. 8A and FIG. 8B above. Details are not described again.

S1007: The first device encrypts first data by using the first key.

In some embodiments, the first data includes a first login credential of the first device. For the first login credential, refer to the foregoing description. Optionally, the first data may further include other information, for example, device information of the first device, account information of the first account, and the first code value. To avoid password leakage, the first data does not include a login password of the first account.

S1008: The first device sends the encrypted first data to the second device through the near field communication connection.

S1009: The second device sends a login request to the cloud side, to request to log in to the first account, where the login request includes the encrypted first data.

S1010: The cloud side decrypts the encrypted first data by using the first key.

S1011: The cloud side performs verification based on the login request. For S1011, refer to S906 in FIG. 9. Details are not described herein again.

It should be noted that in FIG. 10A and FIG. 10B, S1001, S1007, and S1010 may not be performed. Therefore, the three steps are represented by using dashed lines in FIG. 10A and FIG. 10B. In addition, in S1001, in addition to the first key, the first device and the cloud side further agree on a key ID. The key ID indicates the first key. In this way, after encrypting the first data by using the first key in S1007, the first device may send the key ID and the encrypted first data together to the second device. The second device includes the key ID and the encrypted first data together in the login request for sending to the cloud side. The cloud side may first determine the first key based on the key ID, and then decrypt the encrypted first data by using the first key. In this way, the cloud side can efficiently find the first key based on the key ID.

S1012: The second device receives prompt information sent by the cloud side, where the prompt information is used to prompt that the first device needs to connect to a network for authentication.

It should be understood that, in the foregoing description, the login request sent by the second device to the cloud side includes the first login credential of the first device. The cloud side may doubt that the second device steals the first login credential of the first device. For security, the cloud side may perform secondary verification (that is, S1012 to S1014), that is, verify whether the first device allows the second device to be authorized to log in to the first account. Optionally, S1012 to S1014 may be performed, or may not be performed, and therefore are represented by using dashed lines in FIG. 10A and FIG. 10B.

Optionally, before S1012, the method may further include: The cloud side determines whether the first device is in an online state; and performs S1012 if it is determined that the first device is in an offline state; or sends prompt information to the first device if it is determined that the first device is in the online state, to prompt the first device whether to allow the second device to be authorized to log in to the first account. Optionally, after receiving the prompt information, the first device may output the prompt information. Optionally, a corresponding display component may be further displayed. The display component may include a button (for example, a consent button and a reject button) or the like. When receiving an operation on the consent button, the first device sends an authorization consent instruction to the cloud side. After receiving the instruction, the cloud side sends a second login credential to the second device.

S1013: The second device sends the prompt information to the first device through the near field communication connection.

In this embodiment of this application, after receiving the prompt information from the cloud side, the second device may send the prompt information to the first device through the near field communication connection. The first device may output the prompt information. Optionally, a corresponding display component may be further displayed. The display component may include a button (for example, a consent button and a reject button) or the like.

S1014: The first device connects to the network for authentication.

After the first device outputs the prompt information, a user may connect the first device to the network after viewing the prompt information. In a possible manner, after detecting that the first device is connected to the network, the first device actively sends authentication information to the cloud side, to indicate to determine to allow the second device to be authorized to log in to the first account. After receiving the authentication information, the cloud side sends the second login credential to the second device. In another possible manner, the cloud side may send the prompt information to the first device continuously (for example, every 5s). After the first device is connected to the network, the first device can receive the prompt information sent by the cloud side. Then, the first device may output the prompt information, and may further display a corresponding display component. After receiving an operation on the consent button, the first device sends an authorization consent instruction to the cloud side. After receiving the instruction, the cloud side sends the second login credential to the second device.

S1015: The cloud side sends the second login credential to the second device.

FIG. 9 is compared with FIG. 10A and FIG. 10B. In FIG. 9, the first device sends the account information and the password information of the first account to the second device through the near field communication connection. In this way, the second device may request, by using the account information and the password information, the cloud side for logging in to the first account. In this manner, for the cloud side, the second device performs login based on the account information and the password information, which is independent login. In FIG. 10A and FIG. 10B, the first device sends the first data to the second device through the near field communication connection, the first data includes the first login credential of the first device, and the login request sent by the second device to the cloud side includes the first data. For the cloud side, the first login credential originally issued to the first device appears in the login request of the second device, and the cloud side considers that the second device logs in to the first account as a proxy of the first device, which is proxy login. Therefore, FIG. 10A and FIG. 10B and FIG. 9 show two different login procedures. It should be noted that, in FIG. 10A and FIG. 10B, when the first device sends the first login credential to the second device through the near field communication connection, a leakage risk exists. However, because the first login credential has time validity, after the first login credential is stolen, the first login credential cannot be used provided that a validity period expires. In this manner, a password is not leaked. Therefore, the first account is not occupied by another person. Compared with that in a case in which the password is leaked, continuity of data leakage can be avoided to some extent.

In the foregoing embodiments, three solutions for implementing password-free login of the second device based on the near field communication connection are listed. A system (for example, the communication system shown in FIG. 1) may use any one of the three solutions, or may select one of the solutions according to an actual situation. Optionally, there are the following several selection manners.

Manner A: The first device may determine whether the first device is online currently. If the first device is online, the first solution may be used. If the first device is offline, the second solution or the third solution may be used.

Manner B: As described above, the first login credential has time validity. Therefore, the first device may determine whether the first login credential is invalid. If the first login credential is invalid, the first solution or the second solution may be used. If the first login credential is not invalid, the third solution may be used. In a possible scenario, the first device is offline for a long time. Although the cloud side has updated the first login credential, the cloud side cannot synchronize a latest first login credential to the first device because the first device is always offline. As a result, the first login credential becomes invalid. In this case, the first device may use the first solution or the second solution.

The foregoing manner A and manner B may be used separately or in combination. Using combined use as an example, the first device uses the manner A, and determines to use the second solution or the third solution (that is, the first device is offline). Further, the first device uses the manner B, and determines to use the third solution (the first login credential is not invalid).

As described above, when the first operation of the first device has a plurality of accounts, the user may select one of the accounts, so that the second operating system of the second device is logged in to by using the account selected by the user. In this case, in FIG. 8A and FIG. 8B to FIG. 10A and FIG. 10B, the account information included in the login request (or the login authorization request) is account information of the account selected by the user.

In FIG. 8A and FIG. 8B to FIG. 10A and FIG. 10B, an example in which the second device generates the first graphic in the second manner (that is, the first graphic is used to establish a near field communication connection) is used. If the second device generates the first graphic in the first manner (that is, generates the first graphic based on the first code value), a login procedure shown in FIG. 11A may be used. FIG. 11A is another schematic flowchart of an account login method according to an embodiment of this application. The procedure is applicable to the scenarios shown in FIG. 1, FIG. 2, and FIG. 3A. As shown in FIG. 11A, the procedure may include the following steps.

S1100: A first device logs in to a first account.

Optionally, an implementation principle of S1100 is the same as an implementation principle of S800 in FIG. 8A and FIG. 8B, and details are not described again.

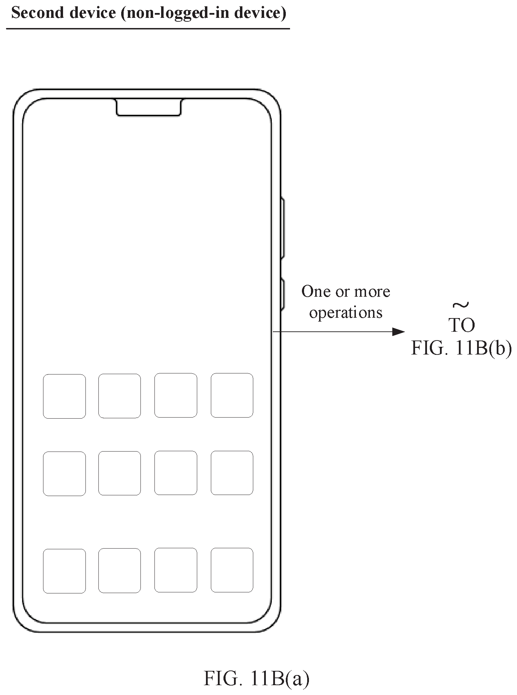

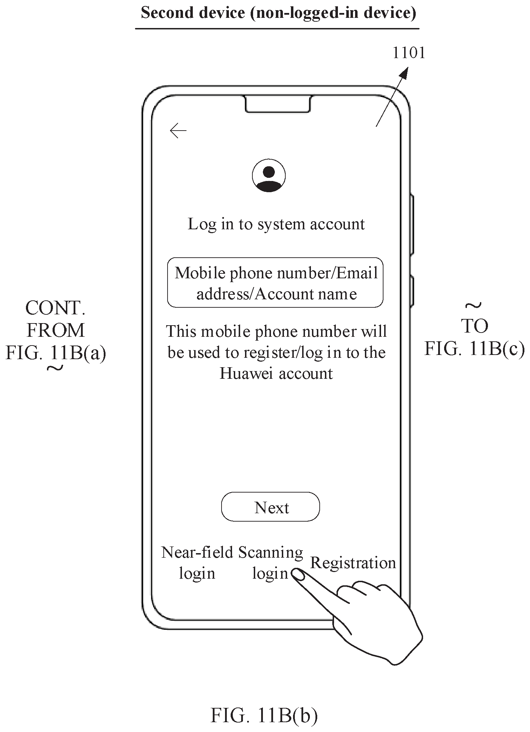

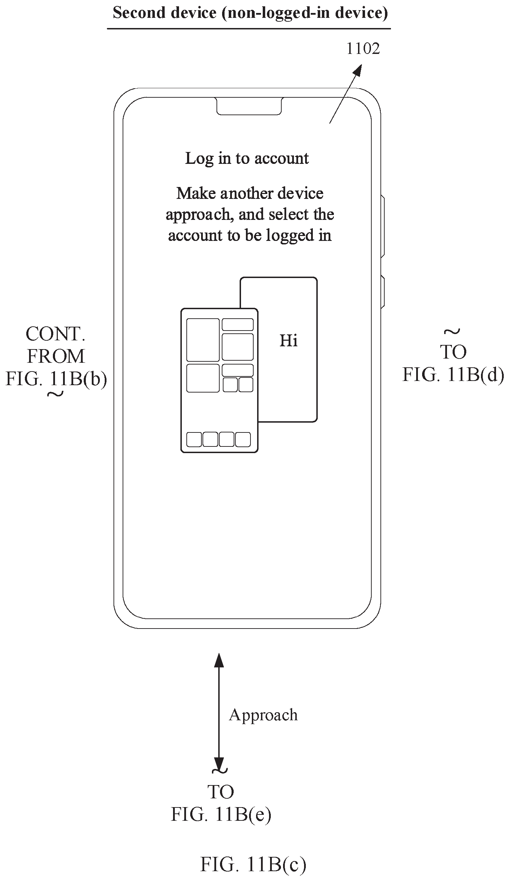

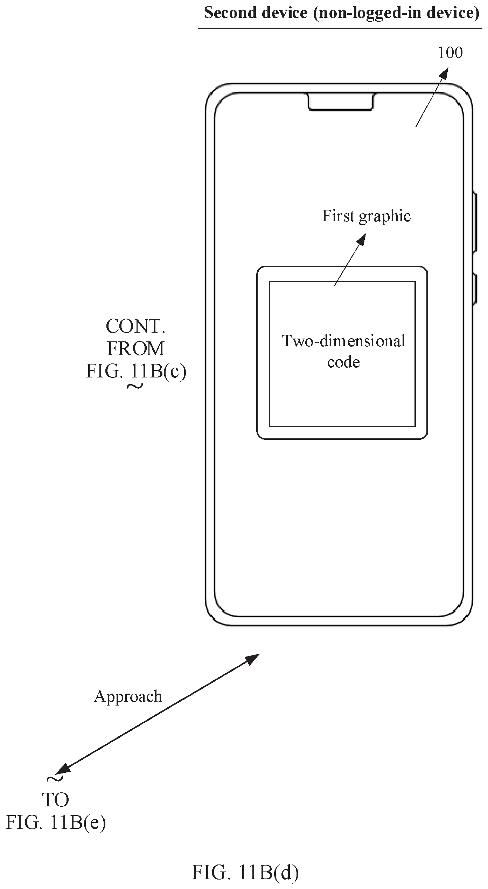

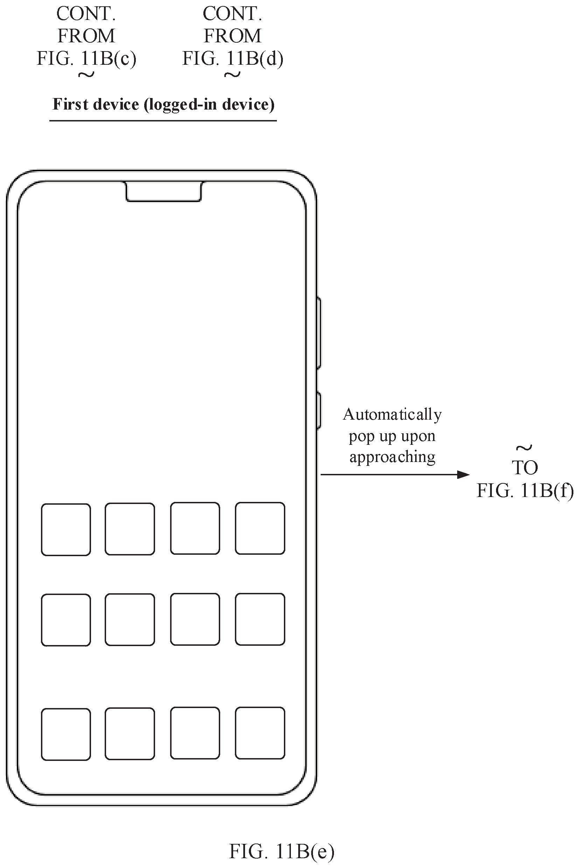

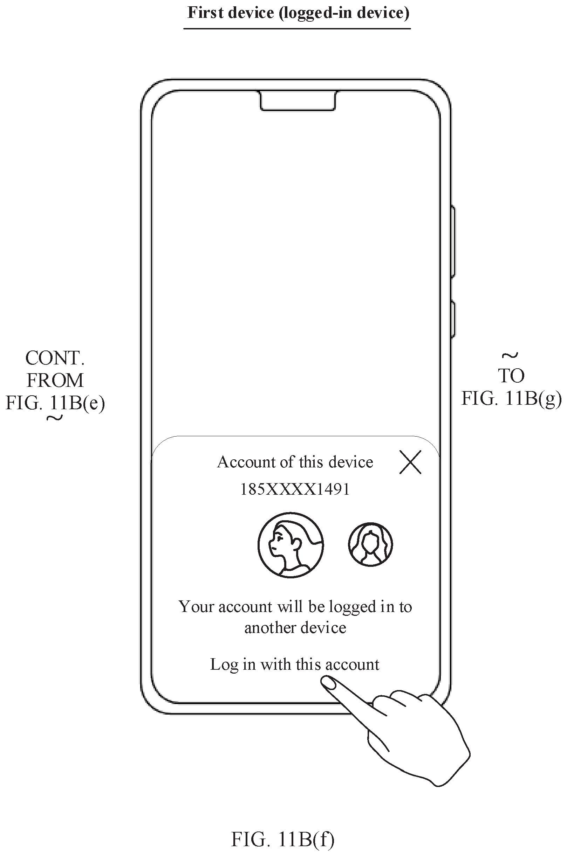

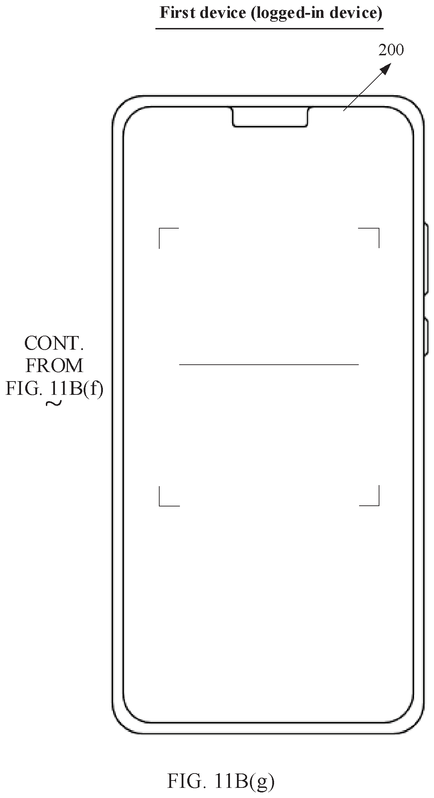

S1101: A second device displays a first interface. As shown in FIG. 11B(a), the second device displays a home screen. After receiving one or more user operations, the second device displays an interface 1101 in FIG. 11B(b). The interface 1101 includes a "Scanning login" button. When receiving an operation on the "Scanning login" button, the second device displays an interface 1102 in FIG. 11B(c), or directly displays an interface 100 in FIG. 11B(d). The interface 100 includes a first graphic, the first graphic is generated based on a first code value, and the first code value is obtained by the second device from a cloud side. The first interface may be the interface 1102 in FIG. 11B(c), or the interface 100 in FIG. 11B(d).

S1102: Automatically launch an interface upon approaching between the first device and the second device. The second device does not log in to the first account.

Optionally, S1102 may include S1102a to S1102e.

S1102a: The second device broadcasts a request signal, where the request signal is a short-range communication signal, for example, a Bluetooth signal. If a distance between the first device and the second device is short (for example, within 30 cm), the first device receives the request signal. The request signal is used to request to log in to an account of the first device. For example, as shown in FIG. 11B(e), when displaying a home screen, the first device receives the request signal of the second device. Optionally, the first device may alternatively display an interface other than the home screen, for example, a lock screen interface, a black screen, a leftmost screen, an interface of an application, or any interface entered after the first device is unlocked.

S1102b: The first device outputs prompt information, to prompt whether to allow the second device to log in to the account of the first device. For example, as shown in FIG. 11B(e), when displaying the home screen, the first device receives the request signal of the second device, and then displays a prompt box shown in FIG. 11B(f), where the prompt box includes the prompt information about whether to allow the second device to log in to the account. The prompt box may further include a "Log in with this account" button.

S1102c: The first device sends a consent signal to the second device when receiving a consent operation. For example, as shown in FIG. 11B(f), the first device receives an operation on the "Log in with this account" button, and sends the consent signal to the second device.

Optionally, S1102b and S1102c may be performed or may not be performed, and therefore are represented by using dashed lines in the figure. If S1102b and S1102c are not performed, S1102d and S1102e are directly performed after S1102a.

S1102d: The second device displays a first graphic. The first graphic is generated based on a first code value, and the first code value is obtained from a cloud side. For the first code value, refer to the foregoing description. For example, the first graphic is, for example, a Harmony ring in the interface 100 in FIG. 11B(d).

S1102e: The first device displays a code scanning interface. For example, the code scanning interface may be an interface 200 in FIG. 11B(g).

S1103: The first device scans the first graphic to obtain the first code value.

In a possible manner, the first device obtains an image of the first graphic in a scanning manner, and then obtains the first code value through parsing based on the image of the first graphic. In another possible manner, the first device obtains an image of the first graphic in a scanning manner, and then sends the image to the cloud side (for example, a second server). The cloud side obtains the first code value through parsing, and then returns the first code value to the first device.

S1104: The first device sends a login authorization request to the cloud side, where the login authorization request indicates to authorize the second device to request to log in to the first account.

S1105: The cloud side performs verification based on the login authorization request.

S1106: The cloud side sends a second login credential to the second device.

Optionally, a principle of S1104 to S1106 is the same as a principle of S806 to S808 in FIG. 8A and FIG. 8B, and details are not described again.

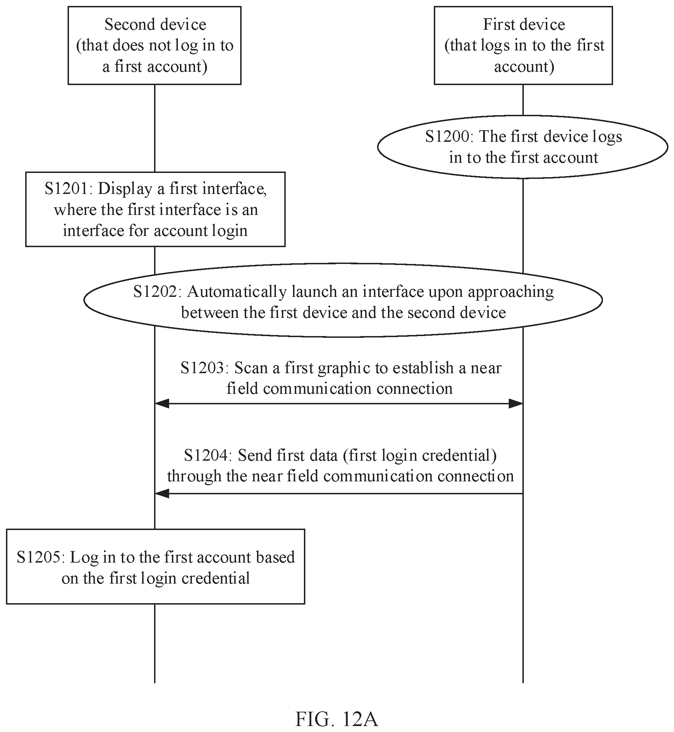

FIG. 12A is another schematic flowchart of an account login method according to an embodiment of this application. The procedure is applicable to the first scenario (that is, FIG. 5B(a) to FIG. 5B(g)) or the second scenario (that is, FIG. 5C(a) to FIG. 5C(h)) above. As shown in FIG. 12A, the procedure includes the following steps.

S1200: A first device logs in to a first account. An implementation principle of S1200 is the same as an implementation principle of S800 in FIG. 8A and FIG. 8B, and details are not described again.

S1201: A second device displays a first interface. Optionally, the first interface is an interface used by the second device for account login. The foregoing first scenario (that is, the account login scenario in FIG. 5B(a) to FIG. 5B(g)) is used as an example. The first interface may be the interface 301 in FIG. 5B(b), the interface 302 in FIG. 5B(c), or the interface 100 in FIG. 5B(d). The foregoing second scenario (that is, the OOBE scenario in FIG.5C(a) to FIG. 5C(h)) is used as an example. The first interface may be the interface 303 in FIG. 5C(c), the interface 304 in FIG. 5C(d), the interface 305 in FIG. 5C(e), or the interface 100 in FIG. 5C(f). The foregoing third scenario (that is, the data cloning scenario in FIG. 5D(a) to FIG. 5D(l)) is used as an example. The first interface may be the interface 306 in FIG. 5D(b) or the interface 100 in FIG. 5D(c).

S1202: Automatically launch an interface upon approaching between the first device and the second device.

For example, the first device displays a code scanning interface in response to detecting that the second device approaches. Optionally, before launching the code scanning interface, the first device may display any interface, for example, a lock screen, a black screen, a home screen, a leftmost screen, or an application interface.

Optionally, the first device displays prompt information in response to detecting that the second device approaches. The prompt information is used to prompt whether to allow the second device to log in to the first account. The first scenario (that is, the account login scenario in FIG. 5B(a) to FIG. 5B(g)) is used as an example. The prompt information may be the prompt box shown in FIG. 5B(f), and the prompt box includes a "Log in with this account" button. The second scenario (that is, the OOBE scenario in FIG. 5C(a) to FIG. 5C(h)) is used as an example. The prompt information may be the prompt box shown in FIG. 5C(g), and the prompt box includes a setting button. The third scenario (that is, the data cloning scenario in FIG. 5D(a) to FIG. 5D(l)) is used as an example. The prompt information may be, for example, the prompt box shown in FIG. 5D(f), and the prompt box includes a confirmation button. After the first device displays the prompt information, if the first device receives a consent operation, the first device displays the code scanning interface. The first scenario is used as an example. After the first device displays the prompt box shown in FIG. 5B(f), if the first device receives an operation on the "Log in with this account" button, the first device displays the code scanning interface 200 in FIG. 5B(g). The second scenario is used as an example. After the first device displays the prompt box shown in FIG. 5C(g), if the first device receives an operation on the setting button, the first device displays the code scanning interface 200 in FIG. 5C(h). The third scenario (that is, the data cloning scenario in FIG. 5D(a) to FIG. 5D(l)) is used as an example. After the first device displays the prompt box shown in FIG. 5D(f), if the first device receives an operation on the confirmation button, the first device displays the code scanning interface 200 in FIG. 5D(g).

Optionally, that the first device detects that the second device approaches may include: The first device detects that a distance between the first device and the second device is less than a first distance (for example, 30 cm), and/or the first device receives a request signal that is broadcast by the second device, where the request signal is a short-range communication signal, for example, a Bluetooth signal. Refer to S801 in FIG. 8A and FIG. 8B.

For example, the second device displays a first graphic in response to detecting that the first device approaches, where the first graphic is used to establish near field communication. Optionally, in response to detecting that the first device approaches, the second device may directly display the first graphic, or display the first graphic when receiving a consent instruction of the first device. FIG. 5B(a) to FIG. 5B(g) are used as an example. When the second device displays the interface 302, if it is detected that the first device approaches, the interface 100 in FIG. 5B(d) may be automatically launched, where the interface 100 includes the first graphic. Alternatively, when receiving a launch instruction sent by the first device, the second device launches the interface 100 in FIG. 5B(d). For example, in FIG. 5B(f), after receiving an operation on the "Log in with this account" button, the first device sends a launch instruction to the second device, and after receiving the launch instruction, the second device launches the interface 100 shown in FIG. 5B(d).

Optionally, that the second device detects that the first device approaches may include: The second device detects that the distance between the first device and the second device is less than a second distance (for example, 30 cm), and/or the second device receives the consent signal returned by the first device. Refer to S801 in FIG. 8A and FIG. 8B. The first scenario is used as an example. After displaying the prompt box shown in FIG. 5B(f), the first device sends the consent signal to the second device when receiving an operation on the "Log in with this account" button. The second scenario is used as an example. After displaying the prompt box shown in FIG.5C(g), the first device sends the consent signal to the second device when receiving an operation on the setting button. The third scenario is used as an example. After displaying the prompt box shown in FIG. 5D(f), the first device sends the consent signal to the second device when receiving an operation on the confirmation button.

S1203: The first device scans the first graphic by using the code scanning interface, to establish a near field communication connection to the second device.

Optionally, the first device may obtain a second code value by scanning the first graphic. For a principle of establishing the near field communication connection based on the second code value, refer to 803 in FIG. 8A and FIG. 8B.

S1204: The first device sends first data to the second device through the near field communication connection, where the first data includes a first login credential.

Optionally, the first login credential may be a token token. In some embodiments, the first data may not include a login password of the first account, to avoid password leakage. In some other embodiments, the first data is encrypted by using a first key, and the first key is a key agreed on by the first device and a server corresponding to the first account. Refer to S1007 in FIG. 10A and FIG. 10B.

S1205: The second device logs in to the first account based on the first login credential.

Optionally, for an implementation principle of S1206, refer to S1009 to S1012 in FIG. 10A and FIG. 10B.

It should be noted that, if the first interface displayed by the second device in S1201 is the first interface in the foregoing third scenario (that is, the data cloning scenario in FIG. 5D(a) to FIG. 5D(l)), for example, the interface 306 in FIG. 5D(b) or the interface 100 in FIG. 5D(c), after S1205, the method may further include: The first device sends second data to the second device through the near field communication connection, where the second data is user data stored in the first device. After receiving the second data, the second device stores the second data. For example, in FIG. 5D(l), after successfully logging in to the account of the first device, the second device may display a data selection interface in FIG. 5D(d). The user may select data in the interface. When receiving an operation on a "Start" button, the second device sends a migration start instruction to the first device. After receiving the migration start instruction, the first device sends the second data (for example, data selected by the user) to the second device through the near field communication connection. For example, the first device may display prompt information shown in FIG. 5D(j): Migrating data. The second device displays a migration progress shown in FIG. 5D(e).

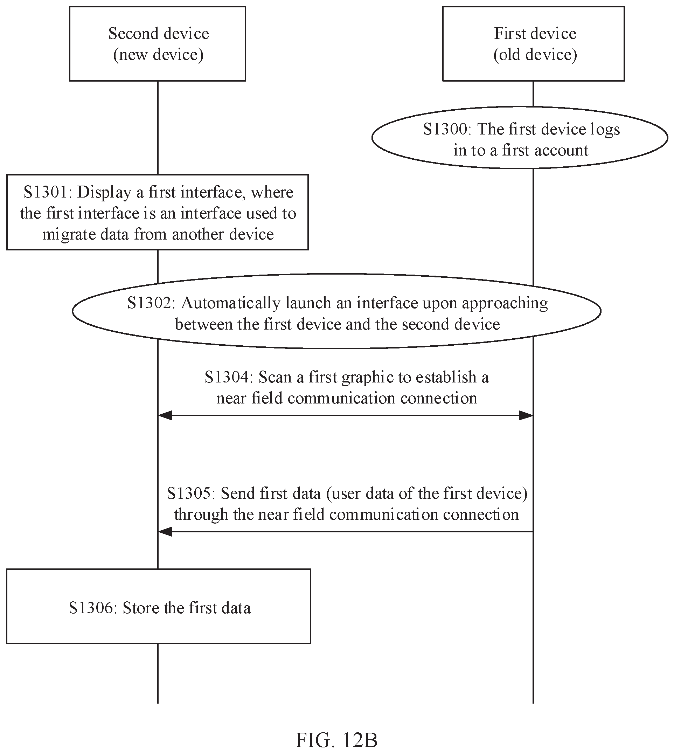

FIG. 12B is another schematic flowchart of an account login method according to an embodiment of this application. The procedure is applicable to the foregoing third scenario (that is, FIG. 5D(a) to FIG. 5D(l)). As shown in FIG. 12B, the procedure includes the following steps.

S1300: A first device logs in to a first account. An implementation principle of S1200 is the same as an implementation principle of S800 in FIG. 8A and FIG. 8B, and details are not described again.

S1301: A second device displays a first interface. The first interface is an interface used to migrate data from another device. The foregoing third scenario (that is, the data cloning scenario in FIG. 5D(a) to FIG. 5D(l)) is used as an example. The first interface may be the interface 306 in FIG. 5D(b) or the interface 100 in FIG. 5D(c).

S1302: Automatically launch an interface upon approaching between the first device and the second device.

For example, the first device displays a code scanning interface in response to detecting that the second device approaches. Optionally, before launching the code scanning interface, the first device may display any interface, for example, a lock screen, a black screen, a home screen, a leftmost screen, or an application interface.

Optionally, the first device displays prompt information in response to detecting that the second device approaches. The prompt information is used to prompt whether to allow data to be migrated to the second device. The third scenario (that is, the data cloning scenario in FIG. 5D(a) to FIG. 5D(l)) is used as an example. The prompt information may be, for example, the prompt box shown in FIG. 5D(f), and the prompt box includes a confirmation button. After the first device displays the prompt information, if the first device receives a consent operation, the first device displays the code scanning interface. The third scenario is used as an example. After the first device displays the prompt box shown in FIG. 5D(f), when the first device receives an operation on the confirmation button, the first device displays the code scanning interface 200 in FIG. 5D(g).

Optionally, that the first device detects that the second device approaches may include: The first device detects that a distance between the first device and the second device is less than a first distance (for example, 30 cm), and/or the first device receives a request signal that is broadcast by the second device, where the request signal is a short-range communication signal, for example, a Bluetooth signal. Refer to S801 in FIG. 8A and FIG. 8B.

For example, the second device displays a first graphic in response to detecting that the first device approaches, where the first graphic is used to establish near field communication. Optionally, in response to detecting that the first device approaches, the second device may directly display the first graphic, or display the first graphic when receiving a consent instruction of the first device. FIG. 5D(a) to FIG. 5D(l) are used as an example. When the second device displays the interface 306, if it is detected that the first device approaches, the interface 100 in FIG. 5D(c) may be automatically launched, where the interface 100 includes the first graphic. Alternatively, when receiving a launch instruction sent by the first device, the second device launches the interface 100 in FIG. 5D(c). For example, in FIG. 5D(f), after receiving an operation on the "OK" button, the first device sends a launch instruction to the second device, and after receiving the launch instruction, the second device launches the interface 100 shown in FIG. 5D(c).

Optionally, that the second device detects that the first device approaches may include: The second device detects that the distance between the first device and the second device is less than a second distance (for example, 30 cm), and/or the second device receives the consent signal returned by the first device. Refer to S801 in FIG. 8A and FIG. 8B. The third scenario is used as an example. After displaying the prompt box shown in FIG. 5D(f), the first device sends the consent signal to the second device when receiving an operation on the confirmation button.

S1304: The first device scans the first graphic by using the code scanning interface, to establish a near field communication connection to the second device.

Optionally, the first device may obtain a second code value by scanning the first graphic. For a principle of establishing the near field communication connection based on the second code value, refer to 803 in FIG. 8A and FIG. 8B.

S1305: The first device sends first data to the second device through the near field communication connection. The first data includes user data stored in the first device. The user data may be data in each application (system application or third-party application) in the first device, for example, data in applications such as an album application, a memo, an address book, and a calendar.

S1306: The second device stores the first data.

The following describes an electronic device provided in embodiments of this application. The electronic device may be the foregoing first device, second device, or cloud side.

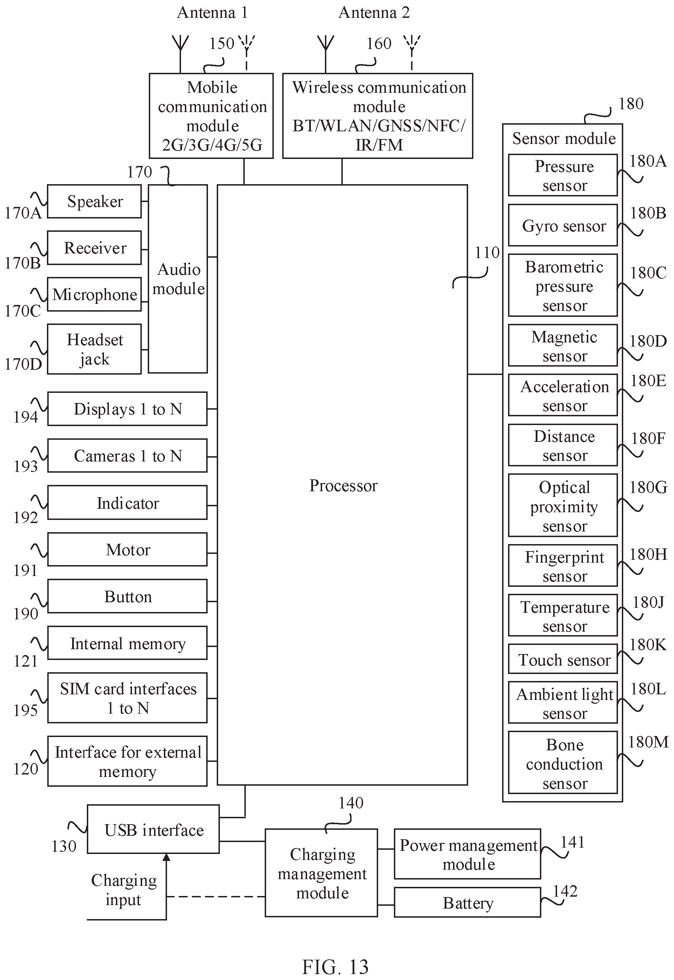

For example, FIG. 13 is a diagram of a structure of an electronic device according to an embodiment of this application. As shown in FIG. 13, the electronic device may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors. The controller may be a nerve center and a command center of the electronic device. The controller may generate an operation control signal based on instruction operation code and a time sequence signal, to complete control of instruction fetching and instruction execution. A memory may be further disposed in the processor 110, to store instructions and data. In some embodiments, the memory in the processor 110 is a cache. The memory may store instructions or data just used or cyclically used by the processor 110. If the processor 110 needs to use the instructions or data again, the instructions or data may be directly invoked from the memory. This avoids repeated access, and reduces waiting time of the processor 110, so that system efficiency is improved.

In some embodiments, the processor 110 may perform the account login method provided in embodiments of this application.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronous serial bus, and includes a serial data line (serial data line, SDA) and a serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K by using an I2C interface, so that the processor 110 communicates with the touch sensor 180K by using the I2C bus interface, to implement a touch function of the electronic device 100.

The I2S interface may be used for audio communication. In some embodiments, the processor 110 may include a plurality of groups of I2S buses. The processor 110 may be coupled to the audio module 170 by using the I2S bus, to implement communication between the processor 110 and the audio module 170. In some embodiments, the audio module 170 may transmit an audio signal to the wireless communication module 160 through the I2S interface, to implement a function of answering a call by using a Bluetooth headset.

The PCM interface may be configured to perform audio communication, and sample, quantize, and code analog signals. In some embodiments, the audio module 170 may be coupled to the wireless communication module 160 by using a PCM bus interface. In some embodiments, the audio module 170 may also transmit an audio signal to the wireless communication module 160 through the PCM interface, to implement a function of answering a call by using a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 by using the UART interface, to implement a Bluetooth function. In some embodiments, the audio module 170 may transmit an audio signal to the wireless communication module 160 through the UART interface, to implement a function of playing music by using a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 and the camera 193 communicate with each other by using the CSI interface, to implement a photographing function of the electronic device 100. The processor 110 communicates with the display 194 by using the DSI interface, to implement a display function of the electronic device 100.

The GPIO interface may be configured by using software. The GPIO interface may be configured as a control signal, or may be configured as a data signal. In some embodiments, the GPIO interface may be configured to connect the processor 110 to the camera 193, the display 194, the wireless communication module 160, the audio module 170, the sensor module 180, and the like. The GPIO interface may alternatively be configured as the I2C interface, the I2S interface, the UART interface, the MIPI interface, or the like.

The USB interface 130 is an interface conforming to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device, or may be configured to connect to a headset to play audio by using the headset. The interface may alternatively be configured to connect to another electronic device, such as an AR device.

It may be understood that the interface connection relationship between the modules shown in this embodiment of the present invention is merely an example, and does not constitute a limitation on the structure of the electronic device 100. In some other embodiments of this application, the electronic device 100 may alternatively use an interface connection manner different from that in the foregoing embodiment, or a combination of a plurality of interface connection manners.

A wireless communication function of the electronic device may be implemented by using the antenna 1, the antenna 2, the mobile communication module 150, the wireless communication module 160, the modem processor, the baseband processor, and the like. The antenna 1 and the antenna 2 are configured to transmit and receive electromagnetic wave signals. Each antenna in the electronic device may be configured to cover one or more communication bands. Different antennas may be reused to improve antenna utilization. For example, the antenna 1 may be reused as a diversity antenna of a wireless local area network. In some other embodiments, the antenna may be used in combination with a tuning switch.

The mobile communication module 150 may provide a solution for wireless communication, including 2G/3G/4G/5G and the like, that is applied to the electronic device. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and send a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The wireless communication module 160 may provide a solution for wireless communication that is applied to the electronic device and that includes a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more components that integrate at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave for radiation through the antenna 2.

In some embodiments, in the electronic device, the antenna 1 is coupled to the mobile communication module 150, and the antenna 2 is coupled to the wireless communication module 160, so that the electronic device can communicate with a network and another device according to a wireless communication technology.

The display 194 is configured to display a display interface of an application and the like. The display 194 includes a display panel. In some embodiments, the electronic device may include one or N displays 194, where N is a positive integer greater than 1.

The electronic device 100 may implement a photographing function by using the ISP, the camera 193, the video codec, the GPU, the display 194, the application processor, and the like. The ISP is configured to process data fed back by the camera 193.

The internal memory 121 may be configured to store computer executable program code, where the executable program code includes instructions. The processor 110 performs various function applications and data processing of the electronic device by running the instructions stored in the internal memory 121. The internal memory 121 may include a program storage area and a data storage area. The program storage area may store an operating system, software code of at least one application, and the like. The data storage area may store data (for example, an image or a video) generated in a process of using the electronic device, and the like. In addition, the internal memory 121 may include a high-speed random access memory, and may further include a non-volatile memory, such as at least one magnetic disk storage component, a flash memory component, and a universal flash storage.

The interface 120 for external memory may be configured to connect to an external memory card, such as a micro SD card, to extend a storage capability of the electronic device. The external memory card communicates with the processor 110 through the interface 120 for external memory, to implement a data storage function. For example, files such as pictures or videos are stored in the external memory card.

The electronic device may implement an audio function, such as music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode audio signals. In some embodiments, the audio module 170 may be disposed in the processor 110, or some functional modules of the audio module 170 may be disposed in the processor 110.

The speaker 170A, also referred to as a "loudspeaker", is configured to convert an audio electrical signal into a sound signal. The electronic device 100 may be used in a loudspeaker scenario, for example, listening to music or answering a hands-free call by using one or more speakers 170A.

The receiver 170B, also referred to as an "earpiece", is configured to convert an audio electrical signal into a sound signal, and there may be one or more receivers 170B. When a call is answered or a voice message is listened to by using the electronic device 100, the receiver 170B may be put close to a human ear to listen to a voice.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and may convert the pressure signal into an electrical signal. In some embodiments, the pressure sensor 180A may be disposed on the display 194.

The gyro sensor 180B may be configured to determine a motion gesture of the electronic device. In some embodiments, angular velocities of the electronic device around the three axes (that is, the x-axis, the y-axis, and the z-axis) may be determined by using the gyro sensor 180B. The gyro sensor 180B may be used for image stabilization during photographing.

The barometric pressure sensor 180C is configured to measure barometric pressure. In some embodiments, the electronic device calculates an altitude based on a barometric pressure value measured by the barometric pressure sensor 180C, to assist in positioning and navigation.

The magnetic sensor 180D includes a Hall sensor. The electronic device may detect opening and closing of a flip cover by using the magnetic sensor 180D.

The acceleration sensor 180E may detect values of acceleration of the electronic device in all directions (usually on three axes). When the electronic device is static, magnitude and a direction of gravity may be detected.

The distance sensor 180F is configured to measure a distance. The electronic device may measure a distance through infrared or laser.

The optical proximity sensor 180G may include, for example, a light-emitting diode (LED) and a light detector such as a photodiode. The light-emitting diode may be an infrared light-emitting diode. The electronic device emits infrared light by using the light-emitting diode. The electronic device detects infrared reflected light from a nearby object by using the photodiode. When sufficient reflected light is detected, the electronic device may determine that there is an object near the electronic device. When insufficient reflected light is detected, the electronic device may determine that there is no object near the electronic device.

The ambient light sensor 180L is configured to sense ambient light brightness. The electronic device may adaptively adjust brightness of the display 194 based on the sensed ambient light brightness.

The fingerprint sensor 180H is configured to collect a fingerprint.

The temperature sensor 180J is configured to detect a temperature.

The touch sensor 180K is also referred to as a "touch panel". The touch sensor 180K may be disposed on the display 194. The touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of a touch event.

The bone conduction sensor 180M may obtain a vibration signal. In some embodiments, the bone conduction sensor 180M may obtain a vibration signal of a vibration bone of a human vocal cord part.

The button 190 includes a power button, a volume button, and the like. The button 190 may be a mechanical button, or may be a touch button. The electronic device may receive button input, and generate button signal input related to user settings and function control of the electronic device. The motor 191 may generate a vibration prompt. The motor 191 may be used for an incoming call vibration prompt, or may be used for touch vibration feedback. The indicator 192 may be an indicator light, and may indicate a charging status or a power change, or may indicate a message, a missed call, a notification, or the like. The SIM card interface 195 is configured to connect to a SIM card. The SIM card may be inserted into the SIM card interface 195 or pulled out of the SIM card interface 195, to implement contact with or separation from the electronic device.

It may be understood that the components shown in FIG. 13 do not constitute a specific limitation on the electronic device. The electronic device in embodiments of the present invention may include more or fewer components than those in FIG. 13. In addition, a combination/connection relationship between the components in FIG. 13 may also be adjusted and modified.

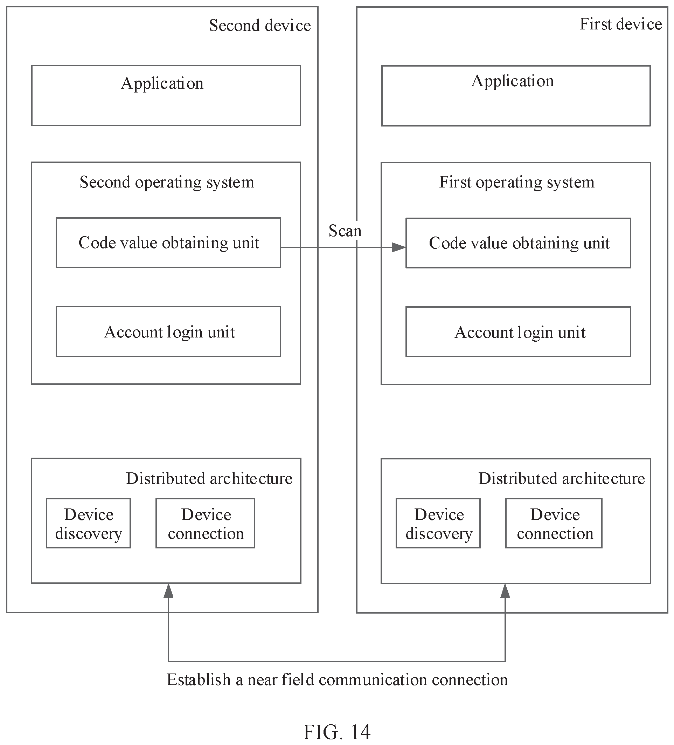

FIG. 14 is another diagram of a communication system according to an embodiment of this application. As shown in FIG. 14, the communication system includes a first device and a second device. Optionally, although not shown in FIG. 14, the communication system may further include a cloud side. In FIG. 14, a left half part is a structure of the second device, and a right half part is a structure of the first device. The second device includes various applications and a second operating system. The second operating system may include a code value obtaining unit and an account login unit. The second device may further include a distributed architecture. The distributed architecture includes a device discovery module and a device connection module. It should be noted that, in FIG. 14, that the distributed architecture is independent of the second operating system is used as an example. Optionally, the distributed architecture may be alternatively built in the second operating system. The first device includes various applications and a first operating system. The first operating system may include a code value obtaining unit and an account login unit. The first device may further include a distributed architecture. The distributed architecture includes a device discovery module and a device connection module. It should be noted that, in FIG. 14, that the distributed architecture is independent of the first operating system is used as an example. Optionally, the distributed architecture may be alternatively built in the first operating system.

The following uses FIG. 14 as an example to describe an account login method provided in an embodiment of this application.

The device discovery module in the distributed architecture of the second device can discover a surrounding device. Therefore, when the first device approaches the second device, the device discovery module in the second device may discover the first device. Similarly, the device discovery module in the distributed architecture of the first device can also discover a surrounding device. Therefore, when the second device approaches the first device, the device discovery module in the first device may also discover the second device. In other words, the first device and the second device may discover each other.

Then, the code value obtaining unit in the second device obtains a second code value. The second operating system generates a first graphic based on the second code value, to establish a near field communication connection, and displays the first graphic. The second device may trigger the first device to launch a code scanning interface. For example, the second device broadcasts a signal by using the distributed architecture, and the signal indicates a receiver to launch a code scanning interface. After receiving the signal, the first device launches the code scanning interface.

Then, the first device scans, by using the code scanning interface, the first graphic displayed by the second device, to establish the near field communication connection by using the connection module in the distributed architecture. The account login unit in the first device may assist, based on the near field communication connection, the second device in logging in to a first account. The account login unit in the first device may assist, by using three solutions, the second device in logging in to the first account. The three solutions are the first solution, the second solution, and the third solution described above. For the three solutions, refer to the foregoing descriptions. Details are not described herein again.

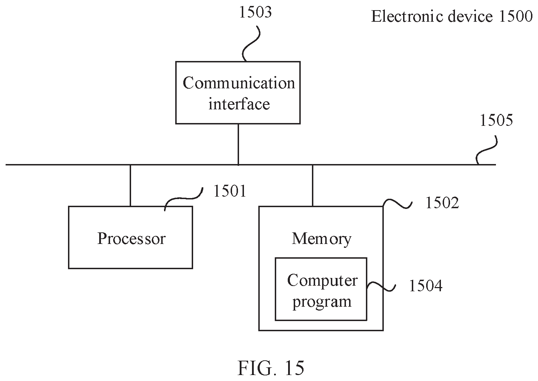

FIG. 15 is a diagram of another structure of an electronic device according to an embodiment of this application. An electronic device 1500 may be the foregoing first device, second device, or cloud side. As shown in FIG. 15, the electronic device 1500 may include one or more processors 1501, one or more memories 1502, a communication interface 1503, and one or more computer programs 1504. The foregoing components may be connected through one or more communication buses 1505. The one or more computer programs 1504 are stored in the memory 1502 and are configured to be executed by the one or more processors 1501. The one or more computer programs 1504 include instructions. For example, when the electronic device 1500 is the foregoing first device, the instructions may be used to perform related steps of the first device in any one of the foregoing embodiments corresponding to FIG. 1 to FIG. 14. For example, when the electronic device 1500 is the foregoing second device, the instructions may be used to perform related steps of the second device in any one of the foregoing embodiments corresponding to FIG. 1 to FIG. 14. For example, when the electronic device 1500 is the foregoing cloud side, the instructions may be used to perform related steps on the cloud side in any one of the foregoing embodiments corresponding to FIG. 1 to FIG. 14. The communication interface 1503 is configured to implement communication between the electronic device 1500 and another device. For example, the communication interface may be a transceiver.

In the foregoing embodiments provided in this application, the method provided in embodiments of this application is described from a perspective of an electronic device (for example, a mobile phone or a cloud side) serving as an execution body. To implement functions in the foregoing method provided in embodiments of this application, the terminal device may include a hardware structure and/or a software module, and the foregoing functions are implemented in a form of a hardware structure, a software module, or a combination of a hardware structure and a software module. Whether a function in the foregoing functions is performed in a manner of a hardware structure, a software module, or a hardware structure and a software module depends on specific applications and design constraints of the technical solutions.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semi-conductor medium (for example, a solid-state disk Solid State Disk (SSD)), or the like. In a case in which no conflict occurs, the solutions in the foregoing embodiments may be combined for use.

Based on the foregoing embodiments, this application further provides a computer program product including instructions. When the computer program product runs on a computer, the computer is enabled to perform the methods described in embodiments of this application.

Based on the foregoing embodiments, this application further provides a computer-readable storage medium. The computer-readable storage medium stores a computer program. When the computer program is executed by a computer, the computer is enabled to perform the methods described in embodiments of this application.

Based on the foregoing embodiments, this application further provides a chip. The chip is configured to read a computer program stored in a memory, to implement the methods described in embodiments of this application.

Based on the foregoing embodiments, this application provides a chip system. The chip system includes a processor, configured to support a computer apparatus in implementing the methods described in embodiments of this application. In a possible design, the chip system further includes a memory, and the memory is configured to store a program and data that are necessary for the computer apparatus. The chip system may include a chip, or may include a chip and another discrete component.

Based on the foregoing embodiments, this application provides a communication system, including a first device and a second device. Optionally, the communication system may further include a server (that is, a cloud side). For method steps performed by the first device, the second device, and the server, refer to the foregoing descriptions.

A person skilled in the art should understand that embodiments of this application may be provided as a method, a system, or a computer program product. Therefore, this application may be in a form of a hardware-only embodiment, a software-only embodiment, or an embodiment combining software and hardware aspects. In addition, this application may be in a form of a computer program product implemented on one or more computer-usable storage media (including but not limited to a magnetic disk memory, a CD-ROM, an optical memory, and the like) including computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computerimplemented processing. Therefore, the instructions executed on the computer or the another programmable device provide steps for implementing a specific function in one or more processes in the flowcharts and/or in one or more blocks in the block diagrams.

It is clear that a person skilled in the art may make various modifications and variations to this application without departing from the scope of this application. Thus, this application is intended to cover these modifications and variations, provided that they fall within the scope of the claims of this application and their equivalent technologies.

## Claims

1. An account login method, applied to a communication system, wherein the communication system comprises a first device and a second device, an operating system of the first device currently logs in to a first account, and the method comprises:
displaying, by the second device, a first interface, wherein the first interface is an interface for account login;
displaying, by the first device, a code scanning interface in response to detecting that the second device approaches;
displaying, by the second device, a first graphic in response to detecting that the first device approaches, wherein the first graphic is used to establish near field communication;
scanning, by the first device, the first graphic by using the code scanning interface, to establish a near field communication connection to the second device;
sending, by the first device, first data to the second device through the near field communication connection, wherein the first data comprises a first login credential of the first device; and
logging, by the second device, in to the first account based on the first login credential.

2. The method according to claim 1, wherein the first interface comprises any one of the following:
the first interface is an interface for account login in a setting application of the second device;
the first interface is an interface of the second device in an OOBE process; or
the first interface is an interface used to migrate data from another device.

3. The method according to claim 1 or 2, wherein the first device is currently in an offline state.

4. The method according to any one of claims 1 to 3, wherein before displaying, by the first device, the code scanning interface in response to detecting that the second device approaches, the method further comprises: displaying, by the first device, a lock screen interface, a black screen, a home screen, a leftmost screen, or an application interface.

5. The method according to any one of claims 1 to 4, wherein
detecting that the second device approaches comprises: detecting that a distance between the first device and the second device is less than a first distance, and/or receiving a request signal that is broadcast by the second device, wherein the request signal is a short-range communication signal; and
detecting that the first device approaches comprises: detecting that the distance between the first device and the second device is less than a second distance, and/or receiving a consent signal returned by the first device.

6. The method according to any one of claims 1 to 5, wherein displaying, by the first device, the code scanning interface in response to detecting that the second device approaches comprises:
displaying, by the first device, prompt information in response to detecting that the second device approaches, wherein the prompt information is used to prompt whether to allow the second device to log in to the first account; and
displaying, by the first device, the code scanning interface when receiving a consent operation.

7. The method according to claim 6, wherein the method further comprises: sending, by the first device, a consent instruction to the second device, wherein the consent instruction indicates that the second device is allowed to log in to the first account; and displaying, by the second device, the first graphic in response to detecting that the first device approaches comprises: displaying, by the second device, the first graphic when receiving the consent instruction.

8. The method according to any one of claims 1 to 7, wherein the first login credential is a token token.

9. The method according to any one of claims 1 to 8, wherein the first data does not comprise a login password of the first account, and/or the first data is encrypted by using a first key, wherein the first key is a key agreed on by the first device and a server corresponding to the first account.

10. The method according to any one of claims 1 to 9, wherein displaying, by the first device, the code scanning interface in response to detecting that the second device approaches comprises:
displaying, by the first device, N accounts of the first device in response to detecting that the second device approaches, wherein N is a positive integer; and
displaying, by the first device, the code scanning interface when receiving an operation used to select the first account.

11. The method according to claim 1, wherein logging, by the second device, in to the first account based on the first login credential comprises:
sending, by the second device, a login request to a server corresponding to the first account, wherein the login request is used to request to log in to the first account, and the login request comprises the first login credential; and
receiving, by the second device, a second login credential sent by the server.

12. The method according to claim 11, wherein before receiving, by the second device, the second login credential sent by the server, the method further comprises:
receiving, by the second device, prompt information sent by the server, wherein the prompt information is used to prompt that the first device needs to connect to a network for authentication;
sending, by the second device, the prompt information to the first device through the near field communication connection;
outputting, by the first device, the prompt information; and
sending, by the first device, authentication information to the server after connecting to the network, wherein the authentication information indicates that the second device is allowed to log in to the first account.

13. The method according to any one of claims 2 to 12, wherein when the first interface is an interface used to migrate data from another device, the method further comprises:
sending, by the first device, second data to the second device through the near field communication connection, wherein the second data comprises user data stored in the first device; and
storing, by the second device, the second data.

14. An account login method, applied to a first device, wherein an operating system of the first device currently logs in to a first account, and the method comprises:
displaying, by the first device, a code scanning interface in response to detecting that a second device approaches;
scanning, by the first device, a first graphic on the second device by using the code scanning interface, to establish a near field communication connection to the second device; and
sending, by the first device, first data to the second device through the near field communication connection, wherein the first data comprises a first login credential of the first device, and the first login credential is used by the second device to log in to the first account.

15. The method according to claim 14, wherein the first device is currently in an offline state.

16. The method according to claim 14 or 15, wherein before displaying, by the first device, the code scanning interface in response to detecting that the second device approaches, the method further comprises: displaying, by the first device, a lock screen interface, a black screen, a home screen, a leftmost screen, or an application interface.

17. The method according to any one of claims 14 to 16, wherein displaying, by the first device, the code scanning interface in response to detecting that the second device approaches comprises:
displaying, by the first device, prompt information in response to detecting that the second device approaches, wherein the prompt information is used to prompt whether to allow the second device to log in to the first account; and
displaying, by the first device, the code scanning interface when receiving a consent operation.

18. The method according to any one of claims 14 to 17, wherein the first login credential is a token token.

19. The method according to any one of claims 14 to 18, wherein the first data does not comprise a login password of the first account, and/or the first data is encrypted by using a first key, wherein the first key is a key agreed on by the first device and a server corresponding to the first account.

20. The method according to any one of claims 14 to 19, wherein displaying, by the first device, the code scanning interface in response to detecting that the second device approaches comprises:
displaying, by the first device, N accounts of the first device in response to detecting that the second device approaches, wherein N is a positive integer; and
displaying, by the first device, the code scanning interface when receiving an operation used to select the first account.

21. The method according to any one of claims 14 to 20, wherein the method further comprises:
receiving, by the first device through the near field communication connection, prompt information sent by the second device, wherein the prompt information is used to prompt that the first device needs to connect to a network for authentication;
outputting, by the first device, the prompt information; and
sending, by the first device, authentication information to the server corresponding to the first account after connecting to the network, wherein the authentication information indicates that the second device is allowed to log in to the first account.

22. The method according to any one of claims 15 to 21, wherein when the first interface is an interface used to migrate data from another device, the method further comprises:
sending, by the first device, second data to the second device through the near field communication connection, wherein the second data comprises user data stored in the first device.

23. An account login method, applied to a second device, wherein the method comprises:
displaying, by the second device, a first interface, wherein the first interface is an interface for account login;
displaying, by the second device, a first graphic in response to detecting that a first device approaches, wherein the first graphic is used to establish near field communication;
establishing, by the second device, a near field communication connection to the first device in response to scanning the first graphic by the first device;
receiving, by the second device through the near field communication connection, first data sent by the first device, wherein the first data comprises a first login credential of the first device; and
logging, by the second device, in to a first account based on the first login credential.

24. The method according to claim 23, wherein the first interface comprises any one of the following:
the first interface is an interface for account login in a setting application of the second device;
the first interface is an interface of the second device in an OOBE process; or
the first interface is an interface used to migrate data from another device.

25. The method according to claim 23, wherein before displaying, by the second device, the first graphic in response to detecting that the first device approaches, the method further comprises: displaying, by the second device, the first graphic when receiving a consent instruction sent by the first device, wherein the consent instruction indicates that the second device is allowed to log in to the first account.

26. The method according to any one of claims 23 to 25, wherein the first login credential is a token token.

27. The method according to any one of claims 23 to 26, wherein the first data does not comprise a login password of the first account, and/or the first data is encrypted by using a first key, wherein the first key is a key agreed on by the first device and a server corresponding to the first account.

28. The method according to any one of claims 23 to 27, wherein logging, by the second device, in to the first account based on the first login credential comprises:
sending, by the second device, a login request to the server corresponding to the first account, wherein the login request is used to request to log in to the first account, and the login request comprises the first login credential; and
receiving, by the second device, a second login credential sent by the server.

29. The method according to claim 28, wherein before receiving, by the second device, the second login credential sent by the server, the method further comprises:
receiving, by the second device, prompt information sent by the server, wherein the prompt information is used to prompt that the first device needs to connect to a network for authentication; and
sending, by the second device, the prompt information to the first device through the near field communication connection.

30. The method according to any one of claims 25 to 29, wherein when the first interface is an interface used to migrate data from another device, the method further comprises:
receiving, by the second device through the near field communication connection, second data sent by the first device, wherein the second data comprises user data stored in the first device; and
storing, by the second device, the second data.

31. An account login method, applied to a server, wherein the method comprises:
receiving a login request sent by a second device, wherein the login request is used to request to log in to a first account, and the login request comprises a first login credential of a first device; and
sending a second login credential to the second device.

32. The method according to claim 31, wherein the login request comprises a first code value, and before sending the second login credential to the second device, the method further comprises:
determining that the first code value is a code value that has been sent by the server to the second device, and the first code value is within a validity period.

33. The method according to claim 31 or 32, wherein before sending the second login credential to the second device, the method further comprises:
sending prompt information to the second device, wherein the prompt information is used to prompt that the first device needs to connect to a network for authentication; and
receiving authentication information sent by the first device, wherein the authentication information indicates that the second device is allowed to log in to the first account.

34. A communication system, comprising:
a first device, configured to perform the method according to any one of claims 14 to 22; and
a second device, configured to perform the method according to any one of claims 23 to 30.

35. An electronic device, comprising a memory, a processor, and a computer program that is stored in the memory and that can be run on the processor, wherein when executing the computer program, the processor implements the method according to any one of claims 14 to 22, or the method according to any one of claims 23 to 30, or the method according to any one of claims 31 to 33.

36. A chip system, wherein the chip system comprises a processing circuit and a storage medium, the storage medium stores instructions, and when the instructions are executed by the processing circuit, the method according to any one of claims 1 to 33 is implemented.

37. A computer-readable storage medium, wherein the computer-readable storage medium stores a computer program, and when the computer program is executed by a processor, the method according to any one of claims 1 to 33 is implemented.

38. A computer program product, wherein the computer program product comprises a computer program, and when the computer program is run on a computer, the computer is enabled to perform the method according to any one of claims 1 to 33.
